# EUROPÄISCHE PATENTANMELDUNG

(11) **EP 4 644 105 A1**
(43) Veröffentlichungstag der Anmeldung: **05.11.2025**
(21) Anmeldenummer: 24223142.1
(22) Anmeldetag: 24.12.2024
(51) Int. Cl.: B29D 30/68, B29D 30/54, B26D 3/00, B26D 5/02, B26D 5/04, B26D 5/08, B26D 7/01, B26D 7/02

(54) **REIFENSCHNEIDEMASCHINE UND SPANNSYSTEM FÜR EINEN REIFEN**

(30) Priorität: 30.04.2024 DE 102024112146
(71) Anmelder: Bear-Machines GmbH, 48619 Heek (DE)
(72) Erfinder: Berendsen, Mark, 48683 Ahaus-Wessum (DE)
(74) Vertreter: Beckord & Niedlich Patentanwälte PartG mbB

(57) **Zusammenfassung**

Es wird eine Reifenschneidemaschine (1) zum Schneiden eines Profils (P) mit zumindest einer Rille (R₁, R₂, R₃, R₄, R₅, R₆, R₇), insbesondere einer Querrille (R₆, R₇), in einer Lauffläche (T) eines Reifens (12) beschrieben. Die Reifenschneidemaschine (1) hat eine Reifenaufnahme (5) zum Halten eines Reifens (12) auf einer Antriebsachse (A), welche koaxial zu einer Rotationsachse (A) des Reifens (12) verläuft, und Antriebsmittel, um einen von der Reifenaufnahme (5) aufgenommenen Reifen (12) während eines Schneidvorgangs um die Rotationsachse (A) zu rotieren. Die Reifenschneidemaschine (1) hat weiterhin eine Steuervorrichtung (24) zur Steuerung des Schneidvorgangs und eine Schneidvorrichtung (7), die einen Schneidkopf (20) mit einem Messer (21) und eine Abstützvorrichtung (22) aufweist, um den Schneidkopf (20) während des Schneidvorgangs an der Lauffläche (T) abzustützen zum Schneiden des Profils (P) durch das Messer (21). Die Reifenschneidemaschine (1) ist so ausgebildet, dass das Messer (21) relativ zur Abstützvorrichtung (22) in einem automatisierten Prozess linear bewegbar ist. Die Erfindung betrifft weiterhin ein Spannsystem (80) für einen Reifen (12), insbesondere für eine solche Reifenschneidemaschine (1).

## Beschreibung

Die Erfindung betrifft eine Reifenschneidemaschine zum Schneiden eines Profils mit zumindest einer Rille in einer Lauffläche eines Reifens. Die Erfindung betrifft weiterhin ein Spannsystem für einen Reifen und ein Verfahren zum Schneiden eines Profils mit zumindest einer Rille in einer Lauffläche eines Reifens.

Ein Profil in einer Lauffläche eines neuen Reifens kann aus Stabilitätsgründen nicht beliebig tief ausgebildet werden. Deshalb muss ein Reifen, sobald das Profil bis zur gesetzlich vorgeschriebenen Minimalprofiltiefe abgefahren ist, zwangsläufig erneuert werden. Um die Nutzung eines Reifens zu verlängern, gibt es Schneidpistolen, die von Hand geführt werden und ein Messer zum manuellen Nachschneiden des Profils in der Lauffläche haben. Hinter dieser Idee steckte der Gedanke, dass Reifen nach Erreichen einer Minimalprofiltiefe nicht direkt entsorgt werden müssen. Solche Schneidpistolen werden von einem Nutzer per Hand unter Ausübung eines gewissen Drucks entlang einer nachzuschneidenden Rille geführt. Dies hat mehrere Nachteile: So ist diese Methodik verschleißanfällig, da das Messer relativ dünn sein muss, damit es weniger Widerstand bietet und der Nutzer nicht zu viel Kraft aufwenden muss. Bei einer unsauberen Führung kann daher das Messer schnell abbrechen. Darüber hinaus ist das Schneiden per Hand auf Dauer äußerst anstrengend, zeitaufwändig, monoton und dementsprechend ermüdend. Deshalb braucht ein Nutzer einer Schneidpistole relativ schnell Pausen zur Erholung, da sonst die Qualität des nachgeschnittenen Profils leiden kann. Das hat zur Folge, dass die Bearbeitung eines Reifens lange dauert, wobei das Nachschneiden aus wirtschaftlicher Sicht meist unrentabel ist. Deshalb wird derzeit der überwiegende Teil an abgefahrenen Reifen ohne Nachschneiden entsorgt und stattdessen werden neue Reifen verwendet. Angesichts einer steigenden Nachfrage an Reifen und einer Verteuerung und Verknappung der vorhandenen Ressourcen, ist es wünschenswert, die Nutzungsdauer von Reifen durch Nachschneiden zu verlängern.

Betrachtet man den jährlichen anfallenden Abfall von über 600.000 Tonnen Altreifen in Deutschland, so ist das Nachschneiden eines Profils von Nutzfahrzeugen aus ökologischer Sicht natürlich sinnvoll. Jedoch ist aufgrund der stetig steigenden Löhne, dem Fachkräftemangel und dem doch sehr zeitaufwendigen Hand-Nachschneidverfahren das Nachschneiden wirtschaftlich betrachtet zunehmend unrentabel geworden. Grundvoraussetzung für jegliches Nachschneiden ist die Aufschrift "RE-GROOVABLE" auf dem Reifen, die besagt, dass das Profil des Reifens nachschneidbar ist. Alleine schon aus Konkurrenzgründen stellen heutzutage die meisten Nutzfahrzeugreifenhersteller größtenteils nur noch Reifen mit diesem Label her.

Erste Ansätze, um den Prozess des Nachschneidens zu erleichtern und zumindest teilweise zu automatisieren und damit effektiver zu machen, gibt es bereits. In EP 0054 389 A2 und EP 0022 845 B1 sind Verfahren und Vorrichtungen zur Profilierung von Reifen und in DE 10 2006 055 508 A1 ist eine automatisierte Reifenprofil-Nachschneidevorrichtung beschrieben. Ein Problem dabei ist, dass die Lauffläche eines Reifens in der Regel alles andere als gleichmäßig abgefahren ist. Mit den o.g. bekannten Vorrichtungen lässt sich die Schnitttiefe bezüglich einer ungleichmäßigen Reifenwölbung, z.B. parallel zur Rotationsachse des Reifens, d.h. zwischen den beiden Schultern des Reifens, der Lauffläche abgefahrener Reifen, was in der Regel der Fall ist, wenn überhaupt, nur sehr aufwändig korrigieren.

Aus DE 10 2015 002 663 B4 ist eine Vorrichtung zum Schneiden von Profilen in Fahrzeugreifen bekannt, bei der die Reifen am Fahrzeug bleiben. So müssen dort zwar die Reifen nicht erst demontiert und später wieder montiert werden. Dadurch ist allerdings nur sehr schwer eine saubere Kontrolle der Lauffläche der Reifen möglich, bei der zuverlässig sämtliche Verunreinigungen aus dem Profil entfernt werden können. Dies führt zu mehr Messerdefekten, wobei nicht klar ist, wie die Messer bei einem Defekt dann überhaupt getauscht werden sollen, während das Fahrzeug, normalerweise ein LKW, auf der Vorrichtung steht.

Aus EP 0 190 914 A2 sowie aus EP 0 372 090 A1 sind Vorrichtungen zum Einschneiden von Reifen bekannt, bei denen der Reifen demontiert nachgeschnitten wird. Zwar ist es hier verhältnismäßig einfach den Reifen auf Verunreinigungen im Profil zu überprüfen, jedoch muss das Messer, um die Schnitttiefe des Messers auch bei ungleichmäßiger Reifenwölbung konstant zu halten, kompliziert elektronisch gesteuert bzw. geregelt werden. Dies hat sich u.a. aufgrund der Ungenauigkeit der Steuerung und des Rechenaufwands als sehr praxisuntauglich herausgestellt, da die Reifenwölbung der Lauffläche von Reifen zu Reifen individuell sehr stark abweichen kann.

Das Profil eines Reifens umfasst üblicherweise eine Kombination aus Längsrillen, die im Wesentlichen längs der bestimmungsgemäßen Rotationsrichtung des Reifens verlaufen, und Querrillen, die quer zu den Längsrillen angeordnet sind. Querrillen können in unterschiedlichen Bereichen der Lauffläche des Reifens angeordnet sein, z.B. mittig ausgehend von einer Längsrille oder zwischen zwei Längsrillen. Häufig sind Querrillen am Rand eines Reifens angeordnet, z.B. im Bereich der (Außen-)Schulter des Reifens. Solche Querrillen im Bereich der Reifenschulter werden allgemein, und auch im Kontext der Erfindung, als Blocköffnungen bezeichnet. Bekannte Vorrichtungen zum Schneiden von Profilen sind üblicherweise nur dazu ausgebildet, um Längsrillen zu schneiden. Deshalb wäre es wünschenswert, in einem möglichst automatisierten Prozess, insbesondere mit möglichst wenig händischem Zutun, sowohl Längsrillen als auch Querrillen in einer Lauffläche eines Reifens zu schneiden. Weiterhin ist es wünschenswert, den Schneidprozess zu beschleunigen und damit effizienter zu gestalten. Weiterhin ist es wünschenswert, den Schneidprozess auch in Reifen ohne Felge, also in felgenlosen Reifen, möglichst effizient durchführen zu können.

Es ist daher eine Aufgabe der vorliegenden Erfindung, eine Reifenschneidemaschine, ein Spannsystem für einen Reifen und ein Verfahren zum Schneiden eines Profils bereitzustellen, mit dem die zuvor genannten Nachteile reduziert und bevorzugt vermieden werden.

Diese Aufgabe wird durch eine Reifenschneidemaschine nach Patentanspruch 1, ein Spannsystem für einen Reifen nach Patentanspruch 10 und ein Verfahren zum Schneiden eines Profils nach Patentanspruch 15 gelöst.

Die Erfindung betrifft eine Reifenschneidemaschine zum Schneiden eines Profils mit zumindest einer Rille, insbesondere einer Querrille und/oder einer Längsrille, in einer Lauffläche eines bestimmungsgemäß in oder an der Reifenschneidemaschine montierten Reifens. Der Reifen ist während eines Schneidvorgangs von einem Fahrzeug demontiert. Die Reifenschneidemaschine ist dazu ausgebildet, um eine Querrille und/oder einer Längsrille, d.h. einen Teil eines Profils, neu bzw. erstmalig in die Lauffläche zu schneiden. Weiterhin ist die Reifenschneidemaschine zum Nachschneiden eines bereits vorhandenen Profils in der Lauffläche ausgebildet. Entsprechend kann die Reifenschneidemaschine auch als Reifennachschneidemaschine bezeichnet werden. Soweit die Erfindung anhand einer Reifenschneidemaschine beschrieben wird, können diese Weiterbildungen auch bei einer Reifennachschneidemaschine zum Nachschneiden eines Profils Anwendung finden.

Die Reifenschneidemaschine umfasst eine Reifenaufnahme zum drehbaren Halten eines Reifens auf einer Antriebsachse der Reifenschneidemaschine, welche koaxial zu einer Rotationsachse des montierten Reifens verläuft. Die Rotationsachse des Reifens entspricht der üblichen Rotationsachse im Betrieb an einem Fahrzeug. Der Reifen kann auf einer Antriebswelle der Reifenschneidemaschine drehbar gehalten werden. Die Antriebswelle kann die Antriebsachse der Reifenschneidemaschine bilden. Vorzugsweise kann es sich bei dem drehbaren Halten des Reifens auf der (gedachten bzw. virtuellen) Antriebsachse um ein Aufspannen oder Einspannen des Reifens an der Antriebswelle handeln. Der Reifen kann vorzugsweise ein LKW-Reifen oder Busreifen sein. Aktuell ist es z.B. in Deutschland nicht erlaubt, PKW-Reifen nachzuschneiden. Sollte sich dies zukünftig, z.B. aufgrund von Ressourcenknappheit, ändern oder sofern es in anderen Ländern erlaubt ist, können mittels der erfindungsgemäßen Reifenschneidemaschine auch Profile von PKW-Reifen geschnitten werden.

In einer bevorzugten Ausführungsform ist die Reifenschneidemaschine halbautomatisch ausgebildet, d.h. manche Prozesse werden durch einen Bediener gesteuert und andere Prozesse laufen automatisch ab. Zum Beispiel kann vorzugsweise die Maschine so durch einen Bediener gesteuert werden, dass eine zu schneidende, ggf. nachzuschneidende, Rille angefahren und ein Messer der Reifenschneidemaschine passend zum Reifen vorpositioniert wird. Der Eintauchvorgang des Messers in den Reifen, z.B. in eine Rille, sowie die Nachführung des Messers beim Schneiden erfolgt dann automatisch. Um dabei die Arbeitssicherheit zu wahren, ist die Reifenschneidemaschine vorzugsweise so konzipiert, dass sie bei Nichtbetätigung zweier, mit jeweils einer Hand zu drückender oder zu betätigender Zustimmtaster den automatischen Betrieb stoppt.

Grundsätzlich wäre aber auch eine vollautomatische Reifenschneidemaschine denkbar. Hierfür könnte die Reifenschneidemaschine z.B. mit einem Roboterarm ausgestattet sein, welcher entsprechend beweglich ist und über einen Schneidkopf der Reifenschneidemaschine sowie eine Abstützvorrichtung am Ende des Roboterarms verfügt, um das Profil eines Reifens mit gleichbleibender Profiltiefe, z.B. entlang beliebig vorgebbarer weitestgehend längsverlaufender und/oder querverlaufender Rillen, nachzuschneiden. Für eine Spurrillenkorrektur während des Schneidens könnte zusätzlich dafür benötigte weitere Sensorik verbaut sein. Aus Sicherheitsgründen würde die Reifenschneidemaschine dann eingezäunt bzw. eingehaust, d.h. mit einem entsprechenden Gehäuse versehen, so dass ein Arbeitsbereich des Roboterarms nicht versehentlich betreten werden kann.

Die Reifenschneidemaschine umfasst Antriebsmittel, um einen von der Reifenaufnahme aufgenommenen Reifen während eines Schneidvorgangs um die Rotationsachse zu rotieren. Vorzugsweise können die Antriebsmittel dazu ausgebildet sein, um den Reifen in einer gewünschten, idealen, möglicherweise je nach Art und Form der Rille abgestimmten Rotationsgeschwindigkeit um seine Rotationsachse zu rotieren bzw. zu drehen. Die Antriebsmittel können hierzu, wie erwähnt, in der Regel eine Antriebswelle zum Rotieren des Reifens um dessen Rotationsachse aufweisen.

Die Reifenschneidemaschine umfasst eine Steuervorrichtung zur Steuerung des Schneidvorgangs. Die Steuervorrichtung ist dazu ausgebildet, um die Reifenschneidemaschine, insbesondere entsprechend eines vorab oder in Echtzeit getätigten Steuerbefehls eines Nutzers, so zu steuern bzw. anzusteuern, dass eine bestimmte Längsrille und/oder Querrille in die Lauffläche eines Reifens geschnitten wird. Weiterhin kann die Steuervorrichtung dazu ausgebildet sein, um die Reifenschneidemaschine, insbesondere entsprechend eines vorab oder in Echtzeit getätigten Steuerbefehls eines Nutzers, so zu steuern, dass das Profil in der Lauffläche des Reifens entlang einer aktuell ausgewählten Rille nachgeschnitten wird. Dabei kann die Steuervorrichtung die Reifenschneidemaschine so steuern, dass sie die Rille z.B. entsprechend einer zuvor ermittelten oder in einer Speichereinheit gespeicherten Profilform und/oder Profiltiefe, insbesondere passend für den betreffenden Reifen, nachschneidet. Bei einer solchen Profilform und/oder Profiltiefe kann es sich um ein bestimmtes, programmierbares Rillenmuster handeln. Das Rillenmuster kann eine oder mehrere Längsrillen umfassen, die entlang des Reifenumfangs zumindest weitestgehend bzw. im Wesentlichen längsverlaufend sind. Dazu zählen z.B. Wellenlinien, Zick-Zack-Linie und Ähnliches. Das Rillenmuster kann alternativ, vorzugsweise zusätzlich, eine oder mehrere Querrillen umfassen, die quer zu den Längsrillen und/oder quer zur Rotationsrichtung des Reifens angeordnet sind. Es ist möglich, dass die jeweiligen Querrillen desselben Reifens unterschiedlich ausgestaltet sind. Entsprechendes kann für die Längsrillen desselben Reifens gelten.

Die Reifenschneidemaschine umfasst eine Schneidvorrichtung, welche einen Schneidkopf mit einem Messer und einer Abstützvorrichtung aufweist, um den Schneidkopf während des Schneidvorgangs an der Lauffläche des von der Reifenaufnahme aufgenommenen Reifens abzustützen zum Schneiden des Profils durch das Messer. Der Schneidkopf ist also Teil der Schneidvorrichtung, die zusätzlich weitere Komponenten umfasst. Die Abstützvorrichtung ist bevorzugt Teil des Schneidkopfs. Bevorzugt kann das Abstützen so erfolgen, dass sich das Messer in einer bestimmten Rille der Lauffläche befindet, insbesondere so, dass eine Spitze des Messers mit einer definierten Tiefe in die Lauffläche hineinragt (bezogen auf eine Oberfläche der Lauffläche). Abstützen meint hier, dass die Abstützvorrichtung, also z.B. in Form einer Abstützwalze oder eines Kontaktstücks, in der Regel mit (leichtem) Druck immer an der Lauffläche anliegt, so dass das Messer während eines Schneid- bzw. Nachschneidevorgangs immer in einer definierten, einstellbaren Tiefe in der Lauffläche des Reifens geführt bzw. gehalten wird.

Die Abstützvorrichtung bildet demnach eine direkte mechanische Messerführung, welche den Verlauf einer Laufflächenoberfläche unmittelbar, insbesondere nahezu eins zu eins, auf das Messer überträgt, ohne dass dazu das Messer extra gesteuert bzw. nachgeregelt werden muss. Das kann z.B. erforderlich sein, wenn die Oberfläche der Lauffläche entlang ihres Verlaufs ungleichmäßig ist.

Im Stand der Technik gibt es für derartige Unregelmäßigkeiten im Reifen, welche bei abgefahrenen Reifen eher die Regel als die Ausnahme sind, keine wirklich funktionierende, geschweige denn einfache Lösung. Die einzige bekannte, jedoch sehr komplexe, Möglichkeit basiert darauf, dass die Laufflächenoberfläche des Reifens vorab in einem extra Arbeitsschritt aufwändig, z.B. mittels Kamera oder Sensoren, gescannt bzw. abgetastet werden muss, so dass beim eigentlichen Nachschneidevorgang das Messer dauerhaft gemäß des gescannten Oberflächenverlaufs regelungstechnisch, z.B. mit entsprechender Steuerungssoftware, in der Schnitttiefe elektronisch geregelt bzw. gesteuert werden muss.

Vorteilhafterweise kann die Abstützvorrichtung eine oder mehrere drehbare Abstandsrollen aufweisen, die sich während des Schneidvorgangs an der Oberfläche der Lauffläche abrollen, um eine kontinuierliche Schnitttiefe durch das Messer zu gewährleisten. Diese Abstandsrollen oder Abstützwalzen können jeweils ein gleitendes Kontaktstück bzw. Gleitstück bilden. Die Abstützvorrichtung kann insbesondere so ausgebildet sein, dass sie eine ruckelfreie mechanische Führung der Schneidvorrichtung auf der Lauffläche des Reifens ermöglicht.

Der Schneidkopf kann als Messer beispielsweise eine u-förmig oder v-förmig gebogene Messerklinge mit zwei Schenkeln aufweisen, welche vorzugsweise in einer Messerklemme des Schneidkopfs befestigt sein kann. Als Messerklingen bieten sich besonders runde Profilschneidmesser (kurz Rundmesser) des Typs "R1 ", "R2", "R3", "R4", "R5" oder winklige (engl. "Curved") Profilschneidmesser (kurz Winkelmesser) des Typs "C1", "C2", "C3", "C4" oder "C5" (bzw. "W1", "W2", "W3", "W4", "W5") an oder andere Profilschneidmesser wie sie beispielsweise schon in den handbetriebenen Schneidpistolen genutzt werden können.

Die Reifenschneidemaschine ist dazu ausgebildet und/oder ist so steuerbar, dass das Messer relativ zur Abstützvorrichtung, insbesondere gegenüber den Abstandsrollen, in einem automatisierten Prozess linear bewegbar ist. Insbesondere kann mittels der Reifenschneidemaschine eine Linearbewegung des Messers in entgegengesetzte Richtungen aktiv, d.h. maschinell und nicht rein manuell, erzeugt werden. Das Messer kann in unterschiedliche Richtungen so bewegt werden, dass eine Spitze oder Front des Messers, die das Schneiden einer Rille bewirkt, in Richtung der Lauffläche vorsteht bzw. hinausragt über die Abstandsrollen und/oder so, dass die Messerspitze oder Messerfront zurücktritt gegenüber den Abstandsrollen. Im ersten Fall (ausgefahrener Zustand) kann ein bestimmter Überstand der Messerfront relativ zur Abstützvorrichtung in Richtung Reifen eingestellt und/oder erzeugt werden. Der Überstand der Messerfront gegenüber der Abstützvorrichtung entspricht der Eindringtiefe bzw. Schnitttiefe des Messers in den Reifen hinein. Im zweiten Fall (eingefahrener Zustand) haben die Abstandsrollen einen geringeren Abstand zur Lauffläche, als die Messerspitze oder Messerfront. Es wäre auch möglich, dass die Messerfront im eingefahrenen Zustand etwa auf einer Höhe mit der Abstützvorrichtung ist. Unter einem automatisierten Prozess wird im Kontext der Erfindung verstanden, dass ein bestimmter Prozess, z.B. die Relativbewegung des Messers, ohne direkte manuelle Mitwirkung eines Menschen bestimmungsgemäß durchführbar ist bzw. durchgeführt wird. Die einzelnen Verfahrensschritte, die dem jeweiligen Vorgang zu Grunde liegen, z.B. die Bewegung des Messers, und/oder die in den jeweiligen Vorgang eingebundenen Mittel, z.B. zur Bewegung des Messers, können von der Steuervorrichtung gesteuert werden. Insbesondere kann die Relativbewegung des Messers vollautomatisch durchgeführt werden.

Die erfindungsgemäße Konstruktion bringt den Vorteil mit sich, dass die Messereindringtiefe bzw. Profiltiefe des Messers in den Reifen, d.h. die Schnitttiefe in die Laufflächenoberfläche, während des Schneidvorgangs nicht mehr aufwändig elektronisch nachgeregelt werden muss. Ein Reifen kann sowohl entlang seines Umfangs als auch parallel zur Rotationsachse des Reifens unterschiedlich stark abgefahren sein. Bei bekannten Konstruktionen muss beim Nachschneiden von Längsrillen und schräg verlaufenden Rillen das Messer dauerhaft nachgeregelt werden, um Unregelmäßigkeiten, z.B. individuell gekrümmte Reifenwölbungen durch lokal stärker oder schwächer abgefahrene Stellen auf dem Reifen, auszugleichen und ein bestimmte Schnitttiefe zu erreichen. Darauf kann bei der erfindungsgemäßen Konstruktion verzichtet werden, wobei nach einmaliger Einstellung zu Beginn des Schneidvorgangs für eine Rille die, z.B. durch gleichmäßige Messungen entlang des Umfangs unter Einbeziehung von Herstellerangaben ermittelte, Tiefe bzw. Schnitttiefe durch die Abstützvorrichtung automatisch gehalten wird. Konkret wird also auch bei einem individuellen Wölbungs- bzw. Neigungsverlauf der Laufflächenoberfläche in einer Richtung zwischen den beiden seitlichen Schultern des Reifens, also parallel zur Rotationsachse des Reifens, welcher z.B. durch ungleichmäßiges Abfahren des Reifens entstanden bzw. vorhanden sein kann, das Messer automatisch passend in der gewünschten Schnitttiefe geführt. Die Steuervorrichtung muss dann die Messerposition nur noch entsprechend der vorgegebenen Kontur des Profils, genauer gesagt der jeweiligen Rille des Profils, steuern. Bevorzugt kann für jede Rille eines Profils eine Profiltiefe an mehreren Stellen gemessen und die gewünschte Schnitttiefe eingestellt werden, z.B. mittels der Steuervorrichtung, und der (Nach-)Schneidevorgang kann gestartet werden. Zudem lassen sich Nachschneidtiefen von bis zu 13 mm Tiefe erzielen, wohingegen per Hand üblicherweise nur Tiefen bis zu maximal 10 mm möglich sind.

Die erfindungsgemäße Reifenschneidemaschine stellt somit eine einfachere, funktionierende Lösung dar, das Profil von nachschneidbaren Reifen schnell, in hoher Stückzahl und mit gleichbleibender Qualität nachzuschneiden. Sie eröffnet dadurch erst die Möglichkeit, zukünftig alle oder zumindest die meisten Reifen von vorneherein nachschneidbar zu fertigen. Die beschriebenen Vorteile lassen sich sowohl beim Schneiden von Längsrillen als auch bei Querrillen erreichen.

Ein weiterer Vorteil der erfindungsgemäßen Reifenschneidemaschine ist, dass der Schneidkopf zwischen zwei Schneidvorgängen, d.h. beim Wechsel von einer Rille zur nächsten, nicht vom Reifen wegbewegt werden muss, wobei ein Abstand zwischen Schneidkopf und Laufflächenoberfläche gleichbleiben kann. Vorteilhafterweise kann das Messer, sobald eine Rille vollständig (nach-)geschnitten ist, relativ zu den Abstandsrollen bewegt werden, insbesondere in den Schneidkopf eingefahren und/oder von der Lauffläche beabstandet werden. Anschließend kann der Schneidkopf relativ zur Lauffläche unter Beibehaltung eines bestimmten Abstands bewegt werden, um das Messer in eine Startposition zum Schneiden einer weiteren Rille zu verbringen. Für den weiteren Schneidvorgang kann das Messer in entgegengesetzter Richtung auf die Lauffläche zu bewegt werden, insbesondere aus dem Schneidkopf ausgefahren werden. Das Messer kann in dieser ausgefahrenen Stellung verbleiben, solange bis der Schneidvorgang einer bestimmten Rille beendet ist. Die Abstützvorrichtung kann die Lauffläche während der Umpositionierung des Messer, z.B. direkt, kontaktieren. Dadurch, dass nur ein kleiner Teil des Schneidkopfs bewegt wird, kann der Wechsel zwischen den Rillen beschleunigt und damit die Zeit zum (Nach-)Schneiden eines gesamten Profils verkürzt werden. Ein besonderer Vorteil ist, dass mittels der erfindungsgemäßen Reifenschneidemaschine auch Querrillen, insbesondere im Bereich einer (Außen-)Schulter, zuverlässig mit einer bestimmten Tiefe geschnitten werden können.

Die Erfindung betrifft weiterhin ein Spannsystem für einen Reifen, insbesondere für einen Reifen ohne Felge bzw. einen felgenlosen Reifen. Das Spannsystem kann prinzipiell Teil der Reifenschneidemaschine gemäß der Erfindung sein. Allerdings ist das Spannsystem nicht darauf beschränkt, sondern bildet einen eigenständigen Teilaspekt der Erfindung. Das bedeutet, dass das Spannsystem auch in Alleinstellung realisiert sein kann. Weiterhin kann das Spannsystem dazu ausgebildet sein, um in Kombination mit einer Reifenschneidemaschine herkömmlicher Bauart betrieben zu werden. Weiterhin kann das Spannsystem dazu ausgebildet sein, um in Kombination mit einer Reifenschneidemaschine gemäß der Erfindung betrieben zu werden.

Das Spannsystem hat eine Trommel mit mehreren, d.h. zwei oder mehr, Trommelsegmenten, welche Trommel zur Aufnahme bzw. zum Aufspannen eines felgenlosen Reifens ausgebildet ist. Das Spannsystem hat einen Spannkonus, auf dem zwei oder mehr Trommelsegmente bewegbar gelagert sind. Der Spannkonus ist dazu ausgebildet, um vermittels einer Linearbewegung entlang seiner Längserstreckung bzw. in seiner Längsrichtung eine Position der Trommelsegmente zu verändern, insbesondere bezogen auf eine Antriebswelle des Spannsystems. Das Spannsystem hat einen steuerbaren Pneumatikantrieb, der dazu ausgebildet ist, um den Spannkonus in bzw. entlang dessen Längsrichtung in unterschiedliche Richtungen zu bewegen. Unter einem Spannkonus, auch bezeichnet als Konus, wird ein technisches Bauteil verstanden, das die äußere Form eines Kegels hat, insbesondere eines Kegelstumpfs. Der (Spann-)Konus hat einen ersten Kolbenabschnitt, der für eine Bewegung des Spannkonus in eine erste Richtung ausgebildet ist. Der (Spann-)Konus hat einen zweiten Kolbenabschnitt, der für eine Bewegung des Spannkonus in eine entgegengesetzte, zweite Richtung ausgebildet ist. Details zum Spannkonus werden an anderer Stelle beschrieben.

Vorteilhafterweise kann ein felgenloser Reifen besonders schnell und einfach auf der Trommel vorübergehend montiert werden, was den Schneidprozess begünstigt. Dadurch, dass derselbe Spannkonus zwei Kolbenabschnitte aufweist, die so konstruiert sind, dass der Spannkonus darüber in entgegengesetzte Richtungen bewegbar ist, kann der Pneumatikantrieb möglichst effizient konstruiert sein, z.B. hinsichtlich Bauraum und der benötigten Teile.

Ein erfindungsgemäßes Verfahren zum Schneiden (Schneideverfahren), insbesondere zum Nachschneiden, eines Profils mit zumindest einer Rille, insbesondere einer Querrille und/oder Längsrille, in einer Lauffläche eines Reifens mittels einer Reifenschneidemaschine, insbesondere der erfindungsgemäßen Reifenschneidemaschine, umfasst zumindest folgende Schritte:
In einem Schritt i) wird ein zu schneidender Reifen in einer Reifenaufnahme der Reifenschneidemaschine angeordnet, um den Reifen auf einer Antriebsachse zu halten, welche koaxial zu einer Rotationsachse des Reifens verläuft.

In einem optionalen Schritt ii) kann der Reifen an einer Antriebswelle der Reifenaufnahme mittels einer Reifenfeststellmutter, z.B. einer Reifenschnellspannmutter, lösbar arretiert werden. In einem optionalen Schritt iii) kann eine Schneidvorrichtung der Reifenschneidemaschine, insbesondere ein Messer eines Schneidkopfs der Schneidvorrichtung, in Bezug auf einen Startpunkt eines Schneidevorgangs, insbesondere passend zu einer ersten ausgewählten Rille des Reifens, positioniert werden. Vorzugsweise kann in einem Schritt des Verfahrens eine Schnitttiefe des Messers ausgewählt und/oder eingestellt werden, bevorzugt für jede Rille eines Profils. Dazu kann ein Überstand der Messerfront relativ zur Abstützvorrichtung in Richtung Reifen im ausgefahrenen Zustand des Messers festgelegt werden.

In einem Schritt iv) wird der in der Reifenaufnahme aufgenommene Reifen um seine Rotationsachse mithilfe von Antriebsmitteln der Reifenaufnahme angetrieben. Eine Steuervorrichtung der Reifenschneidemaschine steuert diese derart, dass das Profil mittels des Messers des Schneidkopfs der Schneidvorrichtung (nach-)geschnitten wird, wobei der Schneidkopf mittels einer Abstützvorrichtung an der Lauffläche des Reifens abgestützt wird. Das kann beinhalten, dass das Messer z.B. manuell in eine Rille in der Lauffläche gefahren wird, bis eine gewünschte bzw. vorgesehene Schnitttiefe erreicht ist. Hierbei taucht das (ausgefahrene) Messer in die betreffende Rille des Profils in der Lauffläche des Reifens bis zu einer gewünschten Schnitttiefe ein. Es ist auch möglich, dass zunächst der Schneidkopf an den Reifen herangefahren bzw. herangezogen wird, bis die Abstützvorrichtung die Lauffläche kontaktiert. Anschließend kann das Messer aus dem Schneidkopf ausgefahren werden, z.B. gleichzeitig mit dem Beginn der Reifenrotation oder kurz davor, um den Schneidvorgang zu starten.

In dem Verfahren wird das Messer zumindest einmalig relativ zur Abstützvorrichtung in einem automatisierten Prozess linear bewegt. Insbesondere kann das Messer in zwei entgegengesetzte Richtungen aktiv, d.h. durch die Reifenschneidemaschine selbst, bewegt werden. Das Messer kann so bewegt werden, dass eine Spitze oder Front des Messers, die das Schneiden einer Rille bewirkt, in Richtung der Lauffläche über die Abstützvorrichtung hinausragt und/oder so, dass die Messerspitze oder Messerfront zurücktritt gegenüber den Abstandsrollen. Bevorzugt kann das Messer abwechselnd in den Schneidkopf hineingefahren werden, wobei eine Messerfront von der Lauffläche beabstandet wird, und wieder aus dem Schneidkopf hinausgefahren werden, wobei die Messerfront auf die Lauffläche zubewegt wird und diese, insbesondere direkt, kontaktiert bzw. darin eintaucht. Das Messer kann so bewegt werden, dass in einem ausgefahrenen Zustand eine bestimmte Schnitttiefe erreicht wird, sofern sich der Schneidkopf mittels einer Abstützvorrichtung gegen den Reifen abstützt.

In dem Verfahren kann die Reifenschneidemaschine so gesteuert werden, dass eine ausgewählte Rille des Profils des Reifens, insbesondere eine Längsrille und/oder eine Querrille, mittels des Messers geschnitten oder nachgeschnitten wird, wobei das Messer ausgefahren ist. Während des Schneidvorgangs einer Rille stützt sich die Abstützvorrichtung gegen den Reifen ab, so dass sich das Messer des Schneidkopfs in der Rille in der Lauffläche des von der Reifenaufnahme aufgenommenen Reifens befindet, zumindest wenn das Messer bestimmungsgemäß in die Lauffläche eingetaucht ist, was üblicherweise nach ein paar Grad Drehung bzw. Rotation des Reifens erfolgt ist. Sobald eine Rille vollständig geschnitten ist, kann das Messer von der Lauffläche wegbewegt werden, so dass das Messer frei wird. Gleichzeitig oder danach kann der Schneidkopf relativ zur Lauffläche umpositioniert werden, um das Messer passend zur nächsten zu schneidenden Rille zu positionieren, wobei die Abstützvorrichtung die Lauffläche währenddessen, z.B. direkt, kontaktieren kann. Während der Umpositionierung rotiert der Reifen vorzugsweise vorübergehend nicht. Sobald das Messer in eine Startposition zum Schneiden einer weiteren Rille verbracht wurde, kann das Messer mittels Linearbewegung aus dem Schneidkopf ausgefahren werden, wobei die Messerfront die Lauffläche direkt kontaktiert. Anschließend oder gleichzeitig kann die Rotation des Reifens fortgesetzt werden, wobei die Messerfront unter Ausübung eines gewissen Drucks in die Lauffläche gedrückt wird zum Schneiden der Rille. Dieses Vorgehen kann mehrmals wiederholt werden, bis ein gewünschtes Profil geschnitten ist.

Mit dem erfindungsgemäßen Verfahren wird erreicht, dass ein Verlauf der Laufflächenoberfläche möglichst exakt auf das Messer übertragen wird, welches damit eine Rille mit gleichbleibender Schnitttiefe und, je nach Wahl des Messers, als im Wesentlichen senkrecht zur Oberfläche verlaufende Nut in den Reifen (nach-)schneidet, wobei eine Beschädigung der Karkasse im Reifen möglichst vermieden wird. Mit einem derart nachgeschnittenen Reifen kann die Kilometerlaufleistung in der Regel um bis zu 60.000 km erhöht werden. Zudem erhöht sich das Reibwertpotential und die Fahrsicherheit wird gesteigert, da z.B. die Gefahr von Aquaplaning reduziert wird. Des Weiteren können beim Fahren mit nachgeschnittenen Reifen in etwa 2 Liter Kraftstoff pro 100 km eingespart werden, da sich der Rollwiderstand der Reifen entsprechend verringert. Durch das linear bewegliche Messer kann das Schneiden eines Reifens beschleunigt werden, da beim Wechsel zwischen zwei Rillen der Schneidkopf an der Lauffläche verbleiben kann und nur das Messer eingefahren bzw. ausgefahren wird. Damit lässt sich das Profil eines Reifens noch effizienter schneiden. Es wird darauf hingewiesen, dass in dem Verfahren grundsätzlich auch Rillen, z.B. Längs- und/oder Querrillen, neu in die Lauffläche des Reifens geschnitten werden können. Die zuvor beschriebenen Schritte müssen nicht zwingend in der genannten Reihenfolge ausgeführt werden, wobei auch mehrere Schritte im Wesentlichen gleichzeitig ausgeführt werden können oder auch einzelne Schritte ausgelassen werden können. Die Verfahrensschritte werden vorzugsweise mittels der Steuervorrichtung der Reifenschneidemaschine gesteuert.

Weitere, besonders vorteilhafte Ausgestaltungen und Weiterbildungen der Erfindung ergeben sich aus den abhängigen Ansprüchen sowie der nachfolgenden Beschreibung, wobei die Ansprüche einer Anspruchskategorie auch analog zu den Ansprüchen und Beschreibungsteilen zu einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Unter Querrillen werden im Kontext der Erfindung Rillen des Profils verstanden, die quer zur Längsrichtung der Lauffläche des Reifens sind. Die Längsrichtung ist im Wesentlichen orthogonal zur Rotationsachse des Reifens. Die Längsrichtung kann auch als Laufrichtung des Reifens oder als Umlauf- oder Umfangsrichtung bezeichnet werden. Üblicherweise haben Querrillen einen Winkel zwischen 10° und 45° bezogen auf die Längsrichtung und/oder bezogen auf Längsrillen. Die Erfindung ist jedoch nicht auf solche Querrillen beschränkt. Querrillen können in unterschiedlichen Bereichen der Lauffläche angeordnet sein, auch z.B. mittig in der Lauffläche. Querrillen, die in die Schulter des Reifens hineinragen oder ausschließlich in der Reifenschulter ausgebildet sind, werden als Blocköffnungen bezeichnet. Solche Blocköffnungen münden üblicherweise an einem äußeren Rand des Reifens und/oder können in Richtung der Reifenflanke weisen.

Der Schneidkopf kann relativ zum Reifen in zumindest einer ersten (transversalen) Richtung parallel zur Rotationsachse bzw. quer zur Laufrichtung des Reifens sowie in zumindest einer zweiten (radialen) Richtung senkrecht dazu, vorzugsweise manuell, linear (vor-)verstellbar sein. Die Bewegbarkeit des (gesamten) Schneidkopfs in der zweiten Richtung (senkrecht zur Rotationsachse des Reifens) kann dazu genutzt werden, um einen bestimmten Abstand zwischen Schneidkopf und Lauffläche einzustellen. Insbesondere kann der Schneidkopf an den Reifen herangefahren werden, so dass die Abstützvorrichtung die Lauffläche kontaktiert, und/oder kann davon weggefahren werden, z.B. nach Fertigstellung eines Profils.

Die Bewegbarkeit in der ersten Richtung (parallel zur Rotationsachse des Reifens) dient zum einen dazu, den Schneidkopf bzw. das Messer auf eine der - in der Regel mehreren - Rillen des Reifens einzustellen, d.h. in eine Position zum Nachschneiden einer der in Reifen meist nebeneinander ausgebildeten, z.B. geradlinigen, gewellten oder gezackten, oder sonst beliebig programmierbaren Längsrillen zu bringen. Zum anderen dient die Bewegbarkeit dazu, z.B. bei eben solchen gewellten oder gezackten oder beliebig programmierbaren Längsrillen, also Rillen, welche nicht ausschließlich in Azimutalrichtung bzw. Umlaufrichtung des Reifens verlaufen, die Quer- bzw. Transversalkomponente zu bedienen. Der Schneidkopf, insbesondere das Messer, können parallel zur Rotationsachse des Reifens so bewegt werden, dass das Messer auf eine bestimmte Position der Lauffläche ausgerichtet ist. Dadurch ist es auch möglich, dass Messer passend auf (nachzuschneidende) Querrillen einzustellen. Vorteilhafterweise können auch Querrillen im Bereich der Reifenschulter angefahren und/oder geschnitten werden. Die (Außen-)Schulter eines Reifens bezeichnet den Teil des Reifens zwischen der jeweiligen Seitenwand und der Lauffläche. Mit der Lauffläche wird beim Reifen derjenige Teil bezeichnet, der im Betrieb direkten Kontakt zur Fahrbahnoberfläche hat. Das Reifenprofil ist Bestandteil der Lauffläche. Das seitliche Stück des Reifens wird auch Flanke genannt.

Vorzugsweise ist das Messer auch um eine Schneidkopfachse im Schneidkopf schwenkbar gelagert. Durch eine, z.B. periodische, Verschwenkung des Messers hin und her um diese Schneidkopfachse während einer Rotation des Reifens (im bestimmungsgemäßen Betrieb zum Nachschneiden eines Profils), können z.B. die Konturen von gewellten oder gezackten Längsrillen gut nachgeschnitten werden. Allerdings ist die Erfindung nicht auf eine solche periodische Verschwenkung beschränkt. Vorteilhafterweise können durch die schwenkbare Lagerung des Messers auch Querrillen zuverlässig geschnitten werden. Dies wird nachfolgend beschrieben.

Die Reifenschneidemaschine ist vorzugsweise so ausgebildet, dass das Messer entlang der Schneidkopfachse des Schneidkopfs in zwei entgegengesetzten Richtungen linear bewegbar ist und zusätzlich so, dass das Messer um die(-selbe) Schneidkopfachse schwenkbar im Schneidkopf gelagert ist. Bevorzugt kann das Messer sowohl für die Linearbewegung als auch für die Rotationsbewegung um die Schneidkopfachse aktiv bewegt werden, insbesondere in einem automatisierten Prozess (ohne direktes manuelles Zutun). Die Schneidkopfachse ist vorzugsweise quer, insbesondere orthogonal, zur Rotationsachse des Reifens. Die Schneidkopfachse kann während eines Schneidvorgangs annähernd horizontal sein.

Die Reifenschneidemaschine ist vorzugsweise so ausgebildet, dass das Messer ausgehend von einer Neutralstellung in entgegengesetzte Richtungen jeweils um einen Winkel von zumindest 45° und/oder jeweils um einen Winkel von zumindest 1° bis höchstens 90° schwenkbar bzw. rotierbar ist in einem automatisierten Prozess. Entsprechend kann die Reifenschneidemaschine zumindest einen steuerbaren Motor haben, um das Messer zu rotieren. Der Motor kann Teil eines Schnittrichtungseinstellers sein. Dies wird später beschrieben. Die Neutralstellung entspricht einer Stellung des Messers zum Schneiden einer (idealen, geraden) Längsrille längs des Umfangs des Reifens.

Vorteilhafterweise können dadurch auch Querrillen geschnitten werden, die einen gewünschten (bestimmten) Winkel zur Längsrichtung der Lauffläche und/oder zu anderen Längsrillen haben. Vorteilhafterweise können Querrillen in einem Winkelbereich von 1° bis 90° bezogen auf die Längsrichtung geschnitten werden. Beispielsweise können Querrillen geschnitten werden, die im Wesentlichen parallel zur Rotationsachse des Reifens sind. Dadurch kann die Reifenschneidemaschine besonders flexibel eingesetzt werden und kann auch komplexe Profile in Reifen schneiden. Eine Verschwenkung um mehr als 90° ist nicht erforderlich, weil solche Schnitte auch mit der beschriebenen Konstruktion durch eine Umkehr der Bewegungsrichtung des Messers relativ zur Lauffläche realisiert werden können.

Die Reifenschneidemaschine ist vorzugsweise so ausgebildet, dass der Schneidkopf einen steuerbaren Bewegungsmechanismus mit einem Druckzylinder aufweist, insbesondere ein Pneumatikzylinder und/oder ein Hydraulikzylinder. Der Druckzylinder ist bevorzugt ein doppelt wirkender Zylinder. Der Bewegungsmechanismus ist dazu ausgebildet, um das Messer mittels eines Kolbens des Druckzylinders linear zu bewegen und/oder um das Messer um die Schneidkopfachse zu rotieren. Der Betrieb des Bewegungsmechanismus kann mittels der Steuervorrichtung gesteuert werden.

Die Reifenschneidemaschine ist vorzugsweise so ausgebildet, dass der Kolben des Druckzylinders mit einer Welle gekoppelt ist, wobei die Welle so ausgebildet ist, dass in einer Endlage des Kolbens im Druckzylinder eine Kolbenkraft (im Wesentlichen vollständig) in ein erstes Lager des Bewegungsmechanismus (ab-)geleitet wird. Das erste Lager kann vorzugsweise ein Kugellager und/oder ein Rollenlager aufweisen. Beispielsweise kann ein Rillenkugellager oder ein Kegelrollenlager verwendet werden. Eine Endlage des Kolbens ist dadurch definiert, dass ein Endpunkt einer Bewegung des Kolbens in eine Richtung auf Grund einer Betätigung des Druckzylinders erreicht ist. Das bedeutet, der Kolben kann nach Erreichen der Endlage nicht weiter in dieselbe Richtung bewegt werden. Eine jeweilige Endlage kann vorzugsweise durch eine Passfeder des Bewegungsmechanismus definiert sein. Dies wird später genauer beschrieben. Der Kolben kann mittels Beaufschlagung durch ein Druckmedium zwischen den beiden gegenüberliegenden Endlagen hin und her bewegt werden. Der Kolben kann vorzugsweise fest mit der Welle des Bewegungsmechanismus verbunden sein. Der Kolben ist vorzugsweise dichtend im Druckzylinder gleitend gelagert.

Bevorzugt ist die Reifenschneidemaschine so ausgebildet, dass in den beiden Endlagen des Kolbens eine Kolbenkraft in unterschiedliche Lager (ab-)geleitet wird. Im Betrieb baut das Druckmedium im Druckzylinder Druck auf eine Kolbenfläche des Kolbens auf. Auf den Kolben wirkt eine Kraft, die als Kolbenkraft bezeichnet wird. Diese Kolbenkraft kann in der jeweiligen Endlage des Kolbens auf das betreffende Lager übertragen werden. Da der Kolben fest mit der Welle verbunden ist, wirkt die Kolbenkraft entsprechend auch auf die Welle. Die Kolbenkraft kann im Betrieb z.B. etwa 1300 N sein.

Bevorzugt ist die Reifenschneidemaschine so ausgebildet, dass das erste Lager von der Welle beabstandet ist. Das bedeutet, das erste Lager hat vorzugsweisen keinen direkten Kontakt zur Welle. Alternativ oder zusätzlich ist das erste Lager Teil des Bewegungsmechanismus, der dazu ausgebildet ist, um die Welle, und damit auch das Messer, um die Schneidkopfachse zu rotieren. Das erste Lager kann insbesondere dazu ausgebildet sein, um eine Drehbewegung eines Motors der Reifenschneidemaschine auf die Welle zu übertragen.

Bevorzugt ist die Reifenschneidemaschine so ausgebildet, dass der Bewegungsmechanismus eine oder mehrere Passfedern aufweist, die eine jeweilige Endlage des Kolbens definieren. Vorzugsweise kann jeweils eine Passfeder in einer Aussparung oder Aufnahme der Welle axial beweglich gelagert sein (bezogen auf die Schneidkopfachse). Durch Betätigung des Druckzylinders kann die Welle, insbesondere die Aussparung, relativ zur jeweiligen Passfeder in entgegengesetzte Richtungen bewegt werden. Die Welle kann so weit bewegt werden, bis ein Rand einer Aussparung die Passfeder kontaktiert bzw. daran anschlägt. In dieser Situation ist eine Endlage des Kolbens und damit auch der Welle erreicht. Die jeweilige Passfeder ist zusätzlich dazu ausgebildet, um mittels der Passfeder die Kolbenkraft von der Welle auf das erste Lager und/oder ein anderes Lager zu übertragen. Dadurch kann ein Kraftfluss zwischen Kolben und Welle über die Passfeder und dem betreffenden Lager erreicht werden.

Bevorzugt ist die jeweilige Passfeder (zusätzlich) dazu ausgebildet, um eine Drehbewegung eines Antriebs bzw. Motors des Bewegungsmechanismus an die Welle zu übertragen für eine Rotation der Welle und/oder des Messers. Die Welle bzw. das Messer können, wie erwähnt, in unterschiedliche Richtungen um die Schneidkopfachse gedreht werden. Die jeweilige Passfeder kann vorzugsweise innenliegend an einem Zahnriemenrad angeordnet sein, das in Wirkverbindung mit einem Antrieb des Bewegungsmechanismus ist.

Vorteilhafterweise kann mittels des Bewegungsmechanismus das Messer sowohl linear bewegt als auch rotiert werden. Dadurch, dass für beide Bewegungen derselbe Mechanismus genutzt wird, nimmt der Mechanismus wenig Raum in der Reifenschneidemaschine ein. Besonders vorteilhaft ist, dass der Bewegungsmechanismus eine kombinierte Bewegung des Messer ermöglicht, d.h. eine Linearbewegung und eine gleichzeitige Drehbewegung. Durch die besondere Konstruktion wird die Kolbenkraft beim Einfahren und Ausfahren des Messers (bei der Bewegung der Welle) nur in das betreffende Lager geleitet, z.B. in das erste Lager. Das erste Lager ist, wie beschrieben, an der Übertragung der Drehbewegung vom Motor auf die Welle beteiligt. Weiterhin vorteilhaft kann die Welle, auch in einer Endlage des Kolbens, reibungslos um die Schneidkopfachse gedreht werden. Entsprechend ist der Druckzylinder vorzugsweise so konstruiert, dass der Kolben in einer jeweiligen Endlage von einer Zylinderinnenwand (die den Zylinder in der Bewegungsrichtung des Kolbens begrenzt) beabstandet ist. Dadurch kann das Messer während einer Linearbewegung zusätzlich gedreht werden, also während des Einfahrens oder Ausfahrens aus dem Schneidkopf. Vorteilhafterweise können dadurch auch komplexe Profile möglichst effizient geschnitten werden.

Die Reifenschneidemaschine ist vorzugsweise so ausgebildet, dass die Welle mittels zumindest eines zweiten Lagers, bevorzugt zwei weitere Lager, im Schneidkopf bewegbar gelagert ist. Vorzugsweise kann jeweils ein Lager einer der beiden Endlagen des Kolbens zugeordnet sein. Vorzugsweise kann auf beiden Seiten (bezogen auf die Bewegungsrichtung des Kolbens) des Druckzylinders jeweils ein Lager angeordnet sein. Bevorzugt ist zumindest ein zweites Lager dazu ausgebildet, um in einer Endlage des Kolbens die Kolbenkraft (im Wesentlichen vollständig) aufzunehmen. Entsprechend kann die Kolbenkraft, je nach Endlage, entweder in das zweite Lager oder in das erste Lager (ab-)geleitet werden.

Das jeweilige zweite Lager umfasst vorzugsweise einen Gleitring, welcher der Welle außen (direkt) aufliegt, und ein Kugellager, das dem Gleitring außen (direkt) aufliegt. Anstelle eines Kugellagers kann ein Kegellager verwendet werden. Der jeweilige Gleitring ist vorzugsweise mit der Welle verpresst, insbesondere mittels einer Übergangspassung. Der Gleitring kann aus einem Material bestehen, das Polyetheretherketon (PEEK) enthält. Bevorzugt kann der Gleitring aus PEEK bestehen. Besonders bevorzugt kann der Gleitring aus PEEK bestehen und mit Graphit legiert sein. Vorteilhafterweise kann durch die Kombination jeweils eines Gleitrings mit einem Kugellager eine möglichst reibungsarme (lineare und rotierende) Bewegung der Welle im Schneidkopf realisiert werden. Dadurch lassen sich Verschleiß und Wartungsaufwand der Reifenschneidemaschine reduzieren.

Die Reifenschneidemaschine kann so ausgebildet sein, dass der Schneidkopf einen axial (bezogen auf die Schneidkopfachse) verstellbaren Schnitttiefeneinsteller aufweist, um eine Längserstreckung der Welle entlang der Schneidkopfachse einzustellen. Der Schnitttiefeneinsteller kann dazu genutzt werden, um im ausgefahrenen Zustand des Messers einen bestimmten Überstand des Messers relativ zur Abstützvorrichtung einzustellen. Der Schnitttiefeneinsteller kann manuell bedient werden. Prinzipiell ist auch ein automatisch betriebener Schnitttiefeneinsteller denkbar. Bevorzugt ist der Schnitttiefeneinsteller so ausgebildet, dass ein in die Welle hineinreichender (Bedien-)Teil des Schnitttiefeneinstellers axial beweglich (bezogen auf die Schneidkopfachse) gegenüber der Welle gelagert ist. Dies wird nachfolgend beschrieben.

Die Welle der Reifenschneidemaschine kann einen mehrteiligen Aufbau haben und erstreckt sich vorzugsweise längs der Schneidkopfachse. Vorzugsweise kann die Welle eine äußere Hohlwelle haben, die den Kolben aufweist und die zumindest eine, z.B. längliche Aufnahme, für eine Passfeder hat, insbesondere zwei Aufnahmen für jeweils eine Passfeder. Die Welle kann zusätzliche eine innenliegenden bzw. innere Hohlwelle haben, die mit der äußeren Hohlwelle verbunden ist, insbesondere in Wirkverbindung damit ist. Die innere Hohlwelle und die äußere Hohlwelle sind beweglich gegeneinander ausgebildet, wobei mittels des Schnitttiefeneinstellers die innere Hohlwelle relativ zur äußeren Hohlwelle bewegt werden kann. Ohne Betätigung des Schnitttiefeneinstellers bleibt eine Längserstreckung der Welle im Betrieb vorzugsweise konstant. Die innere Hohlwelle kann ein Innengewinde aufweisen, in das eine Gewindestange mit Außengewinde eingreift. Beispielweise kann ein Gewinde der Größe M14x2 verbaut sein. Die Gewindestange erstreckt sich längs der Schneidkopfachse und ist endseitig mit einem (Bedien-)Teil des Schnitttiefeneinstellers verbunden, z.B. mit einem Zapfen eines Trapezhalters, der in eine Bohrung in der Gewindestange hineinreicht. Der (Bedien-)Teil bzw. Zapfen kann sich in Längsrichtung, d.h. parallel zur Schneidkopfachse, frei in der Bohrung bewegen. Das ist vorteilhaft, da auf Grund der Linearbewegung des Messers im Betrieb eine Relativbewegung zwischen Welle und Zapfen erfolgt. Über die Kopplung zwischen Zapfen und Gewindestange wird (nur) eine Drehbewegung für eine Einstellung der Schnitttiefe übertragen. Vorzugsweise kann durch Drehen des Zapfens und damit der Gewindestange die relative Position zwischen innerer und äußerer Hohlwelle geändert werden. Der Zapfen kann endseitig ein Stellrädchen für einen Bediener aufweisen. Auch eine automatische Drehung des Zapfens wäre möglich. Für eine bequemere Einstellung der Schnitttiefe kann der Schnitttiefeneinsteller einen digitalen Stellungsanzeiger aufweisen, welcher die aktuell eingestellte Schnitttiefe anzeigt.

Der Schnitttiefeneinsteller kann eine Abrastung für die Einstellung der Schnitttiefe aufweisen. Vorzugsweise kann die Gewindestange eine Anzahl federgelagerter Kugeln aufweisen, denen jeweils eine Aussparung zugeordnet ist, wobei die Kugeln mittels Drehen der Gewindestange (über den Zapfen) gegenüber den Aussparungen verdreht werden können. Die Kugeln und/oder die Aussparungen können so angeordnet sein, dass eine Rastung, d.h. das Weiterdrehen der Kugeln um eine Aussparung, einer Tiefenverstellung von etwa 0,1mm entspricht. Vorteilhafterweise kann dadurch unterstützt werden, dass eine bestimmte Schnitttiefe im Betrieb beibehalten wird. Gleichzeitig kann dadurch eine haptische Bestätigung der Veränderung der Schnitttiefe bereitgestellt werden.

Die Reifenschneidemaschine ist vorzugsweise so ausgebildet, dass der Schneidkopf um eine Schwenkachse in der Schneidvorrichtung schwenkbar gelagert ist. Besonders bevorzugt kann auch die Abstützvorrichtung entsprechend mit um die Schwenkachse schwenkbar gelagert sein. Die Schwenkachse ist im Betrieb vorzugsweise parallel zur Lauffläche des Reifens und/oder senkrecht zur Rotationsachse des Reifens. Somit kann die Schwenkachse im Wesentlichen quer bzw. orthogonal zur Schneidkopfachse sein.

Die Schneidvorrichtung kann so aufgebaut und angeordnet sein, dass die Schwenkachse während eines Schneidevorgangs eines Profils, im bestimmungsgemäßen Betrieb, in einer Tangentialebene verläuft, die tangential an (einer "Einhüllenden") der Laufflächenoberfläche des Reifens anliegt.

Bevorzugt kann die Schneidvorrichtung aus einer horizontalen, im Wesentlichen radialen Richtung seitlich gegen den Reifen, insbesondere dessen Lauffläche, gedrückt und/oder gezogen werden. Dies kann vorzugsweise durch eine geeignete gefederte Lagerung des Schneidkopfs z.B. durch eine Federanordnung oder dergleichen realisiert sein, wie später noch beschrieben wird.

Vorteilhafterweise kann dadurch eine freie, kontinuierliche Neigungsanpassung des Messers an die Reifenwölbung bzw. Laufflächenoberfläche des Reifens unterstützt werden, insbesondere bei einer vektoriellen Bewegung des Messers mit einer Komponente parallel zur Rotationsachse des Reifens. Damit kann sichergestellt werden, dass sich das Messer wie gewünscht in einer definierten, einstellbaren Tiefe in einer Rille der Lauffläche befindet.

Es ist bevorzugt, dass der Schneidkopf eine Schwenkarretierung aufweist, um eine bestimmte Position des Schneidkopfs in Bezug auf die Lauffläche eines bestimmungsgemäß montierten Reifens einzustellen. Alternativ oder zusätzlich kann die Schwenkarretierung dazu ausgebildet sein, um einen Schwenkwinkel des Schneidkopfs um die Schwenkachse zu begrenzen. Vorzugsweise kann der Schwenkwinkel ausgehend von einer Neutralstellung höchstens 20° oder weniger sein. Die Neutralstellung entspricht einer Stellung des Messer zum Schneiden einer (idealen, geraden) Längsrille längs des Umfangs des Reifens. Alternativ oder zusätzlich kann die Schwenkarretierung dazu ausgebildet sein, um den Schneidkopf in Bezug auf eine Schwenkachse zu fixieren, insbesondere so, dass eine Drehung um die Schwenkachse verhindert wird. Optional kann die Fixierung unter Belassung eines geringen Spiels erfolgen. Vorzugsweise kann die Schwenkarretierung mittels der Steuervorrichtung gesteuert werden, insbesondere ein einem automatisierten Prozess. Die Schwenkarretierung kann vorzugsweise Teil einer zuvor beschriebenen Reifenschneidemaschine sein, die einige oder alle der beschriebenen Weiterbildungen umfasst.

Vorteilhafterweise kann mittels der Schwenkarretierung erreicht werden, dass speziell Querrillen im Bereich der Reifenschulter ordnungsgemäß geschnitten werden können, um gewünschtes Profileigenschaften zu erhalten. Insbesondere beim Schneiden von Blocköffnungen kann das Problem auftreten, dass sich der Schneidkopf ab einem bestimmten Punkt, z.B. sobald eine bestimmte Distanz zur Flanke unterschritten ist, nicht mehr zuverlässig an der Lauffläche abstützen kann, um das Messer ordnungsgemäß durch die Lauffläche zu führen. Das kann dazu führen, dass sich der Schneidkopf, und damit auch das Messer, bei Unterschreiten einer kritischen Distanz bzw. nahe an der Flanke von der Lauffläche wegdreht bzw. wegkippt. Vorteilhafterweise kann mittels der Schwenkarretierung die Schwenkmöglichkeit des Schneidkopfs in Bezug auf die Lauffläche begrenzt und/oder fixiert werden, so dass mittels des Schneidkopfs auch Blocköffnungen zuverlässig und ordnungsgemäß, d.h. mit gewünschten Profileigenschaften geschnitten werden können.

Es wird darauf hingewiesen, dass die Schwenkarretierung nicht auf die zuvor beschriebene Reifenschneidemaschine beschränkt ist. Vielmehr stellt die Schwenkarretierung einen eigenständigen Teilaspekt der Erfindung dar. Vorteilhafterweise kann eine solche Schwenkarretierung daher auch in anderen Reifenschneidemaschinen ausgebildet sein, z.B. unabhängig von dem linear beweglichen Messer. Dann kann die Reifenschneidemaschine zum (Nach-)Schneiden eines Profils mit zumindest einer Rille, insbesondere einer Längsrille und/oder Querrille, in einer Lauffläche eines Reifens eine Reifenaufnahme zum Halten eines Reifens auf einer Antriebsachse aufweisen, welche koaxial zu einer Rotationsachse des Reifens verläuft. Die Reifenschneidemaschine kann weiterhin Antriebsmittel haben, um einen von der Reifenaufnahme aufgenommenen Reifen während eines Schneidvorgangs um die Rotationsachse zu rotieren, sowie eine Steuervorrichtung zur Steuerung des Schneidvorgangs und eine Schneidvorrichtung, die einen Schneidkopf mit einem Messer und einer Abstützvorrichtung aufweist, um den Schneidkopf während des Schneidvorgangs an der Lauffläche des von der Reifenaufnahme aufgenommenen Reifens abzustützen zum Schneiden des Profils durch das Messer. Der Schneidkopf kann, wie beschrieben, eine Schwenkarretierung aufweisen, um eine bestimmte Position des Schneidkopfs in Bezug zur Lauffläche des Reifens einzustellen, und/oder um einen Schwenkwinkel des Schneidkopfs um die Schwenkachse zu begrenzen und/oder um den Schneidkopf in Bezug zur Schwenkachse zu fixieren, wobei vorzugsweise ein Schwenkwinkel ausgehend von einer Neutralstellung höchstens 20° oder weniger ist.

Ungeachtet der Ausgestaltung der restlichen Reifenschneidemaschine, kann der Schneidkopf in Bezug auf die Schwenkachse verklemmbar sein bzw. kann verklemmt werden, insbesondere in einem automatisierten Prozess. Dazu kann die Schwenkarretierung eine (Quer-)Stange aufweisen, die in einem Schwenkzapfen gelagert ist. Die (Quer-)Stange liegt vorzugsweise lose im Schwenkzapfen, solange dieser nicht arretiert ist. Der Schwenkzapfen ist parallel zur Schwenkachse ausgebildet. Der Schwenkzapfen kann eine Welle der Schneidvorrichtung, mittels der der Schneidkopf schwenkbar ist gegenüber anderen Teilen der Schneidvorrichtung (bezeichnet als Schwenkwelle), zumindest teilweise in sich aufnehmen. Die (Quer-)Stange ist bewegbar gegenüber der (Schwenk-)Welle angeordnet und ragt, quer zur Schwenkachse, durch die Welle hindurch. Die (Schwenk-)Welle hat vorzugsweise zwei Langlöcher, in denen die (Quer-)Stange bewegbar gelagert ist. Die (Schwenk-)Welle ist vorzugsweise parallel zur Schwenkachse.

Zur Arretierung kann die (Quer-)Stange mittels eines (Arretier-)Zylinders, vorzugsweise parallel zur Schwenkachse, kraftschlüssig im Schwenkzapfen und/oder mit der (Schwenk-)Welle verklemmt werden. Insbesondere kann die (Quer-)Stange im jeweiligen Langloch vorübergehend verklemmt werden. Der Zylinder kann vorzugsweise ein Pneumatikzylinder sein, der federrückgestellt ist.

In einem bevorzugten Verfahren zum Schneiden eines Profils kann vorgesehen sein, dass der Schneidkopf zumindest einmalig arretiert bzw. fixiert wird (bezogen auf eine Verschwenkung um die Schwenkachse). Dazu kann zunächst ein bestimmter Schwenkwinkel erreicht werden, z.B. durch den Kontakt der Abstützvorrichtung mit einer gewölbten Laufflächenoberfläche, wobei dann der Zylinder betätigt wird und in der Folge in axialer Richtung auf die (Quer-)Stange zubewegt wird und diese schließlich kontaktiert. Dadurch wird die (Quer-)Stange im jeweiligen Langloch verpresst. In diesem Zustand kann der Schneidkopf in den Randbereich der Lauffläche verbracht werden, z.B. an die Reifenschulter, um dort eine Anzahl von Blocköffnungen zu schneiden. Es ist ebenso möglich, den Schneidkopf zuerst in den Bereich einer Reifenschulter zu verbringen, dann einen bestimmten Schwenkwinkel einzustellen (durch Kontakt der Abstützvorrichtung mit der Laufflächenoberfläche) und anschließend den Schneidkopf zu arretieren. Es ist möglich, dass in dem Schneideverfahren (nacheinander) unterschiedliche Schwenkwinkel des Schneidkopfs eingestellt werden.

Vorteilhafterweise kann der Schneidkopf fixiert werden, wobei insbesondere Blocköffnungen zuverlässig geschnitten werden können. Weiterhin vorteilhaft kann der Schneidkopf im fixierten Zustand ein gewisses Spiel haben und kann noch geringfügig geschwenkt werden, z.B. um 20° oder weniger. Dazu kann die längliche (Quer-)Stange an ihren beiden gegenüberliegenden Enden jeweils ein federndes Druckstück haben (im Kontaktbereich zum Schwenkzapfen), die im fixierten Zustand eine minimale Bewegung des Schneidkopfs ermöglichen. Dadurch kann sich der Schneidkopf beim Schneiden in gewissen Grenzen an die Wölbung der Oberfläche der Lauffläche anpassen. Trotzdem kann ein Wegkippen oder Abrutschen des Schneidkopfs von der Lauffläche verhindert werden. Eine solche Wölbung kann auch im Bereich der Reifenschulter vorhanden sein. Somit ermöglicht die Schwenkarretierung eine Kombination mehrerer Vorteile, da Blocköffnungen ordnungsgemäß geschnitten werden können und gleichzeitig eine Anpassung des Schneidkopfs an die Oberfläche der Lauffläche erfolgen kann, wobei eine bestimmte Schnitttiefe zuverlässig erreicht wird. Um den Schneidkopf wieder frei schwenken zu können, wird der Zylinder entlüftet und mittels Federkraft rückgestellt. Bevorzugt ist der Schneidkopf so ausgebildet, dass er nach dem Lösen der Arretierung von selbst in die Neutralstellung (zurück-)pendelt.

In einem bevorzugten Verfahren kann vorgesehen sein, dass mittels der Reifenschneidemaschine eine oder mehrere Querrillen in die Lauffläche des Reifens so geschnitten werden, dass sie quer zu einer Längsrichtung der Lauffläche des Reifens und/oder im Wesentlichen parallel zur Rotationsachse des Reifens sind. Entsprechend kann die Reifenschneidemaschine so gesteuert werden, dass Querrillen mit einem Winkel zwischen 1° und 90° bezogen auf die Längsrichtung der Lauffläche in die Lauffläche geschnitten werden. Bevorzugt kann in dem Verfahren vorgesehen sein, dass eine oder mehrere Querrillen an einem äußeren Rand der Lauffläche des Reifens, insbesondere im Bereich der Reifenschulter, in die Lauffläche geschnitten werden. Vorteilhafterweise können in dem Verfahren Blocköffnungen in die Lauffläche im Bereich der Reifenschulter geschnitten werden.

In dem Verfahren kann vorgesehen sein, dass nacheinander eine Vielzahl von Blocköffnungen in der(-selben) Reifenschulter entlang des gesamten Umfangs des Reifens erzeugt wird. Die Blocköffnungen können vorzugsweise einen konstanten Abstand zueinander haben. Je nach Profil ist es möglich, dass auch Blocköffnungen im Bereich der anderen (gegenüberliegenden) Reifenschulter erzeugt werden, indem nacheinander mehrere Blocköffnungen entlang des gesamten Umfangs des Reifens geschnitten werden. Es ist auch möglich, dass Blocköffnungen nur abschnittsweise entlang des Umfangs und/oder nur in einer bestimmten Reifenschulter erzeugt werden. Weiterhin können Querrillen, auch mit unterschiedlichen Winkeln (bezogen auf die Längsrichtung), nacheinander in unterschiedliche Bereiche der Lauffläche desselben Reifens geschnitten werden, also nicht nur im Bereich der Reifenschulter. Das Verfahren kann auch beinhalten, dass zunächst eine oder mehrere Längsrillen in die Lauffläche geschnitten werden und anschließend eine oder mehrere Querrillen oder Blocköffnungen geschnitten werden, oder umgekehrt. Es wäre auch möglich, dass wechselweise Längsrillen und Querrillen geschnitten werden. Vorteilhafterweise kann der Schneidvorgang hinsichtlich der Abfolge (Reihenfolge) von Längsrillen und Querrillen und/oder hinsichtlich deren Lage (Orientierung) in der Lauffläche und/oder deren Ausgestaltung (z.B. der Winkel bezogen auf die Längsrichtung oder die Schnitttiefe) an ein bestimmtes Profil flexibel angepasst werden.

In dem Verfahren kann optional vorgesehen sein, dass der Schneidkopf unmittelbar nach Beendigung eines jeweiligen Schneidvorgangs, insbesondere sobald eine bestimmte Rille vollständig geschnitten ist, von der Lauffläche des Reifens beabstandet bzw. weggefahren wird. Das kann dazu beitragen, dass der herausgeschnittene Gummirest durch die Bewegung der Messerfront aus der Rille gezogen wird. Vorteilhafterweise kann dadurch ein Verklemmen der Klinge mit dem Gummirest vermieden werden.

Die Reifenschneidemaschine kann so ausgebildet sein, dass der Schneidkopf zumindest eine Kupplungsstelle, insbesondere eine Zwischenklemme, umfasst, die dazu ausgebildet ist, um eine oder mehrere Versorgungsleitungen für das Messer mit zugeordneten Leitungen, z.B. elektrische Leiter, zu verbinden, die vom Schneidkopf weg führen. Die zugeordneten Leitungen können Teil des Schneidkopfs sein und/oder können Teil einer externen Versorgungseinrichtung sein. Die Zwischenklemme weist vorzugsweise einen Anodenwerkstoff auf oder ist vollständig daraus gebildet. Bevorzugt kann die Zwischenklemme aus Kupfer bestehen. Die Zwischenklemme kann zwei Teile bzw. Hälften aufweisen, die mittels Schrauben verbunden werden können und zwischen sich die Enden von mehreren Leitungen bzw. Kabeln aufnehmen können, um jeweils zwei Enden zur Ausbildung eines (elektrischen) Leiters zu verbinden. Vorzugsweise haben die Enden der Kabel jeweils eine aufgepresste Hülse, die in derZwischenklemme montiert wird. Die Zwischenklemme stellt eine elektrische Verbindung zwischen jeweils zwei einander zugeordneten Kabeln her.

Um mit dem Messer möglichst schonend den Reifen schneiden zu können, kann das Messer elektrisch erhitzt werden. Entsprechend können die Kabel vorzugsweise die (Haupt-)Zuleitungen für die Bestromung der Klinge bzw. des Messers sein. Diese Kabel müssen in regelmäßigen Abständen gewechselt werden. Vorteilhafterweise muss aufgrund der Zwischenklemme nur ein relativ kurzes Stück Kabel (zwischen Klinge und Zwischenklemme) gewechselt werden. Prinzipiell kann die Reifenschneidemaschine mehrere Zwischenklemmen für unterschiedliche Kabel oder Leitungen haben.

Es ist bevorzugt, dass die Reifenschneidemaschine zusätzlich zumindest eines der Elemente aufweist, die nachfolgend beschrieben sind. Die Reifenschneidemaschine kann eine Transportsicherung aufweisen, die dazu ausgebildet ist, um den Schneidkopf in Bezug auf die Schwenkachse zu fixieren und/oder um den Schneidkopf in transversaler Richtung zu fixieren. Eine Fixierung kann während eines Transports der Reifenschneidemaschine und/oder im inaktiven Zustand der Reifenschneidemaschine vorgesehen sein. Die Transportsicherung kann ein Blech außen an der (Schwenk-)Welle der Schneidvorrichtung aufweisen, das einseitig daran befestigt und im Übrigen beweglich gegenüber der Welle ist. Das Blech hat einen oder mehrere Vorsprünge, die jeweils in eine zugeordnete Aussparung im Gehäuse der Reifenschneidemaschine zum Verrasten eingreifen können. Dazu kann das Blech ausgehend von einer Betriebsposition, in der keine Verrastung erfolgt, optional mittels Betätigung eines (Sicherungs-)Bolzens, in Richtung des Gehäuses bewegt bzw. geklappt werden, und über die Vorsprünge mit den Aussparungen verrastet werden. Beispielsweise kann durch Ziehen eines Bolzens unter einer entsprechenden Schwingbewegung das Blech eingeschnäbelt werden. Vorteilhafterweise kann dadurch ein möglichst sicherer Transport der Reifenschneidemaschine erreicht werden.

Alternativ oder zusätzlich kann die Reifenschneidemaschine eine Bedieneinheit mit Griffflächen für jeweils eine Hand aufweisen, die dazu ausgebildet ist, um den Betrieb der Reifenschneidemaschine mittels einer Drehbewegung der Griffflächen zu steuern. Vorzugsweise können die Griffflächen nach der Art von Gashebel-Zustimmtastern ausgebildet sein. Vorzugsweise kann der Betrieb dadurch gesteuert werden, dass beide Griffe (gleichzeitig) in dieselbe Richtung gedreht und in dieser (gedrehten) Stellung gehalten werden. Die Reifenschneidemaschine kann geeignete Induktive Sicherheitssensoren aufweisen, die so ausgebildet sind, dass ein Schneidvorgang nur möglich ist, wenn die Sensoren eine für den Betrieb vorbestimmte Sollstellung der Griffe erkennen (was eine vorherige Drehung voraussetzt). Vorteilhafterweise kann dadurch die Betriebssicherheit der Reifenschneidemaschine erhöht werden.

Alternativ oder zusätzlich kann die Reifenschneidemaschine einen Profiltiefenmesser aufweisen, der so ausgebildet ist, dass eine Auflagefläche des Profiltiefenmessers gewölbt ist, wobei die Wölbung vorzugsweise einer Wölbung der Lauffläche des Reifens entspricht, zumindest näherungsweise. Der Profiltiefenmesser kann separat gegenüber der Reifenschneidemaschine ausgebildet sein. Der Profiltiefenmesser ist vorzugsweise so ausgebildet, dass eine Breite der Auflagefläche des (gesamten) Profiltiefenmesser auf dem Reifen im Wesentlichen gleich ist zu einer Auflagefläche der Abstützvorrichtung, insbesondere der zwei Abstandsrollen, auf der Lauffläche des Reifens (unter Einschluss von dazwischenliegenden Bereichen des Reifens). Entsprechend kann eine Auflagefläche des Profiltiefenmessers in etwa gleich breit sein wie eine Fläche, die von der Abstützvorrichtung auf der Lauffläche eingenommen wird, z.B. vom äußeren Rand der ersten Abstandsrolle bis zum äußeren Rand der zweiten Abstandsrolle.

Alternativ oder zusätzlich können zwei Bereiche der Auflagefläche des Profiltiefenmessers, die vorzugsweise unter Belassung einer Aussparung (Freimachung) im Material des Profiltiefenmessers voneinander beabstandet sind, einen Winkel zueinander bilden, der im Wesentlichen gleich ist zu einem Winkel von zwei Abstandsrollen der Abstützvorrichtung zueinander und/oder der im Wesentlichen gleich ist zu einem Winkel von zwei Abstandsrollen der Abstützvorrichtung in Bezug auf das Messer. Der Profiltiefenmesser ist bevorzugt so ausgebildet, dass er einen Winkel von etwa 1,3° an den Auflageflächen bzw. Anschlagflächen aufweist. Mit anderen Worten können die beiden Anschlagflächen unter Ausbildung eines solchen Winkels (zwischen den Anschlagflächen) realisiert sein. Bevorzugt können die beiden Abstandsrollen des Schneidkopfs so ausgebildet sein, dass die beiden Mantelflächen einen Winkel von 1,3° zueinander haben. Vorteilhafterweise kann mittels des Profiltiefenmessers die gemessene Tiefe der späteren Nachschneidetiefe korrekt erfasst werden. Bei einem Messschieber mit geraden Auflageflächen ist es möglich, dass die gemessenen Werte später nicht mit den tatsächlichen Schnittwerten übereinstimmen, da sich der Schneidkopf durch die schrägen Abstandsrollen immer etwas näher am Reifen befindet, da dieser ja immer gewölbt ist. Das kann zu falschen Messergebnissen von bis zu 1mm führen. Vorteilhafterweise kann dadurch, dass der Profiltiefenmesser die Auflagesituation der Abstützvorrichtung, und damit die tatsächliche Position des Messers beim Schneidvorgang, möglichst detailgetreu abbildet, besonders zuverlässig eine gewünschte Schnitttiefe erreicht werden. Der besondere Profiltiefenmesser kann, abgesehen von der vorteilhaften Ausbildung der Anschlagflächen, weitere Komponenten eines Messschiebers aufweisen und/oder kann nach Art eines Messschiebers realisiert sein.

Alternativ oder zusätzlich kann die Reifenschneidemaschine ein Freilauflager haben, das der Antriebsachse der Reifenaufnahme zugeordnet ist. Das Freilauflager hat die Funktion, dass ein Aufnahmezapfen einer Antriebswelle, der mit einer Passfeder ausgestattet ist welche zur Drehmomentübertragung dient, entgegen der späteren Drehrichtung während des Schneideprozesses verriegelt ist. Vorteilhafterweise kann der Aufnahmezapfen (als Teil der Antriebswelle) in eine Richtung frei gedreht werden. Dadurch wird das Einfädeln bzw. Aufziehen eines Spannsterns in eine Reifenfelge erleichtert, um die Felge zum Schneiden auf der Antriebswelle zu montieren. Das Freilauflager verhindert ein Verdrehen des Reifens während des Schneidvorgangs (entgegen der Schnittkraft).

Die Reifenschneidemaschine kann eine Antriebswelle umfassen, die vorzugsweise Teil der Antriebsachse ist, und die koaxial zur Rotationsachse des Reifens ist. Die Antriebswelle umfasst endseitig eine Trapezwelle, auf deren freies Ende eine Felge mit Reifen montierbar ist. Die Trapezwelle kann mit dem gegenüberliegenden Ende in der (hohlen) Antriebswelle angeordnet sein und hat dort eine Passfeder, mittels der die Trapezwelle mit dem Freilauflager in Wirkkontakt ist. Das Freilauflager umschließt das Ende der Trapezwelle und liegt an einer Innenwand der hohlen Antriebswelle an. Das Freilauflager kann mehrteilig ausgebildet sein, z.B. mehrere Freilaufringe umfassen. In der hohlen Welle kann eine Anschlagscheibe vorgesehen sein, die unter Einlagerung einer Federscheibe an das Freilauflager grenzt und dieses, je nach Betriebssituation, kontaktieren kann. Die Federscheibe kann eine kraftschlüssige Verklemmung bewirken, so dass ein Reifen durch geringe äußere Kräfte nicht verdreht werden kann.

Die Montage eines Reifens in der Reifenschneidemaschine, z.B. als Teil des Schneideverfahrens, kann damit beginnen, dass eine Felge des Reifens auf das freie Ende der Trapezwelle geschoben wird. Die Felge kann so positioniert werden, dass sie rückseitig einen Anschlagteller der Reifenschneidemaschine, der auf der Antriebswelle sitzt, kontaktiert. Anschließend kann ein Spannstern auf die Trapezwelle geschoben werden. Die Trapezwelle hat an ihrem freien Ende zumindest eine Passfeder. Entsprechend hat der Spannstern eine Anzahl von Ausnehmungen, die jeweils eine Passfeder aufnehmen können. Zur Montage des Reifens kann die Trapezwelle auf Grund des Freilauflagers frei in eine Richtung gedreht werden, z.B. manuell oder in einem automatisierten Prozess, so dass der Spannstern über die Passfeder geschoben werden kann und der Spannstern passend zu den Bohrungen der Felge positioniert wird. Anschließend kann der Spannstern mittels einer Spindelmutter (als Reifenfeststellmutter) mit der Trapezwelle verschraubt werden. Durch das Anziehen der Spindelmutter wird die Trapezwelle geringfügig, z.B. etwa 1mm, in axialer Richtung vom Freilauflagerweg bewegt. Diese Bewegung wird vorzugsweise durch einen Außenring des Freilauflagers gestoppt, wobei eine kraftschlüssige Blockade zwischen der Anschlagscheibe und einem zugewandten Außenring des Freilauflagers entsteht. Dadurch kann erreicht werden, dass das Freilauflager vor einer Beschädigung durch zu hohe Axialkräfte geschützt wird. Durch die axiale Bewegung der Trapezwelle wird auch die Felge kraftschlüssig an den Anschlagteller gedrückt.

Es wird darauf hingewiesen, dass die zuvor beschriebenen Elemente (Transportsicherung, Bedieneinheit, Profiltiefenmesser, Freilauflager) einzeln oder in Kombination Teil einer zuvor beschriebenen Reifenschneidemaschine sein können, die einige oder alle der beschriebenen Weiterbildungen umfasst. Allerdings sind die zuvor beschriebenen Elemente (Transportsicherung, Bedieneinheit, Profiltiefenmesser, Freilauflager) nicht auf eine bestimmte Reifenschneidemaschine beschränkt. Vielmehr stellen diese vorteilhaften Konstruktionen jeweils eigenständige Teilaspekte der Erfindung dar. Vorteilhafterweise können diese Elemente daher auch in anderen Reifenschneidemaschinen angeordnet sein, z.B. unabhängig von dem linear beweglichen Messer. Eine solche Reifenschneidemaschine zum Schneiden eines Profils mit zumindest einer Rille, insbesondere einer Längsrille und/oder Querrille, in einer Lauffläche eines Reifens kann eine Reifenaufnahme zum Halten eines Reifens auf einer Antriebsachse aufweisen, welche koaxial zu einer Rotationsachse des Reifens verläuft. Weiterhin kann die Reifenschneidemaschine Antriebsmittel haben, um einen von der Reifenaufnahme aufgenommenen Reifen während eines Schneidvorgangs um die Rotationsachse zu rotieren und eine Steuervorrichtung zur Steuerung des Schneidvorgangs. Die Reifenschneidemaschine kann zusätzlich eine Schneidvorrichtung haben, die einen Schneidkopf mit einem Messer und einer Abstützvorrichtung aufweist, um den Schneidkopf während des Schneidvorgangs an der Lauffläche des von der Reifenaufnahme aufgenommenen Reifens abzustützen zum Schneiden des Profils durch das Messer. Weiterhin kann die Reifenschneidemaschine eines oder mehrere der folgenden Elemente aufweisen, die bereits allgemein beschrieben wurden: eine Transportsicherung, eine Bedieneinheit mit Griffflächen für jeweils eine Hand, einen Profiltiefenmesser und/oder ein Freilauflager der Antriebsachse der Reifenaufnahme.

Nachfolgend werden vorteilhafte Weiterbildungen der Reifenschneidemaschine beschrieben, die einzeln oder in Kombination verwirklicht sein können:
Die Abstützvorrichtung ist vorzugsweise Teil der Schneidvorrichtung und kann eine Walze mit Kugellager umfassen, welche direkt neben dem Messer des Schneidkopfs angebracht bzw. angeordnet ist. Die Abstützvorrichtung kann als Teil des Schneidkopfs ausgebildet sein.

Vorzugsweise kann die Abstützvorrichtung, bevorzugt seitlich neben dem Messer, zumindest eine Abstützwalze umfassen. Eine solche Abstützwalze, auch bezeichnet als Abstandsrolle, umfasst vorteilhafterweise ein Kugellager, wie z. B. ein Rillenkugellager, in welchem sie um eine Walzenrotationsachse drehbar zur Schneidvorrichtung gelagert ist. Im Schneidbetrieb, d.h., wenn der Reifen angetrieben wird, fährt die Abstützwalze oder Abstandsrolle die Laufflächenoberfläche des Reifens ab und "stützt" dabei das Messer ab.

Bei einer einfacheren Version der Reifennachschneidemaschine kann nur eine einzige Abstandsrolle vorgesehen sein. Diese kann z.B. in Rotationsrichtung bzw. Umlaufrichtung des Reifens (dessen Profil gerade nachgeschnitten werden soll) vor oder hinter dem Messer am Reifen anliegen. Sie kann sich zum Beispiel auch über einen Großteil der Breite des Reifens erstrecken.

Besonders bevorzugt weist die Abstützvorrichtung jeweils seitlich neben dem Messer eine Abstützwalze oder Abstandsrolle auf. Insbesondere kann beidseitig neben dem Messer und auf Höhe des Messer jeweils eine Abstandsrolle angeordnet sein.

Wenn im Schneidbetrieb die jeweilige Abstandsrolle die Laufflächenoberfläche des Reifens direkt neben der nachzuschneidenden Rille und/oder dem Messer "stützend" abfährt (also abfährt und dabei "stützt"), kann sich die jeweilige Abstandsrolle, welche mit ihrer Mantelfläche flach auf der Laufflächenoberfläche läuft, stets entsprechend radial zur Laufflächenoberfläche ausrichten, so dass sich auch das mitgeführte bzw. indirekt daran gekoppelte Messer des Schneidkopfs gleichermaßen mitneigt bzw. ausrichtet.

Bevorzugt sind die jeweiligen Abstandsrolle(n) schmaler (bzw. in Richtung der Walzen rotationsachse kürzer), als ein Abstand zwischen zwei benachbarten, nachzuschneidenden Rillen der Lauffläche des Reifens, aber vorzugsweise breiter, als ein gängiges Längsrillenmuster und/oder eine gängige Rillenbreite (quer zur Laufrichtung) der betreffenden Rille. Als gängige Längsrillenmuster gelten im Rahmen der Erfindung diejenigen Rillenmuster, welcher typischerweise in Reifen, insbesondere LKW-Reifen, zu finden sind und welche sich über weniger als ein Viertel der Reifenbreite des Reifens erstrecken. Breitere Rillenmuster gelten nicht mehr als Längsrillenmuster. Damit wird erreicht, dass der Wölbungsverlauf des Reifens in unmittelbarer Nähe der betreffenden Rille als Abstützoberfläche genutzt wird, und damit möglichst exakt der tatsächliche Wölbungsverlauf der Lauffläche im Bereich der Rille abgebildet wird, so dass die Schnitttiefe nur so tief reicht, dass die Karkasse - wenn überhaupt - eigentlich nur bei einem Betriebsfehler bzw. Defekt der Reifenschneidemaschine gegebenenfalls beschädigt wird.

Vorzugsweise beträgt die Breite der jeweiligen Abstandsrolle entlang der (Rollen-)Rotationsachse höchstens 50 mm und besonders bevorzugt höchstens 40 mm. Vorzugsweise beträgt der Durchmesser der Abstandsrolle 110 mm. Die jeweilige Abstandsrolle bildet am Übergang ihrer Mantelfläche zum jeweiligen Seitenbereich vorzugsweise einen Winkel von 0° bis 20° und/oder hat in diesem Bereich abgerundete Kanten. Vorteilhafterweise kann damit erreicht werden, dass die Abstandsrollen nicht nur über ihre Mantelfläche rollen können, sondern auch, z.B. seitlich, über die Lauffläche des Reifens geschoben werden können. Ein solches (kontaktierendes) Schieben oder Gleiten der Abstandsrollen kann besonders beim Schneiden von Querrillen vorteilhaft sein, insbesondere bei Blocköffnungen. Bevorzugt ist die jeweilige Abstandsrolle teilweise oder vollständig aus Teflon gefertigt.

Die Schneidvorrichtung kann zumindest eine Federanordnung mit zumindest einem Federelement aufweisen, um zumindest einen Teil des Schneidkopfs und/oder der Abstützvorrichtung um die Schwenkachse federnd in eine Neutralstellung zurückzustellen. Dieses Auspendeln in die Neutralstellung ist möglich, sofern keine externe Kraft auf die Abstützvorrichtung wirkt, z.B., wenn die Mantelfläche der jeweiligen Abstandsrolle nicht gegen die Laufflächenoberfläche des Reifen drückt, und sofern die Schwenkarretierung des Schneidkopfs inaktiv ist.

Der Schneidkopf kann vorzugsweise derart federnd gelagert sein, dass er nach einer Schwenkauslenkung um die Schwenkachse aufgrund eines entsprechenden Verlaufs der Laufflächenoberfläche aus einer (mittleren) Neutralstellung, in der das Messer des Schneidkopfs radial zur Rotationsachse des Reifens ausgerichtet ist, mittels einer definierten Federkraft wieder in die Neutralstellung geschwenkt wird, sofern die Laufflächenoberfläche ebenfalls wieder parallel zur Rotationsachse verläuft. Die Federanordnung kann bevorzugt auf einer reifenabgewandten Seite der Schwenkachse angeordnet sein.

Besonders bevorzugt kann die Schneidvorrichtung zwei Federelemente umfassen, welche auf einer reifenabgewandten Seite der Schwenkachse in einer Richtung im Wesentlichen parallel zur Rotationsachse des Reifens (zwischen einem oberen und einem relativ dazu drehbaren unteren Teil der Schneidvorrichtung) angeordnet sind und dabei zwischen sich jeweils einen Teil des Schneidkopfs und/oder der Abstützvorrichtung federnd in eine Neutralstellung zurückstellen, wenn die LaufflächenOberfläche der Abstützvorrichtung die Neutralstellung entsprechend freigibt, d.h. wenn sich das Messer z.B. an einer Position befindet, an der die horizontale Tangente an die Laufflächenoberfläche des Reifens gerade wieder parallel zur Rotationsachse des Reifens verläuft.

Mit der federnd gelagerten, mechanischen Messerführung der Schneidvorrichtung mithilfe von federnd gelagerten Abstütz- bzw. Andruckwalzen, welche beim Schneiden in Druckkontakt mit der Lauffläche des Reifens stehen und sich mit der Lauffläche bzw. mit dem Reifen, hier z.B. dem LKW-Reifen mitdrehen, ggf. auch über die Lauffläche geschoben werden, wird dafür gesorgt, dass das Messer der Oberfläche der Lauffläche des Reifens folgend passend radial bzw. normal/senkrecht geneigt ausgerichtet wird, also eine automatische, kontinuierliche Neigungsanpassung des Messers passend zur Laufflächenoberfläche des Reifens erfolgt. Das Messer steht somit beim Nachschneiden einer Rille des Profils des Reifens stets radial bzw. senkrecht/lotrecht (mit seiner "Schneidkopfachse") zur Laufflächenoberfläche. Es wird noch einmal darauf hingewiesen, dass die Schwenkbewegung des Schneidkopfs im Betrieb der Reifenschneidemaschine zeitweise blockiert werden kann mittels der beschriebenen Schwenkarretierung. Vorzugsweise kann zum Schneiden von Querrillen, insbesondere Blocköffnungen, die Schwenkarretierung aktiviert sein, wobei zum Schneiden von Längsrillen die Schwenkbewegung bzw. das Auspendeln des Schneidkopfs freigegeben ist. Dadurch lassen sich für beide Rillentypen möglichst gute Ergebnisse mit demselben Schneidkopf erzielen.

Vorzugsweise kann der Schneidkopf, insbesondere das Messer innerhalb des Schneidkopfs, z.B. zusätzlich zur oben beschriebenen federnden Lagerung um die Schwenkachse, axial in einer Schnitttiefenrichtung (d.h. in einer Richtung, in die das Messer in eine Rille eines nachzuschneidenden Reifenprofils hineingedrückt wird) federnd gelagert sein. Das Messer kann also, insbesondere in Kombination mit einer linearen Beweglichkeit, längs der Schneidkopfachse federnd gelagert sein. Somit kann das Messer bei zu hohen Andruckkräften bzw. Kräften, welche ungewollte Verformungen hervorrufen könnten, vorzugsweise ab einer Kraft von mehr als 70 N, ein wenig eingefedert werden und damit entsprechend federnd nachgeben. Damit wird verhindert, dass das Messer zu viel Druck ausgesetzt wird, z.B. wenn der Bediener das Messer zu stark gegen den Reifen drückt.

Der Schneidkopf kann, wie beschrieben, einen axial verstellbaren Schnitttiefeneinsteller sowie einen Schnittrichtungseinsteller bzw. Schnittwinkeleinsteller für das Messer umfassen, welche vorzugsweise auch kombiniert in einer Schneidkopfachse, hier einer Längsachse des Schneidkopfs, einstellbar sind. Zum Schnittwinkeleinsteller kann dabei ein (Elektro-)Motor gehören, z.B. ein Schrittmotor samt Keilriemen, welcher zumindest das Messer, z.B. bei einer Zick-Zack-Rille am Ende einer "Zacke" aus einer Erstreckungsrichtung dieser Zacke in eine Erstreckungsrichtung der nächsten, schräg dazu verlaufenden "Zacke", um die Schneidkopfachse umschwenkt. Dadurch kann auch der Schneidkopf selbst geschwenkt werden. Das bedeutet, der Schnittwinkeleinsteller stellt den "Gierwinkel" des Messer in die gerade vorliegende Verlaufsrichtung der Rille ein, also in welche Richtung das Messer in die Lauffläche schneidet. Bei einer Zick-Zack-Rille wird das Messer also immer nach einem kurzen Abschnitt zum jeweils anderen Gierwinkel geschwenkt. Bei einer wellenförmigen Rille kann z.B. während der Rotation des Reifens das Schwenken des Messers um die Schneidkopfachse gemäß einer Sinusfunktion oder dergleichen erfolgen. Indem der Schnittrichtungseinsteller bzw. Schnittwinkeleinsteller mit einem entsprechenden zeitlich beliebigen Schwenkablauf programmiert wird bzw. aus dem Speicher, z.B. der Steuervorrichtung, ein entsprechendes Schnittrillenmuster gewählt wird, kann ein beliebiges Schnittrillenmuster in die Lauffläche (nach-)geschnitten werden. Zusätzlich kann der Schnittwinkeleinsteller dazu genutzt werden, um das Messer zum Schneiden von Querrillen, insbesondere Blocköffnungen, passend auszurichten, so dass Querrillen mit einem bestimmten Winkel geschnitten werden (bezogen auf die Längsrichtung der Lauffläche). Beim Schneiden von Querrillen ist es bevorzugt, dass der eingestellte Schnittwinkel bei mehreren aufeinanderfolgenden Querrillen konstant bleibt. Dann kann beim Wechsel zwischen zwei Querrillen nur eine Linearbewegung des Messers erfolgen.

Vorzugsweise kann die Schneidvorrichtung über Andruckmittel und/oder Zugmittel verfügen, die den Schneidkopf, vorzugsweise in einer im Wesentlichen horizontalen Richtung, d.h. in einer Axialrichtung bzw. Schnitttiefenrichtung des Schneidkopfs der Schneidvorrichtung, gegen den Reifen drücken bzw. ziehen. Die Andruckmittel können z.B. einen pneumatisch, hydraulisch oder motorisch betriebenen Zylinder, Federsysteme oder dergleichen umfassen. Die Zugmittel können z.B. einen Schrittmotor, einen Motor mit Riementrieb, eine Spindelachse mit Antrieb (bzw. Kugelrollspindel), einen Kettenantrieb, eine Zahnstange mit Zahnrad oder dergleichen umfassen. Auch Kombinationen daraus sind möglich.

Bevorzugt kann der Schneidkopf der Schneidvorrichtung auf einem Schlitten entlang einer Traversenschiene in einer Richtung parallel zur Rotationsachse des Reifens innerhalb der Schneidvorrichtung beweglich gelagert sein. Der Schlitten kann beispielsweise Gleitstangen umfassen, welche in Gleitführungen gleitend gelagert sind. Besonders bevorzugt kann der Schneidkopf dabei um die Schwenkachse relativ zum Schlitten bzw. relativ zum Reifen schwenkbar im Schlitten aufgenommen sein. Dadurch lässt sich das Messer in eine Position zum Nachschneiden einer der mehreren typischerweise in Reifen nebeneinander ausgebildeten, z.B. geradlinigen oder gezackten Längsrillen oder Querrillen bringen.

Die Reifenschneidemaschine kann eine Reifenaufnahme mit einem Zuführschlitten zum Einfädeln der Felge des Reifens auf die Antriebswelle umfassen. Die Antriebswelle kann höhenverstellbar sein. Alternativ oder zusätzlich kann die Reifenaufnahme Hubmittel umfassen, vorzugsweise in Form eines Scherenhubtisches, z.B. mit einem hydraulischen oder pneumatischen Zylinder, um einen Reifen auf die Höhe der Antriebswelle der Reifenaufnahme anzuheben. Prinzipiell kann die Reifenaufnahme aber auch selbst über zusätzliche Positionierungsmittel verfügen, um den Reifen geeignet für den (Nach-)Schneidvorgang des Profils des Reifens zu positionieren, z.B. also in eine jeweilige gewünschte Startposition zu bringen, in der dann direkt oder zumindest nahezu direkt mit dem Schneiden einer Rille begonnen werden kann.

Besonders bevorzugt kann die Reifenschneidemaschine zusätzlich eine Kühlvorrichtung mit zumindest einem Kühlkanal und zumindest einem Luftauslass umfassen, um das Messer der Schneidvorrichtung im Schneidbetrieb mittels eines Gasstroms, insbesondere eines Luftstroms, zu kühlen.

Besonders bevorzugt kann die Reifenschneidemaschine zwei Luftauslässe aufweisen, um das Messer jeweils zielgerichtet bzw. fokussiert an einer Eintauchstelle eines jeden Schenkels des Messers möglichst dicht an der Eintauchstelle an einem aus dem Reifen herausstehenden Messerteil mit einem jeweiligen Gasstrom, insbesondere Luftstrom, zu kühlen. Gegenüber Konstruktionen aus dem Stand der Technik hat dies den Vorteil, dass damit keine Kühlflüssigkeit benötigt wird (welche sonst z.B. in der Mitte zwischen die beiden Schenkel des Messers eingebracht wird) und dass keine Reinigung des Reifens im Nachgang erforderlich ist.

Damit lässt sich zudem der nicht im Gummi des Reifens befindliche Teil des Messers bzw. der herausstehende Messerteil (oberhalb bzw. außerhalb der Laufflächenoberfläche) möglichst effektiv kühlen. Mit dem herausstehenden Messerteil ist der Teil des Messers gemeint, der während des Schneidens aus dem Reifen herausragt, also nicht eintaucht. Dies sorgt dafür, dass die eingesetzten Messer deutlich länger intakt bleiben und nicht so oft gewechselt werden müssen, wie dies ohne gezielte Luftkühlung der Fall wäre. Eine solche Luftkühlung ist insbesondere dann von Vorteil, wenn das Messer, wie bevorzugt, beim Schneiden nicht vollständig, also nur teilweise in den Reifen bzw. in die Lauffläche des Reifens eintaucht. Besonders dann unterstützt die zusätzliche Luftkühlung die Haltbarkeit des Messers, da dieses nicht nur im Reifen durch das Gummi, sondern auch außerhalb zusätzlich gekühlt wird. Ein derart gekühltes Messer kann demnach länger durchhalten, d.h. intakt bleiben, als ein ungekühltes Messer.

Bevorzugt kann die Reifenschneidemaschine für einen Betrieb mit 230V ausgebildet sein. Dadurch wird kein Starkstromanschluss benötigt, was speziell für kleinere Betriebe, wie z.B. Einzelunternehmer bzw. Selbständige, oder beispielsweise bei einem mobilen Einsatz von Vorteil ist.

Vorzugsweise können die maximalen räumlichen Abmessungen bzw. Außenabmessungen der Reifenschneidemaschine derart gewählt sein, dass sie sich im Inneren eines herkömmlichen Transporters, d.h. eines Transporter-Laderaums mit folgenden Mindestladeraummaßen, verstauen und transportieren lässt: Länge ca. 200 cm, Breite ca. 134 cm Höhe ca. 170 cm. Darüber hinaus kann die Reifenschneidemaschine zur leichteren Verladung zum Beispiel Staplerschuhe für die Gabelzinken eines Gabelstaplers bzw. eines Hubwagens aufweisen, so dass sie sehr einfach von einem Gabelstapler in einen gängigen Transporter verladen und am Ziel auch wieder entladen werden kann.

Die Reifenschneidemaschine kann eine Bedieneinheit mit Bedienungselementen umfassen, wie z.B. ein Bedienpult mit Tasten und Hebeln und/oder ein Bedienfeld bzw. einen Touch-Display, Hebel und/oder Pedale. Das Bedienfeld könnte z.B. über ein Eingabefeld mit Tasten oder einen Touch-Display verfügen, in welchem Steuerbefehle für die Steuervorrichtung eingegeben bzw. der Steuervorrichtung, z.B. als Bedienbefehle per Hand, übergeben werden können. Zusätzlich kann die Reifenschneidemaschine aber vorzugsweise auch mittels zumindest eines Pedals für eine Bedienung per Fuß ausgebildet sein, um die Reifenschneidemaschine mittels der Steuervorrichtung zu steuern, insbesondere so, dass ein ausgewähltes Profil mit einer gewünschten Profilform und Profiltiefe in eine Lauffläche des Reifens (nach-)geschnitten wird. Besonders bevorzugt können die Bedieneinheit und die Steuervorrichtung derart ausgebildet sein, dass zum Start und/oder zur Aufrechterhaltung des Schneidbetriebs stets beide Hände entsprechende Bedienelemente, wie z.B. Tasten oder Hebel oder Joysticks, insbesondere die beschriebenen Gashebel-Zustimmtaster, betätigt halten müssen. Das bedeutet, die Reifenschneidemaschine kann bevorzugt mit einer sogenannten Zweihandschaltung ausgestattet sein.

Ergänzend wird auf EP 4 265 403 A1 hingewiesen, in der eine ähnliche Reifenschneidemaschine beschrieben ist. Prinzipiell können die darin offenbarten Weiterbildungen, auch hinsichtlich der Ausführungsbeispiele, in der hier beschriebenen Reifenschneidemaschine realisiert sein, sofern sie nicht in Widerspruch zur hier beschriebenen Lehre sind.

Die Reifenschneidemaschine kann, wie erwähnt, als optionale Komponente ein Spannsystem für einen felgenlosen Reifen haben. Die nachfolgend beschriebenen Weiterbildungen des Spannsystems können bei einem Spannsystem als Teil der Reifenschneidemaschine und/oder bei einem Spannsystem an sich bzw. in Alleinstellung realisiert sein. Sofern das Spannsystem Teil der Reifenschneidemaschine ist, kann diese einige oder alle der zuvor beschriebenen Weiterbildungen aufweisen.

Vorzugsweise ist das Spannsystem so realisiert, dass der Spannkonus einen ersten Kolbenabschnitt hat, der zumindest teilweise durch eine Grundfläche des Spannkonus gebildet ist. Bevorzugt kann ein Boden des Spannkonus (Konusboden) zumindest einen Teil des ersten Kolbenabschnitts bilden. Der erste Kolbenabschnitt kann durch die Grundfläche bzw. den Konusboden selbst und durch Anbauten im Bereich des Konusbodens ausgebildet sein. Der Spannkonus hat vorzugsweise die äu-ßere Form eines Kegelstumpfs. Bevorzugt hat der Spannkonus, insbesondere der Kegelstumpf, in seinem Innern einen Hohlraum, der sich von der Grundfläche bis zu einer gegenüberliegenden Deckfläche erstreckt. Der vorzugsweise zylinderartige Hohlraum durchdringt den Kegelstumpf bevorzugt in Längsrichtung vollständig. Unter der Längsrichtung des Spannkonus wird die Richtung orthogonal zur Grundfläche verstanden. Der Hohlraum und/oder die Längsrichtung verläuft vorzugsweise koaxial zu einer Rotationsachse des Spannkonus bzw. Kegelstumpfs.

Vorzugsweise ist der zweite Kolbenabschnitt des Spannkonus durch den ersten Kolbenabschnitt (mit-)gebildet. Entsprechend kann derselbe Bereich des Spannkonus den ersten Kolbenabschnitt und gleichzeitig den zweiten Kolbenabschnitt bilden. Insbesondere können der erste und der zweite Kolbenabschnitt in demselben Kolben des Spannkonus ausgebildet sein. Vorzugsweise ist der zweite Kolbenabschnitt (nur) im Hohlraum des Spannkonus angeordnet und füllt einen Bereich zwischen einer Innenwand des Spannkonus, die den Hohlraum bildet, und einer Hohlwelle des Spannsystems (vollständig) aus. Der zweite Kolbenabschnitt kann durch ein Element in Form eines Kreisrings ausgebildet sein. Das kreisringförmige Element und/oder der zweite Kolbenabschnitt kann vorzugsweise als separates Teil hergestellt und anschließend mit dem Konusboden verbunden werden, z.B. verschraubt. Vorteilhafterweise kann eine Seite des kreisringförmigen oder kreisringartigen Elements (nur) den zweiten Kolbenabschnitt bilden, wobei eine andere, gegenüberliegende Seite des(-selben) kreisringförmigen Elements einen Teil des ersten Kolbenabschnitts bildet.

Vorzugsweise sind der erste Kolbenabschnitt und der zweite Kolbenabschnitt, bezogen auf die Längsrichtung des Spannkonus, bewegbar auf einer Hohlwelle des Spannsystems gelagert, wobei die Hohlwelle den Spannkonus führt. Entsprechend kann der gesamte Spannkonus, d.h. mitsamt der beiden Kolbenabschnitte, relativ zur Hohlwelle pneumatisch bewegt werden. Bevorzugt haben der erste und/oder der zweite Kolbenabschnitt eine (mittige) Aussparung bzw. Öffnung, wobei der jeweilige Kolbenabschnitt darüber (in Längsrichtung) bewegbar und abgedichtet auf der Hohlwelle gelagert ist. Bevorzugt ist der Spannkonus, bezogen auf eine Rotationsrichtung der Hohlwelle im Betrieb, unbeweglich gegenüber der Hohlwelle und/oder der Antriebswelle. Das bedeutet, dass der Spannkonus im Betrieb mitrotiert und gleichzeitig in Längsrichtung bewegbar ist. Die Hohlwelle kann Teil einer Antriebswelle des Spannsystems sein oder kann, zumindest abschnittweise, die Antriebswelle bilden. Die Antriebswelle kann eine Antriebsachse des Spannsystems bilden. Die Antriebsachse ist vorzugsweise koaxial zu einer Rotationsachse eines Reifens, der auf die Trommel aufgespannt ist. Je nach Ausführung, kann die Antriebsachse des Spannsystems durch die Antriebsachse der Reifenschneidemaschine gebildet sein. Dann kann das Spannsystem z.B. als Teil einer Reifenaufnahme der Reifenschneidemaschine realisiert sein.

Der Pneumatikantrieb hat vorzugsweise eine erste Druckkammer, die durch den ersten Kolbenabschnitt (als bewegliches Teil) zusammen mit einem umgebenden Gehäuse des Pneumatikantriebs gebildet ist. Diese Druckkammer, insbesondere der erste Kolbenabschnitt, z.B. der Konusboden, kann mit Druckluft beaufschlagt werden, um den Spannkonus linear zu bewegen (auszufahren), wobei die Trommelsegmente ausgefahren werden. Dadurch kann ein Reifen auf die Trommel aufgespannt werden. Die erste Druckkammer ist bevorzugt ausschließlich außerhalb des Spannkonus ausgebildet.

Der Pneumatikantrieb hat vorzugsweise eine weitere, zweite Druckkammer, die getrennt von der ersten Druckkammer realisiert ist. Vorzugsweise kann der zweite Kolbenabschnitt (als bewegliches Teil) zusammen mit dem umgebenden Gehäuse des Spannkonus und der darin befindlichen Hohlwelle einen abgeschlossenen Hohlraum bzw. die erste Druckkammer bilden. Bevorzugt kann eine Innenwand des Spannkonus, die den Hohlraum im Spannkonus bildet, gemeinsam mit dem kreisringartigen Element, das den zweiten Kolbenabschnitt bildet sowie einem Dichtelement auf der Hohlwelle die zweite Druckkammer bilden. Vorzugsweise ist die Hohlwelle in der zweiten Druckkammer angeordnet und durchdringt diese der Länge nach. Folglich trennt das kreisringartige Element des Spannkonus vorzugsweise die erste und die zweite Druckkammer voneinander.

Die zweite Druckkammer ist bevorzugt ausschließlich innerhalb des Spannkonus ausgebildet. Dazu kann zumindest ein Teil der Hohlwelle innerhalb des Spannkonus angeordnet und von einem Hohlraum umgeben sein. Entsprechend kann die Hohlwelle vorzugsweise koaxial zur Rotationsachse des Spannkonus sein. In dem Hohlraum im Spannkonus kann die zweite Druckkammer des Pneumatikantriebs gebildet sein, die durch den zweiten Kolbenabschnitt begrenzt ist. Die zweite Drucckammer kann gegenüberliegend vom kreisringartigen Element bzw. vom zweiten Kolbenabschnitt, bezogen auf die Längserstreckung der Hohlwelle, von einem Dichtelement begrenzt sein, das unbeweglich gegenüber der Hohlwelle ist. Vorzugsweise kann die zweite Druckkammer mittels der Hohlwelle mit Druckluft beaufschlagt werden, um den Spannkonus linear zu bewegen (einzufahren), wobei die Trommelsegmente eingefahren werden. Dadurch kann ein Reifen von der Trommel gelöst werden. Durch das Einfahren kann der Spannkonus in eine Ruheposition bewegt werden. Vorzugsweise wird dazu nur ein bestimmter Teil vom Konusboden, der von innerhalb der zweiten Druckkammer zugänglich ist, insbesondere das kreisringförmige Element, mit Druckluft beaufschlagt.

Der Pneumatikantrieb hat vorzugsweise eine Druckluftversorgung, um die beiden Druckkammern getrennt voneinander mit Druckluft zu beaufschlagen. Vorzugsweise kann eine Antriebswelle (intern) mehrere Leitungen für Druckluft beinhalten, die mittels Drehdurchführungen mit einer externen Druckluftversorgung verbunden sind. Beispielswiese kann eine Druckleitung der Antriebswelle in die erste Druckkammer münden. Eine weitere Druckleitung der Antriebswelle kann in die Hohlwelle münden, zur Versorgung der zweiten Druckkammer. Eine andere Druckleitung der Antriebswelle kann der Trommel zugeordnet sein, um einen Innenraum eines aufgespannten Reifens mit Druckluft zu füllen.

Vorteilhafterweise kann der Pneumatikantrieb einen "Kolben-im-Kolben-Mechanismus" aufweisen. Das bedeutet, dass der zweite Kolbenabschnitt Teil des ersten Kolbenabschnitts ist und/oder (vollständig) innerhalb dessen Umfangs ausgebildet ist. Entsprechend kann der Spannkonus einen (einzigen) Kolben mit zwei Kolbenabschnitten aufweisen, wobei die jeweiligen Kolbenabschnitte eine unterschiedliche Bewegungsrichtung des Spannkonus bewirken (sobald sie beaufschlagt werden) und/oder von unterschiedlichen Druckkammern aus beaufschlagt werden. Folglich kann der Konusboden eine Doppelfunktion haben und gleichzeitig die erste Druckkammer und die zweite Druckkammer begrenzen. Vorteilhafterweise kann der Spannkonus einen doppelt wirkenden Kolben umfassen. Durch den "Kolben-im-Kolben-Mechanismus" kann der Pneumatikantrieb besonders kompakt sein. Weiter vorteilhaft kann durch den "Kolben-im-Kolben-Mechanismus" bewirkt werden, dass der Spannkonus aktiv eingefahren werden kann. Dadurch kann das Einfahren des Spannkonus und die Demontage des Reifens und damit der gesamte Prozess beschleunigt werden. Weiterhin vorteilhaft kann die Zuverlässigkeit des Spannsystems erhöht werden. Dadurch kann auf zusätzliche Mittel, die z.B. die Trommelsegmente mittels Vorspannung zusammenziehen, verzichtet werden. Letzteres kann zu Einschränkungen im Hubbereich des Spannkonus führen. Weiterhin vorteilhaft erfolgt das Einfahren und das Ausfahren des Spannkonus jeweils mittels Überdruck. Folglich muss zur Bewegung der Trommelsegmente kein Unterdruck erzeugt werden.

Vorzugsweise ist die Trommel größenverstellbar ausgebildet, so dass Reifen mit unterschiedlichem Durchmesser aufgespannt werden können. Die Trommel kann dazu ausgebildet sein, um Reifen mit einer Felgengröße von 17,5 Zoll bis 22,5 Zoll (inklusive üblicher Zwischengrößen) aufzuspannen. Vorteilhafterweise kann das Spannsystem größenvariabel sein (bezogen auf die Reifengröße). Vorteilhafterweise kann dasselbe Spannsystem dazu ausgebildet sein, um unterschiedliche Reifengrößen (im zuvor genannten Bereich) aufzuspannen, ohne Komponentenwechsel oder Demontage von Teilen des Spannsystems, d.h. modifikationsfrei. Rein beispielhaft kann ein vollständiger Hub des Spannkonus eine Änderung des äußeren Durchmessers der Trommel von bis zu 200 mm bewirken. Beispielsweise kann ein äußerer Durchmesser der Trommel zwischen 400 mm und 595 mm sein (bei einem aufgespannten Reifen). Alternativ oder zusätzlich ist die Trommel größenverstellbar ausgebildet, so dass Reifen, insbesondere Nutzfahrzeugreifen, mit unterschiedlicher Breite auf die Trommel aufgespannt werden können. Dazu kann die Trommel eine oder mehrere wechselbare Bordscheiben aufweisen. Vorteilhafterweise kann eine Breite der Trommel bzw. deren Auflagefläche für den Reifen, die orthogonal zur Umfangsrichtung ist, schrittweise mittels (austauschbarer) Bordscheiben geändert werden. Vorzugsweise können mehrere auswechselbare Bordscheiben, insbesondere gleichmäßig verteilt, entlang eines (äußeren) Umfangs der Trommel angeordnet sein. Vorteilhafterweise können dadurch Reifen mit allen gängigen Breiten von (Nutz-)Fahrzeugen aufgespannt werden.

Das Spannsystem ist vorzugsweise so ausgebildet, dass die Trommelsegmente jeweils einen Spannkamm und einen daran anschließenden Spannkeil aufweisen, wobei der Spannkeil außen auf dem Spannkonus, insbesondere gleitend, aufliegt. Das Spannsystem kann Führungsmittel aufweisen, um den jeweiligen Spannkeil längs des Spannkonus zu führen, insbesondere entlang einer Bahn. Beispielsweise kann jeweils ein Spannkeil, z.B. ein Gleitsegment, in einer Nut geführt und damit in tangentialer Richtung fixiert oder stabilisiert sein, wobei die Nut in bzw. auf einer Gleitfläche des Spannkonus ausgebildet ist. Entsprechend kann der jeweilige Spannkeil bei einer Bewegung des Spannkonus entlang der Hohlwelle, z.B. in einer Nut, den Spannkonus hinaufgleiten oder hinabgleiten. Vorteilhafterweise sind die Spannkeile durch die (beidseitige) Führung gegen seitliches Verkippen gesichert. Beispielsweise kann zu beiden Seiten eines Spannkeils jeweils ein Führungselement aus gehärtetem Stahl angeordnet sein, z.B. Flacheisen.

Alternativ oder zusätzlich kann das Spannsystem Führungsmittel aufweisen, um den jeweiligen Spannkeil in einer Richtung quer zur Längsrichtung des Spannkonus, insbesondere in radialer Richtung, zu führen. Vorzugsweise kann in radialer Richtung (bezogen auf den Spannkonus) eine Führung des jeweiligen Spannkeils, z.B. eines Gleitsegments, durch eine in Längsrichtung (des Spannkonus) formschlüssige Führung erfolgen. Beispielsweise kann ein jeweiliger Spannkeil mittels einer Schwalbenschwanzführung geführt sein. Entsprechend kann der jeweilige Spannkeil bei einer Bewegung des Spannkonus entlang der Hohlwelle in radialer Richtung stabilisiert bzw. geführt sein. Beispielsweise kann eine Schwalbenschwanzführung aus gehärtetem Messing vorgesehen sein. Vorteilhafterweise kann das Spannsystem eine Gleitführung für die jeweiligen Trommelsegmente haben, um eine Führung längs oder in einer Richtung quer zur Längsrichtung vom Spannkonus oder für eine Kombination daraus haben. Vorteilhafterweise kann eine solche Gleitführung technisch relativ einfach realisiert sein.

Der Spannkonus, insbesondere dessen Gleitfläche für die Spannkeile, kann eine Oberfläche haben, die einen Winkel von etwa 20° bezogen auf die Rotationsachse des Spannkonus bildet. Vorzugsweise haben die Spannkeile eine zur Neigung des Spannkonus komplementäre (geneigte) Kontaktfläche. Vorzugsweise ist eine vom Spannkonus wegweisende Seite der Spannkeile parallel zur Hohlwelle ausgebildet. Die Spannkeile können vorzugsweise aus gehärtetem Werkzeugstahl sein. Die Spannkeile sind vorzugsweise endseitig, vom Spannkonus wegweisend, jeweils mit einem Spannkamm verbunden. Benachbarte Spannkämme sind vorzugsweise so ausgebildet, dass die einzelnen Kammglieder ineinandergreifen können. Die Spannkämme bilden die Auflagefläche für den Reifen, z.B. für den Reifenwulst. Bei einer bevorzugten Ausführungsform hat das Spannsystem zehn solcher Trommelsegmente, die jeweils separat ausgebildet sind. Die Trommelsegmente können miteinander die Trommel des Spannsystems bilden.

Durch eine Beaufschlagung der ersten Druckkammer, insbesondere des ersten Kolbenabschnitts, mit Druckluft, kann der Spannkonus entlang der Hohlwelle in eine erste Richtung bewegt werden, wobei die Spannkeile den Spannkonus hinaufgleiten, so dass die Spannkämme ausgefahren werden, d.h. ein radialer Abstand der Trommelsegmente zur Hohlwelle wird vergrößert. Dadurch wird ein Durchmesser und/oder ein Umfang der Trommel vergrößert. Dadurch kann ein Reifen aufgespannt werden. Dadurch, dass die Verfahrstrecke des Spannkonus entlang der Hohlwelle (individuell) gesteuert werden kann, ist es möglich, unterschiedliche Durchmesser der Trommel einzustellen und im Betrieb zu halten. Vorteilhafterweise kann der Spannkonus schrittweise oder stückweise entlang der Hohlwelle bewegt werden (in beide Richtungen).

Durch eine Beaufschlagung der zweiten Druckkammer, insbesondere des zweiten Kolbenabschnitts, mit Druckluft, kann der Spannkonus entlang der Hohlwelle in eine zweite, entgegengesetzte Richtung bewegt werden, wobei die Spannkeile den Spannkonus hinabgleiten, so dass die Spannkämme eingefahren werden, d.h. ein radialer Abstand der Trommelsegmente zur Hohlwelle wird verkleinert. Dadurch kann ein Reifen von der Trommel gelöst werden.

Vorzugsweise hat die Trommel ein Dichtelement, das den Spannkämmen außen aufliegt, insbesondere entlang des gesamten Umfangs der Trommel. Beispielsweise kann eine Gummibandage oder ein Gummiring der Trommel außen aufliegen, um einen Innenraum eines montierten Reifens gegenüber den Spannkämmen (luftdicht) abzudichten. Ein Gummiring kann z.B. eine Stärke von 10 mm haben. Vorteilhafterweise kann dadurch ein montierter Reifen mit einem bestimmten Luftdruck gefüllt werden, was sich günstig auf den Schneidvorgang auswirkt, da ein benötigter Gegendruck für eine Abstützvorrichtung bzw. ein Messer der Reifenschneidemaschine vorhanden ist. Vorteilhafterweise stellt das Spannsystem damit eine Spannvorrichtung für einen felgenlosen Reifen in Kombination mit einer Abdichtvorrichtung bereit.

Vorteilhafterweise kann das Spannsystem eine kombinierte Lösung bieten, mit der Reifen sowohl ohne als auch mitsamt Felge aufgespannt und/oder bearbeitet werden können. Entsprechend ist das Spannsystem vorzugsweise dazu ausgebildet, um mittels der Trommel einen felgenlosen Reifen an einer Antriebswelle des Spannsystems anzuordnen und kann zusätzlich Befestigungsmittel für eine Felge mit aufgezogenem Reifen haben. Durch die Befestigungsmittel kann also eine Felge mit Reifen an der Antriebswelle des Spannsystems drehbar angeordnet werden. Beispielsweise können endseitig an einer Antriebwelle Befestigungsmittel für eine Felge angeordnet sein, wobei (einwärts der Antriebswelle) die Trommel angeordnet ist. Vorteilhafterweise kann das Spannsystem, insbesondere die Trommel, bezüglich des Umfangs so dimensioniert sein und/oder so gesteuert werden, dass die Trommel in eine Felge eintauchen kann, um die Felge an der Antriebswelle zu montieren. Vorteilhafterweise stellt das Spannsystem eine Universallösung bereit, wobei ein Nutzer des Spannsystems wahlweise Reifen mit Felgen oderfelgenlose Reifen aufspannen kann, ohne das Spannsystem zu modifizieren. Dadurch werden die Anwendungsmöglichkeiten für einen Nutzer erheblich erweitert.

Das Spannsystem umfasst, wie beschrieben, eine steuerbare Antriebswelle, um die Trommel und den Spannkonus, optional weitere Elemente des Spannsystems, in Rotation zu versetzen. Dadurch kann ein aufgespannter Reifen geschnitten werden. Bei dieser Rotation ist auch die Hohlwelle in Rotation. Je nach Ausführung, kann die Antriebswelle des Spannsystems durch eine Antriebswelle einer Reifenschneidemaschine gebildet sein. Dann kann der Betrieb des Spannsystems, insbesondere der Pneumatikantrieb, durch eine Steuervorrichtung der Reifenschneidemaschine gesteuert werden. Es ist aber auch möglich, dass das Spannsystem unabhängig von einer Reifenschneidemaschine realisiert ist, wobei das Spannsystem eine (eigene) Antriebswelle umfasst, um einen aufgespannten Reifen zu rotieren. Entsprechend kann das Spannsystem (eigene) steuerbare Antriebsmittel für die Antriebswelle haben und eine (eigene) Druckluftversorgung für den Pneumatikantrieb haben. Weiterhin kann das Spannsystem eine (eigene) Steuereinrichtung haben, um den Betrieb des Spannsystems, insbesondere den Pneumatikantrieb, zu steuern.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
Figur 1 eine perspektivische Übersichtsdarstellung eines Ausführungsbeispiels einer erfindungsgemäßen Reifenschneidemaschine,
Figur 2 eine schematische Draufsicht auf ein Ausführungsbeispiel einer Reifenschneidemaschine gemäß der Erfindung,
Figuren 3 bis 6 unterschiedliche und zum Teil vergrößerte Ansichten eines Schneidkopfs einer Reifenschneidemaschine gemäß der Erfindung,
Figur 7 eine perspektivische Darstellung von Teilen einer Schneidvorrichtung einer Reifenschneidemaschine gemäß der Erfindung,
Figur 8 Detailansichten einer Schwenkarretierung eines Schneidkopfs einer Reifenschneidemaschine gemäß der Erfindung,
Figur 9 schematische Darstellungen eines Schneidkopfs einer Reifenschneidemaschine gemäß der Erfindung,
Figur 10 eine Detailansicht einer Transportsicherung einer Reifenschneidemaschine gemäß der Erfindung,
Figur 11 eine schematische Darstellung eines Teils einer Reifenschneidemaschine gemäß der Erfindung,
Figur 12 einen schematischen Ablauf zum Schneiden von Querrillen,
Figuren 13 bis 15 unterschiedliche und zum Teil vergrößerte Ansichten eines Spannsystems gemäß der Erfindung.

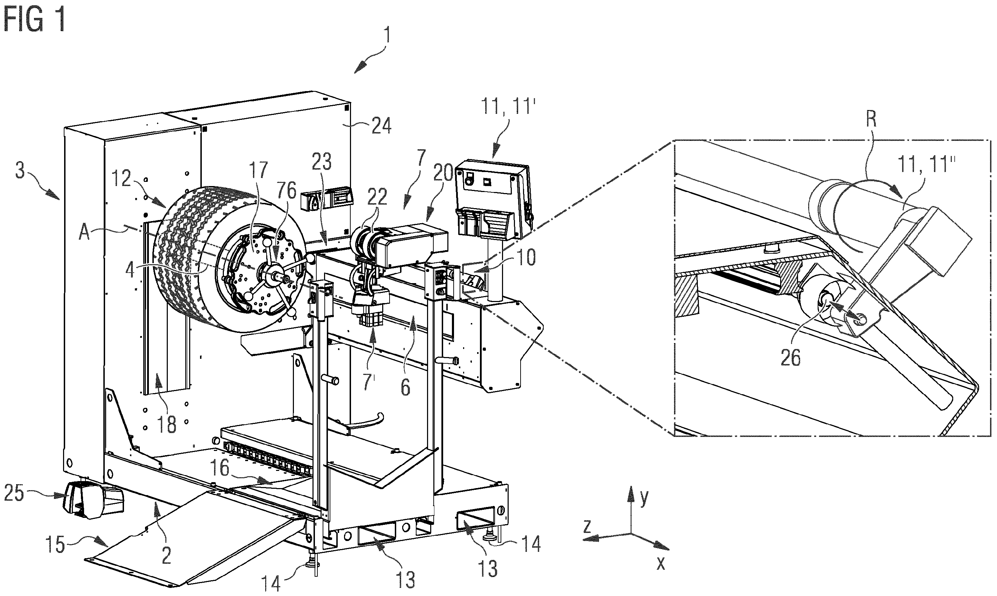

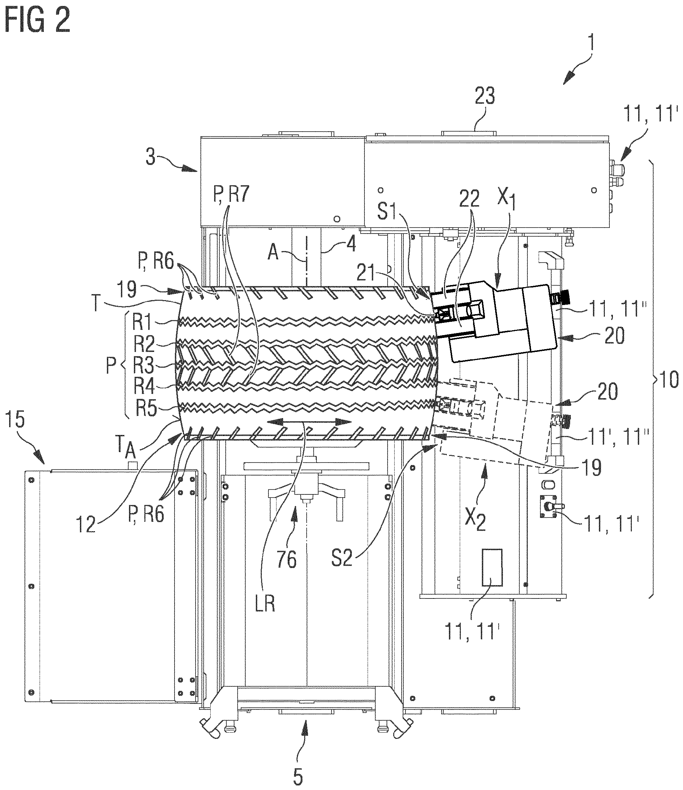

In Figur 1 ist eine perspektivische Darstellung einer Reifenschneidemaschine gezeigt und in Figur 2 eine schematische Draufsicht auf eine Reifenschneidemaschine. Die Reifenschneidemaschinen in den Figuren 1 und 2 sind ähnlich aufgebaut, so dass die beiden Figuren gemeinsam beschrieben werden. Allerdings sind in Figur 2 einige Details der Reifenschneidemaschine nicht gezeigt. Die Reifenschneidemaschine 1 in Figur 1 hat eine rechteckige Bodenplatte 2, an die sich auf einer hier in Breitenrichtung x hinteren Seite ein weitestgehend geschlossenes Gehäuses 3, auch bezeichnet als Aufbau 3, anschließt, welches sich schrankförmig nach oben in einer Höhenrichtung y bzw. in y-Richtung sowie über die gesamte Tiefe (in z-Richtung) der Bodenplatte 2 erstreckt. Das Gehäuse 3 verbreitert die Bodenplatte 2 ein wenig (in Figur 1 nach hinten). Das Gehäuse 3 ist hier höchstens in etwa mannshoch mit einer maximalen räumlichen Abmessung (y-Richtung) von ca. 170 cm. Das Gehäuse 3 bzw. der Aufbau 3 nimmt in seinem Inneren zumindest jeweils ein maschinenseitiges Ende der wesentlichen mechanischen und elektronischen Komponenten der Reifenschneidemaschine 1 auf. Damit ist gemeint, dass sich zwar ein statischer Teil der betreffenden Komponenten zumindest teilweise innerhalb des Gehäuses 3 befindet, jedoch ein dynamischer Teil, wie z.B. eine Antriebswelle 4 einer Reifenaufnahme 5, mit welcher ein nachzuschneidender Reifen 12 gehalten und gedreht wird, aus dem Gehäuse 3 über die Bodenplatte 2 hinausragt.

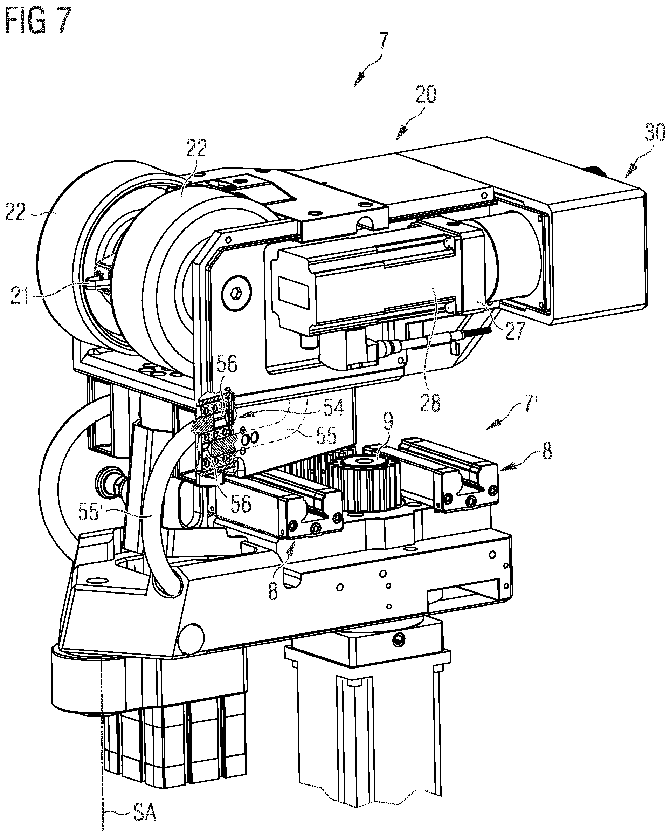

Aus dem Gehäuse 3 ragt eine Traverse bzw. ein Ausleger mit einer Traversenschiene 6 hinaus, in bzw. relativ zu welcher unter anderem eine später noch beschriebene Schneidvorrichtung 7 verfahrbar ist. Die Traversenschiene 6 umfasst dazu zwei Gleitstangen (nicht gezeigt), an welchen jeweils Gleitführungen 8 der Schneidvorrichtung 7 gleitend gelagert sind. Zwischen den Gleitstangen ist eine Zahnstange (nicht gezeigt) mit Zähnen angeordnet, in welche ein motorisch ansteuerbares Zahnrad 9 der Schneidvorrichtung 7 zur Relativbewegung der Schneidvorrichtung 7, insbesondere eines Schneidkopfs 20 der Schneidvorrichtung 7, relativ zur Traversenschiene 6 eingreift. Einige der genannten Komponenten der Schneidvorrichtung 7 sind in Figur 7 gezeigt.

In Figur 1 und 2 ist gezeigt, dass am Gehäuse 3 ein Bedienfeld 10 mit einer Bedieneinheit 11 angeordnet ist, die mehrere Steuer- bzw. Bedienelemente 11', 11" umfasst, z.B. ein Touch-Display 11', einen Joystick 11' und Gashebel-Zustimmtaster 11". Das Bedienfeld 10 ragt auf einer bodenplattenseitigen Stirnseite des Gehäuses 3 aus dem Gehäuse 3 heraus, verdeckt und schirmt die Traversenschiene 6 ab und bildet eine "Bedienerseite" der Reifenschneidemaschine 1, von welcher aus ein Bediener die Reifenschneidemaschine 1 steuert. Die Bedieneinheit 11, insbesondere die einzelnen Bedienelemente 11', 11", sind mit einer nicht näher gezeigten Steuervorrichtung 24 gekoppelt, die im Gehäuse 3 angeordnet ist und den Betrieb der Reifenschneidemaschine 1 steuert. Lediglich die Bestückung der Reifenschneidemaschine 1, insbesondere der Reifenaufnahme 5, mit Reifen 12 findet auf einer dem Bedienfeld 10 gegenüberliegenden Seite statt. Zusammen bilden der Gehäuse 3 und die Bodenplatte 2 im weitesten Sinne ein "L".

Die Bodenplatte 2, welche von der Größe, d.h. dem Grundriss, nämlich ca. 1600 mm x 1030 mm, her grob im Bereich der Größenordnung einer handelsüblichen Transportpalette liegt, umfasst bodenseitig Staplerschuhe 13, um die Reifenschneidemaschine 1 mittels eines Hubwagens oder eines Gabelstaplers leicht transportieren zu können, also z.B. in einen Transporter oder auf eine Ladefläche eines Lastkraftwagens (kurz "LKW") verladen zu können. Anders als hier gezeigt, kann die Bodenplatte 2 stirnseitig auf der dem Gehäuse 3 gegenüberliegenden Stirnseite eine Öse haben, z.B. eine Schwerlastöse, um sie unabhängig davon befestigen, heben oder ziehen zu können. Eine solche Öse kann auch dazu genutzt werden, eine demontierte Bodenplatte 2 vor dem Zusammenbau mit dem Gehäuse 3 separat hochheben und transportieren zu können. Eine weitere Schwerlastöse (um bei Bedarf ggf. auch das Gehäuse 2 separat transportieren zu können) kann sich z.B. mittig auf der Oberseite des Gehäuses 3 befinden. Die Bodenplatte 2 steht im bestimmungsgemäß abgestellten Zustand auf vier in der Höhe individuell einstellbaren Füßen 14, um sie nach einer Anlieferung oder einem Aufbau vor Ort auf einer ebenen oder auch leicht unebenen Fläche auf einfache Weise entsprechend "im Wasser" lotrecht ausrichten zu können.

Im "Innenraum" zwischen den beiden Schenkeln des "L", also im Wesentlichen oberhalb der Bodenplatte 2 bzw. neben dem Gehäuse 3 befindet sich der eigentliche Arbeitsbereich der Reifenschneidemaschine 1. Auf diesen im Wesentlichen quaderförmigen "Arbeitsraum" sind sämtliche (auch die nachfolgend noch beschriebenen) Komponenten in ihrer Größe beschränkt, d.h. die Reifenschneidemaschine 1 ist sehr kompakt aufgebaut und ragt (bis auf eine noch beschriebene Rampe 15) nicht über die Grundfläche der Bodenplatte 2 samt seitlichem Gehäuse 3 hinaus. Auch der Reifen 12 erstreckt sich bei der Bearbeitung nicht über diesen Arbeitsbereich hinaus, denn er wird für die Bearbeitung nur aus einer Beladungs- bzw. Bestückungsposition (nicht dargestellt) auf der Bodenplatte 2 in eine angenehme, vorteilhafte Bearbeitungshöhe angehoben bzw. verfahren. Hierzu befindet sich eine seitliche Rampe 15 an der Bodenplatte 2, um den Reifen 12 auf die Bodenplatte 2 zu rollen und in der Reifenaufnahme 5 zu befestigen. Die Rampe 15 ist mittels eines Scharniers hoch- und herunterklappbar gestaltet. Damit steht die Rampe 15 im hochgeklappten Zustand nicht über die Bodenplatte 2 hinaus. Im heruntergeklappten Zustand in Figur 1 und 2 kann über diese der Reifen 12 in einen muldenförmigen Zuführschlitten 16 der Reifenaufnahme 5 gerollt werden.

Der Zuführschlitten 16 ist relativ zur Bodenplatte 2 in der Bodenplatte 2 rollend gelagert und lässt sich in Breitenrichtung x in Richtung Gehäuse 3 verschieben, um den Reifen 12 über eine entsprechend abgesenkte, aus dem Gehäuse 3 herausstehende Antriebswelle 4 der Reifenaufnahme 5 zu stülpen, bis der Reifen 12 in einer hinteren Position nahe des Gehäuses 3 an einem Flansch oder Anschlagteller der Antriebswelle 4 anschlägt. In dieser Position wird der Reifen 12 dann mittels eines Spannsterns 17 der Reifenaufnahme 5 und einer Reifenschnellspannmutter 76 verdrehsicher befestigt.

Der Reifen 12 wird exakt so auf der Antriebswelle 4 der Reifenaufnahme 5 platziert, dass die Antriebswelle 4 mit einer Rotationsachse A des Reifens 12 übereinstimmt, d.h. koaxial dazu ist. Die Rotationsachse A ist koaxial zu einer Antriebsachse A der Reifenaufnahme 5. Mittels der Antriebswelle 4 lässt sich der Reifen 12 beliebig schnell drehen, indem die Antriebswelle 4 mithilfe von Antriebsmitteln (nicht gezeigt) angetrieben wird, welche sich innerhalb des Gehäuses 3 befinden. Bei diesem Ausführungsbeispiel weist die Reifenaufnahme 5 Hubmittel 18 auf, welche die gesamte Antriebswelle 4 samt Reifen 12 anheben und absenken können.

Zu den weiteren Komponenten der Reifenschneidemaschine 1 zählt eine Schneidvorrichtung 7. Diese umfasst einen Schneidkopf 20 mit einem Messer 21 zum (Nach-)Schneiden von Rillen R₁, R₂, R₃, R₄, R₅, R₆, R₇ des Reifens 12 sowie einer Abstützvorrichtung 22 zur Führung des Messers 21 in einer gewünschten Eindringtiefe bzw. Schnitttiefe in einer Lauffläche T des Reifens 12. Das hat den Effekt, dass das Messer 21 stets gleichweit in eine Laufflächenoberfläche T_{A} der Lauffläche T eindringt, also weder zu flach noch zu tief einschneidet und damit auch bei einem ungleichmäßigen Verlauf der Laufflächenoberfläche T_{A} der Lauffläche T eine gleichbleibend tiefe Rille R₁-R₇ entsteht bzw. erzeugt wird. In Figur 2 ist schematisch gezeigt, dass die Lauffläche T des Reifens 12 in der Laufflächenoberfläche T_{A} fünf Längsrillen R₁-R₅ hat, die im Wesentlichen längs einer Längsrichtung LR der Lauffläche T verlaufen bzw. orthogonal zur Rotationsachse A sind. In der Lauffläche T sind weiterhin Querrillen R₇ in einem mittleren Bereich der Lauffläche T ausgebildet, die von einer mittleren Längsrille R₃ beidseitig ausgehen. Weiterhin sind in der Laufflächenoberfläche T_{A} in beiden Randbereichen 19 des Reifens 12, die als Reifenschulter 19 bezeichnet werden, Blocköffnungen R₆ angeordnet, die zu einer Reifenflanke hin münden. Die Rillen R₁-R₇ bilden gemeinsam ein Profil P des Reifens 12. Es wird darauf hingewiesen, dass die Anzahl und Ausgestaltung der Rillen R₁-R₇ rein beispielhaft ist und die Erfindung nicht auf ein solches Profil P beschränkt ist.

Die Schneidvorrichtung 7 ist auf einem Schlitten beweglich in der Traversenschiene 6 zwischen Bediener und Reifen 12 gelagert, wobei mittels des Schlittens auch der Schneidkopf 20 der Schneidvorrichtung 7 beweglich ist. Details zum Schlitten und zur Traversenschiene sind in EP 4 265 403 A1 anhand einer ähnlichen Reifenschneidemaschine beschrieben, z.B. in den Absätzen [0092]-[0094], wobei die dortige Konstruktion bei der hier beschriebenen Reifenschneidemaschine realisiert sein kann. Der Schneidkopf 20 ist relativ zur übrigen Schneidvorrichtung 7, d.h. einem unteren Teil 7' der Schneidvorrichtung 7, um eine Schwenkachse SA (Figur 7) in einem Winkelbereich um eine mittlere Neutralstellung des Messers 21 des Schneidkopfs 20 drehbar gelagert, sofern der Schneidkopf 20 nicht vorübergehend fixiert ist. Der Schneidkopf 20 ist mit seinem Messer 21 dem Reifen 12 zugewandt. In Figur 2 sind zwei unterschiedliche Positionen x₁, x₂ beispielhaft gezeigt. Diese veranschaulichen die unterschiedliche Neigung des Schneidkopfs 20 mit dem Messer 21 relativ zur übrigen Schneidvorrichtung 7, insbesondere relativ zu einem unteren Teil 7' der Schneidvorrichtung 7 (Figur 1), der die Traversenschiene 6 kontaktiert. Der Schneidkopf 20 kann sich durch Rotation um die Schwenkachse SA (Figur 7) der Schneidvorrichtung 7 an die jeweils lokale Wölbung des Reifens 12 anpassen, da diese Neigungsanpassung automatisch durch die Abstützvorrichtung 22 der Schneidvorrichtung 7 am Schneidkopf 20 beim Heranfahren der Schneidvorrichtung 7 an den Reifen 12 erfolgt. Entsprechend hat der Schneidkopf 20 beim Schneiden der Längsrille R₁ (Figur 2) eine Schwenkstellungen S₁ und beim Schneiden der Längsrille R₅ eine andere Schwenkstellung S₂ (jeweils mit zur Rotationsachse A des Reifens 12 geneigtem Messer 21), wobei die Schwenkstellung S₂ hier nur gestrichelt dargestellt ist, da sich an der Traversenschiene 6 im Betrieb nur ein Schneidkopf 20 befindet.

Der Schneidkopf 20 wird durch die Abstützvorrichtung 22 beim Heranfahren an die Lauffläche T im Moment des Kontakts mit der Laufflächenoberfläche T_{A} des Reifens 12 von selbst um die Schwenkachse SA in die geneigte Position x₁, x₂ geschwenkt. Dadurch wird auch das Messer 21 auf einfache Weise quasi automatisch geneigt, d.h. senkrecht zur Laufflächenoberfläche T_{A} ausgerichtet. Während eines Nachschneidevorgangs liegt also die (virtuelle) Schwenkachse SA immer tangential, vertikal in der Tangentialebene an der Laufflächenoberfläche T_{A} am Reifen 12 an. Um den Schneidkopf 20 in den Neutralstellung zu bringen, umfasst die Schneidvorrichtung 7 in einem unteren Teil 7' zwei Federelemente. Details zur Federkonstruktion sind in EP 4 265 403 A1 anhand einer ähnlichen Reifenschneidemaschine beschrieben, z.B. in Absatz [0098], wobei die dortige Konstruktion bei der hier beschriebenen Reifenschneidemaschine realisiert sein kann. Eine mittlere Neutralstellung des Schneidkopfs 20 ist z.B. in Figur 1 gezeigt.

Die Abstützvorrichtung 22 ist in Figur 1 und 2 in Form von zwei Abstandsrollen 22 ausgebildet, die zu beiden Seiten neben dem Messer 21 angeordnet sind. Dies ist im Detail auch in Figur 7 gezeigt. Die Abstandsrollen 22 übertragen, sofern der Reifen 12 gedreht wird, kontinuierlich den Verlauf der Laufflächenoberfläche T_{A} entlang des Umfangs des Reifens 12 unmittelbar neben der nachzuschneidenden Rille R₁-R₇ auf das Messer 21. Mit anderen Worten wird das Messer 21 demzufolge in seiner Neigung kontinuierlich näherungsweise passend senkrecht zur aktuellen Laufflächenoberfläche T_{A} im Bereich der jeweiligen Rille R₁-R₇ selbst ausgerichtet.

Um die Schneidvorrichtung 7, insbesondere den Schneidkopf 20, in horizontaler Richtung bzw. z-Richtung senkrecht zur Rotationsachse A des Reifens 12 an die Lauffläche T heran- oder wegzufahren, weist die Reifenschneidemaschine 1 in Figur 1 und 2 nicht näher gezeigte Andruckmittel 23 bzw. Zugmittel 23 auf, z.B. in Form eines pneumatischen Zylinders. Diese dienen auch dazu während des Schneidvorgangs dafür zu sorgen, dass die Abstandsrollen 22 dauerhaft in Druckkontakt mit der Lauffläche T stehen. Die Andruckmittel 23 bzw. Zugmittel 23 befinden sich innerhalb des Gehäuses 3 und verfahren die gesamte Schneidvorrichtung 7 samt Traversenschiene 6 relativ zum Reifen 12. In Figur 1 ist weiterhin ein Fußtaster 25 der Reifenschneidemaschine 1 gezeigt. Sobald dieser Sicherheits-Fußtaster 25 (mit Durchtrittssicherung) aktiviert wird, setzt sich der Reifen 12 in Bewegung. Währenddessen kann der Bediener mithilfe eines Werkzeugs entweder Fremdkörper, beispielsweise Steinchen, aus dem Reifen 12 entfernen oder kann nach dem Schnittvorgang das Schnittgut aus dem Reifen 12 entfernen. Mittels des Fußtasters 25 kann also eine Bewegung des Reifens 12 außerhalb des eigentlichen Schneidvorgangs gesteuert werden.

Zu den Hauptkomponenten der Reifenschneidemaschine 1 gehört eine Steuervorrichtung 24, welche die Reifenschneidemaschine 1 anhand der getätigten bzw. eingestellten Parameter halbautomatisch steuert, so dass der Bediener weitestgehend nur noch eine steuernde bis überwachende Funktion einnimmt, ohne dabei nennenswerten körperlichen Belastungen ausgesetzt zu sein. Die Steuervorrichtung 24 kann elektronisch aufgebaut sein, d.h. mit entsprechenden Schnittstellen zu den erforderlichen mechanischen, hydraulischen und/oder pneumatischen Aktoren. Es handelt sich bevorzugt um eine Sicherheits-SPS-Steuerung (i. W. elektrische Manipulationssicherung), welche alle mechanischen, hydraulischen und pneumatischen Aktoren in Abhängigkeit voneinander abfragen und bewegen bzw. steuern kann.

Im Folgenden wird ein beispielhafter Ablauf des Nachschneidens eines Profils P eines Reifens 12 mittels einer Reifenschneidemaschine 1 gemäß der Erfindung beschrieben, z.B. die Reifenschneidemaschine in Figur 1. Der Ablauf, der als Teil eines Schneideverfahrens gemäß der Erfindung realisiert sein kann, unterteilt sich in zumindest vier Hauptabschnitte, nämlich (a) die Eingabe von Reifenparametern des Reifens am Bedienfeld, (b) die Bestückung der Reifenaufnahme mit dem Reifen, (c) die Vorbereitung für den weiteren Automatikbetrieb (Einrichten) und (d) den automatisch betriebenen Nachschneidevorgang (Automatikbetrieb oder Automatikprozess). Der Automatikbetrieb kann als automatisierter Prozess realisiert sein.

Im ersten Abschnitt (a) des Verfahrens werden zunächst mittels der Bedieneinheit 11, z.B. über ein Touch-Display 11' (Figur 1), die Reifenparameter, welche der Bediener in der Regel an einer Flanke des Reifens 12 ablesen und ggf. unter Nutzung von weiteren Daten des Herstellers zum Reifentyp ergänzen kann, der Steuervorrichtung 24 zugeführt (Figur 1). Sind diese Daten einmal eingetragen, können sie für zukünftige Einsätze in einer entsprechenden Liste für Reifentypen gespeichert werden und fortan aus der Liste, welche werksseitig schon mit einer Auswahl an Standard-Reifentypen ausgestattet sein kann, ausgewählt werden. Anhand des vorhandenen Schnittmusters wird entschieden, welches Schnittmuster nachgeschnitten wird. In der Regel bietet es sich an, sich nach dem vorhandenen Schnittmuster zu richten und dasselbe oder zumindest ein ähnliches Schnittmuster erneut einzuschneiden. Dazu können verschiedene Schnittmuster als Vorlage abgespeichert sein, z.B. in der Steuervorrichtung 24, und/oder es kann aus vorhandenen werksseitig eingespeicherten Vorlagen ausgewählt werden. Konkret handelt es sich bei den Reifenparametern sowie den Schnittmusterdaten u.a. um den Reifendurchmesser, die Rillenanzahl, die Rillenbreiten (quer zu einer Längserstreckung der Rille), ggf. die Rillenlängen (azimutale Länge), ggf. die Gesamt-Rillenlänge, ggf. das Rillen-Längenverhältnis, und die Ausrichtung und/oder Position der jeweiligen Rille bezüglich der Längsrichtung LR der Lauffläche T, insbesondere ein Winkel zur Längsrichtung LR (Figur 2).

Die Steuervorrichtung 24 kann dazu werksseitig oder durch den Bediener selbst im Zuge von Firmware-Updates aktualisiert werden. Dabei können z.B. die gängigsten Reifentypen samt zugehöriger Reifenparameter in die Bedieneinheit 11 der Steuervorrichtung 24 eingegeben oder über eine Schnittstelle in eine Speichereinheit der Steuervorrichtung 24 geladen werden, so dass diese nur noch ausgewählt werden müssen. Dies kann je nach Ausstattungsstufe über die handelsüblichen Datenübertragungsmöglichkeiten geschehen, wie zum Beispiel via USB, Bluetooth, W-LAN oder Ähnliches.

Vorzugsweise kann eine Vorlage eines Schnittmusters für ein Zackenmuster zumindest folgende Parameter umfassen:
- Reifendurchmesser (RD in mm),
- Zackenanzahl pro Rille (ZX in Stück),
- Zackenbreite 1 (ZB1 in mm),
- Zackenbreite 2 (ZB2 in mm),
- Zackenlänge 1 (H1 in mm),
- Zackenlänge 2 (H2 in mm),
- Gesamt-Zackenlänge (ZH in mm; ZH = H1 + H2) und
- Zacken-Längenverhältnis (V = H1 / H2).

Alternativ, vorzugsweise zusätzlich, kann eine Vorlage eines Schnittmusters für Querrillen zumindest folgende Parameter umfassen:
- Reifendurchmesser (RD in mm),
- Querrillenbreite (X in mm),
- Querrillenhöhe (H1 in mm),
- Abstand der Querrillen (H2 = Reifenumfang bzw. Umfang der Laufflächenoberfläche / Anzahl der Querrillen).

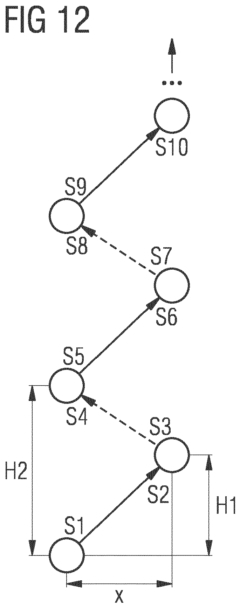

In Figur 12 ist rein schematisch bzw. skizziert ein möglicher Ablauf zum Schneiden von Querrillen gezeigt, der z.B. basierend auf den vorgenannten Parametern gesteuert werden kann. In einem Schritt S1 wird ein Schneidevorgang gestartet, wobei eine Querrille entsprechend der Richtung und der Länge des gezeigten Pfeils in einen Reifen geschnitten wird. In einem Schritt S2 wird der Schneidevorgang beendet, wobei das Messer des Schneidkopfs aus dem Profil des Reifens herausbewegt wird. Durch diesen ersten Schnittvorgang beginnend mit Schritt S1 und beendet durch Schritt S2 wird eine Querrille mit einer bestimmten Querrillenbreite X und einer bestimmten Querrillenhöhe H1 erzeugt. In Schritt S3 wird das Messer des Schneidkopfs ausgetaucht, d.h. ohne zu schneiden, entlang des Pfeils relativ zum Reifen bewegt. Sobald das Messer eine bestimmte (Start-)Position zum Schneiden einer weiteren Querrille erreicht hat, wird die aufgetauchte Bewegung beendet (Schritt S4). In Schritt S5 wird das Messer in Kontakt mit der Lauffläche des Reifens gebracht und schneidend durch das Gummi des Reifens bewegt entlang des gezeigten Pfeils, so dass eine weitere Querrille mit definierter Länge und Ausrichtung bzw. Winkel erzeugt wird. Der Schneidevorgang dieser Querrille wird in Schritt S6 bei Erreichen einer bestimmten (Stopp-)Position beendet. Ein Abstand H2 zwischen jeweils zwei benachbarten, aufeinanderfolgenden Querrillen entspricht dem Quotienten aus einem Umfang der Laufflächenoberfläche (z.B. in Millimetern) und der Anzahl der im Profil vorgesehenen Querrillen bzw. ist dadurch definiert. Das zuvor beschriebene Vorgehen kann so lange wiederholt werden, bis alle Querrillen eines Profils nachgeschnitten sind. Ein strichlinierter Pfeil bedeutet in Figur 12, dass das Messer ausgetaucht bewegt wird, z.B. Schritt S7-S8, wobei ein durchgezogener Pfeil einen Schneidevorgang symbolisiert, z.B. Schritt S9-S10.

In Abschnitt (b) des Verfahrens erfolgt die Bestückung der Reifenaufnahme 5 mit dem Reifen 12 (Figur 1), was das Vorpositionieren der Antriebswelle 4 auf eine passende Höhe in Höhenrichtung y bzw. Hubrichtung umfassen kann. Anschließend wird der Reifen 12 auf den Zuführschlitten 16 gerollt und der Zuführschlitten 16 wird mit dem Reifen 12 in Breitenrichtung x auf die Antriebswelle 4 geschoben. Nun wird ein Spannstern 17 positioniert und passend auf die Antriebswelle 4 gesteckt und mittels Gewindemutter bzw. Reifenfeststellmutter festgespannt.

Daraufhin wird der Reifen 12 auf bzw. in die Startposition für einen Schneidevorgang verfahren. Dazu wird der Reifen 12 z.B. mittels eines Pneumatikantriebs im Gehäuse 3 pneumatisch bis in eine Bearbeitungshöhe angehoben. Hat der Reifen 12 die obere Endlage bzw. Bearbeitungshöhe erreicht, schaltet sich praktischerweise nach einer Sekunde die Selbsthaltung ein, so dass der Reifen 12 auch bei einem ungeplanten Ausfall des Pneumatikventils des Pneumatikantriebs nicht zusammen mit der Antriebswelle 4 unkontrolliert herabsausen kann. Hierzu ist als zusätzliche Sicherung ein entsperrbares Drosselrückschlagventil verbaut. An dieser Stelle sei erwähnt, dass alternativ oder zusätzlich zum pneumatischen Antrieb grundsätzlich auch ein hydraulischer Antrieb realisiert sein kann. Der pneumatische Antrieb ist hier bevorzugt, da er die günstigere, weniger anfällige Variante darstellt, und sich beispielsweise auch mittels eines Kompressors mit einem einfachen 230V-Stromanschluss betätigen lässt.

Die Reifenschneidemaschine kann so ausgebildet sein, dass ein Bewegen bestimmter Komponenten, insbesondere in Höhenrichtung (y-Richtung), und/oder in Breitenrichtung (x-Richtung), und/oder in Tiefenrichtung (z-Richtung) nur dann möglich ist, wenn zumindest ein Zustimmtaster permanent gedrückt bzw. aktiviert ist. Die Reifenschneidemaschine 1 umfasst bevorzugt zwei Gashebel-Zustimmtaster 11", die Teil einer Bedieneinheit 11 sind. Im vergrößerten Ausschnitt von Figur 1 und in Figur 2 ist gezeigt, dass die Bedieneinheit 11 zwei Gashebel-Zustimmtaster 11" aufweist, die jeweils eine Auflagefläche für eine Hand bilden. Die Gashebel-Zustimmtaster 11" können manuell in Richtung R gedreht werden, wobei mittels Sensoren 26 eine (für den Betrieb erforderliche) Drehbewegung erfasst wird. Die Gashebel-Zustimmtaster 11" können federrückgestellt sein. In Folge einer Drehung der beiden Gashebel-Zustimmtaster 11" kann ein Eintauchvorgang des Messers in die Laufflächenoberfläche sowie ein anschließender Schneidprozess durch die Reifenschneidemaschine 1 automatisiert durchgeführt werden (als Teil des Automatikprozesses (d)). Wird einer der Gashebel-Zustimmtaster 11" losgelassen, stoppt die Reifenschneidemaschine 1 sofort.

Zusätzlich kann die Reifenschneidemaschine 1 mit einem separaten Joystick 11' gesteuert werden, der Teil der Bedieneinheit 11 ist. Zur bequemeren Verstellbarkeit kann der Joystick 11' eine Bewegung von Komponenten, insbesondere des Schneidkopfs 20, in zwei Geschwindigkeitsstufen ermöglichen, nämlich in einer vergleichsweise langsamen Geschwindigkeit für eine Feinjustierung sowie in einer deutlich schnelleren Geschwindigkeit für die Überbrückung weiterer Verfahrstrecken. Der Joystick 11'kann insbesondere dazu genutzt werden, um den Schneidkopf 20 in Breitenrichtung x zu bewegen, z.B. um das Messer 21 passend zur Rille R₁ zu positionieren (Figur 2). Hierbei hilft ein optionaler Laser (nicht dargestellt), welcher im Schneidkopf 20 integriert ist. Dieser kann dem Bediener optisch eine Position des Messers 21 relativ zur Lauffläche T des Reifens 12 anzeigen, bevor das Messer 21 die Lauffläche T kontaktiert. Dadurch kann der Bediener das Messer 21 passend zur betreffenden Rille R₁-R₇ in einem gewissen Abstand (z-Richtung) zur Lauffläche T vorpositionieren.

In Abschnitt (c) des Verfahrens erfolgen die Vorbereitung für den Automatikprozess, was einerseits einen Prüfschritt und andererseits einen Messschritt enthält. Im Prüfschritt werden die Voraussetzungen für den späteren Nachschneidevorgang geprüft. Dazu kann überprüft werden, ob der Reifen 12 überhaupt nachschneidbar ist, er also die entsprechende Kennzeichnung aufweist. Erst dann wird der Reifen 12 auf etwaige Verunreinigungen im Profil P gecheckt, welche ggf. entfernt werden. Im Zuge dessen können besonders verschlissene bzw. beschädigte Reifen 12 direkt aussortiert werden.

Im anschließenden Messschritt wird zunächst die Tiefe der einzelnen Rillen R₁-R₇ separat in 90°-Schritten (bezogen auf die Längsrichtung LR) gemessen und notiert bzw. in die Bedieneinheit 11 eingegeben, z.B. in das Touch-Display 11'. Das Messen der Tiefe kann vorzugsweise mit dem besonderen Profiltiefenmesser erfolgen, der in dieser Anmeldung beschrieben ist. Weiterhin kann z.B. (ggf. unterstützend) ein analoger Initiator bzw. induktiver Sensor eingesetzt werden, welcher die Karkassentiefe induktiv misst und mit dem sich dadurch die Schnitttiefe ermitteln lässt. Das Messen mittels des analogen Initiators bzw. induktiven Sensors kann manuell oder ggf. halbautomatisch erfolgen. Anschließend wird entsprechend der Herstellervorgabe die passende Nachschneidtiefe auf den niedrigsten gemessenen Wert aufaddiert. In der Regel handelt es sich hierbei um 3 bis 4 mm Tiefe.

An dieser Stelle sei bemerkt, dass es auch Reifen gibt, bei denen die absolute Nachschneidetiefe direkt an sogenannten Messbohrungen im Profil gemessen werden kann. Auch hier wird allerdings in 90°-Schritten gemessen und der kleinste Wert verwendet. Diesbezüglich ist es denkbar, dass dieser Schritt in der weiteren Entwicklung der Reifenschneidemaschine 1 ebenfalls noch automatisiert wird, d.h. beispielsweise die Messbohrungen mittels eines Lasers, Messschiebers etc. gemessen werden, um die vorhandene Profiltiefe automatisiert in 90° Schritten bzw. in regelmäßigen Abständen entlang der Lauffläche T des Reifens 12 zu messen.

Wenn beispielsweise entlang einer Rille bei 0°, 90°, 180° und 270° folgende vier Profiltiefen 7, 6, 5 und 6 mm gemessen werden, wird die Schnitttiefe bei einer Herstellervorgabe von 4 mm auf einen Wert von 9 mm eingestellt (5 mm + 4 mm = 9 mm).

Entsprechend wird die Schnitttiefe auf den errechneten Wert der ersten Rille R₁ eingestellt. Nun wird, sofern das Messer 21 noch nicht in einer ersten Startposition gegenüber der ersten Rille R₁ positioniert ist, die Schneidvorrichtung 7 mit dem Schneidkopf 20 (bei einer Zick-Zack-Rille) so mittels des erwähnten Joy-Sticks 11' verfahren, dass eine vertikale Mittelachse des Messers 21 des Schneidkopfes 20 mittig auf der ersten (beliebig) linken Zackenposition der Rille R₁ angeordnet ist. Weiter wird auch die horizontale Mittelachse des Messers 21 mittig auf den Anfangspunkt der ersten linken Zacke ausgerichtet bzw. gefahren. Hierzu wird der Reifen 12 um die Antriebsachse A gedreht. Dabei wird die Schneidvorrichtung 7 mit dem Schneidkopf 20 samt Messer 21 mittels der Andruck- bzw. Zugmittel 23 der Reifenschneidemaschine 1 oder alternativ händisch an den Reifen 12 herangefahren bzw. -geschoben.

In Abschnitt (d) des Verfahrens kann vorgesehen sein, dass zum Starten und Aufrechterhalten des Automatikbetriebs beide Gashebel-Zustimmtaster 11" gedreht und in der gedrehten Stellung gehalten werden müssen. Durch erstmaliges Drehen der beiden Gashebel-Zustimmtaster 11" für den Start des Automatikbetriebes an einer jeweiligen Rille R₁-R₅ wird der Startpunkt gespeichert. Gleichzeitig wird die Schneidvorrichtung 7, d.h. zum einen die Abstandsrollen 22 und zum anderen das Messer 21 dazwischen, mittels der Andruckmittel 23 bzw. Zugmittel 23 automatisch in Tiefenrichtung z gegen den Reifen 12 gedrückt, also an die Lauffläche T herangefahren. Dabei wird das Messer 21 mittels der gefederten Lagerung in Schnitttiefenrichtung leicht eingefedert. Zudem wird der Reifen 12 mittels der Antriebswelle 4 langsam angetrieben und zugleich das Messer 21 unter Strom gesetzt und damit aufgeheizt. Ferner wird, sofern vorhanden, auch eine Messerkühlung aktiviert, so dass das Messer 21, insbesondere der aus dem Reifen 12 herausstehende Messerteil, konstant auf einer gewünschten, idealen Temperatur gehalten wird.

Durch die gefederte Lagerung steht das Messer 21 zu Beginn des Eintauchvorgangs in leichtem Druckkontakt mit der Lauffläche T, womit es, wenn in diesem Moment auch der Reifen 12 angetrieben sowie das Messer 21 geheizt wird, im Zuge der azimutalen Relativbewegung zum Reifen 12 langsam in die Lauffläche T des Reifens 12 eintaucht bzw. einschneidet. Im weiteren Verlauf wird das Messer 21 durch die Federkraft, z.B. einer Schraubenfeder bis zur Entlastung der Schraubenfeder in die vorgesehene Schnitttiefe in die Lauffläche T eingedrückt, womit der Automatikschneidprozess die gewünschte Tiefe erreicht hat.

Wird nun einer der Gashebel-Zustimmtaster 11" losgelassen, stoppt die Reifenschneidemaschine 1. Werden wieder beide Gashebel-Zustimmtaster 11" betätigt, fahren der Reifen 12 und die Reifenschneidemaschine 1 wieder an. So ist im Normalfall ein sehr sicherer Betrieb gewährleistet. Sobald der Reifen 12 um 360° gedreht wurde, wird die Startposition gelöscht. Ebenfalls gelöscht wird die Startposition im Übrigen z.B. dann, wenn die Schneidvorrichtung 7 in Breitenrichtung x oder in Tiefenrichtung z manuell mittels des Joysticks 11' verfahren wurde. Dies ist z.B. dann der Fall, wenn der Bediener das Messer 21 auf die nächste noch nicht nachgeschnittene Rille R₁-R₅ vorpositioniert bzw. einstellt.

An dieser Stelle sei darauf hingewiesen, dass das Messer 21 insbesondere bei Längsrillen R₁-R₅ in der Regel noch etwas, d.h. einige Grad, über die vollen 360° hinaus entlang der Lauffläche T weiterbewegt wird, damit der Winkelbereich zu anfangs eines Umlaufs im Bereich des Startpunkts, an dem das Messer 21 erst nach ein paar Grad in die vollständige gewünschte Tiefe in der Lauffläche T eingetaucht ist, noch mit umfasst ist. Durch diesen Überlapp ist sichergestellt, dass auch dort die gewünschte Schnitttiefe nachgeschnitten bzw. vorhanden ist.

Ist die erste Rille R₁ fertiggestellt, wird das Messer 21 händisch vom Reifen 12 weg gezogen oder alternativ, sofern die Reifenschneidemaschine 1 mit den entsprechenden motorisch steuerbaren Elementen ausgestattet ist, im Handbetriebsmodus, der nach jedem Rillen-Schnitt automatisch aktiv ist, nach Auslösen eines entsprechenden Befehls vom Reifen 12 weg gefahren. Bevorzugt dreht sich der Reifen 12 noch weiter, während das Messer 21 aus der Lauffläche entfernt wird. Danach kann das Messer 21 in Breitenrichtung x auf die nächste Rille R₂-R₅, hier z.B. die Rille R₂, vorpositioniert werden und die Startposition dieser Rille R₂ eingerichtet werden.

Ist der Startpunkt der nächsten Rille, hier der z.B. Rille R₂ eingerichtet, d.h. das 21 durch den Bediener händisch oder bei motorischer Verstellbarkeit per Joystick 11' durch entsprechende Steuerbefehle an der zweiten Startposition vorpositioniert, werden wieder beide Gashebel-Zustimmtaster 11" betätigt und der Automatikbetrieb beginnt von Neuem.

Anschließend ziehen die Zugmittel 23 (hier z.B. der pneumatische Zylinder) die gesamte Schneidvorrichtung 7 bzw. den gesamten "Messerschlitten" wieder in z-Richtung an den Reifen 12 heran. Das Messer 21 wird dabei wieder in die Lauffläche T gedrückt und mittels der gefederten Lagerung leicht eingefedert und die Rille R₂ wird geschnitten, wie zuvor anhand der ersten Rille R₁ beschrieben wurde.

Damit während eines Schneidvorgangs nicht versehentlich ein Schaden an der Reifenschneidemaschine 1 oder am Reifen 12 entstehen kann, kann die Schneidvorrichtung 7 auf einer reifenzugewandten Seite über einen Kollisionsschutzbügel verfügen, welcher bei einem Kontakt mit dem Reifen 12 keine Schäden verursacht, jedoch unmittelbar bei Kontakt oder kurz vor Kontakt durch entsprechende Sensorik etc. eine Notbremsung auslöst.

Die erwähnte Abfolge wird so oft wiederholt, bis alle Längsrillen R₁, R₂, R₃, R₄, R₅ des Reifens 12 nachgeschnitten sind. Das Messer 21 kann während des gesamten Schneidvorgangs der Längsrillen R₁-R₅, auch bei einem Wechsel zwischen zwei Längsrillen, in einem ausgefahrenen Zustand sein. Abschließend werden sämtliche geschnittene Profilreste, welche sich noch im Reifen 12 befinden, entfernt. Dies kann theoretisch auch außerhalb der Reifenschneidemaschine 1 erledigt werden, z.B. per Hand. Dieser Schritt wird durch das saubere, maschinelle Nachschneiden mittels der Reifenschneidemaschine 1 erheblich erleichtert, da durch den zusammenhängenden Schneidvorgang in der Regel das mit dem Messer 21 freigeschnittene Gummimaterial in einem Stück aus der betreffenden Rille R₁-R₅ entfernt bzw. herausgezogen werden kann.

Das Schneiden von Querrillen R₇ und Blocköffnungen R₆ kann z.B. im Anschluss an die Längsrillen R₁-R₅ erfolgen, wobei die Erfindung nicht auf diese Reihenfolge beschränkt ist. Querrillen R₇ und Blocköffnungen R₆ sind, bezogen auf den Umfang der Lauffläche T, üblicherweise jeweils gleich aufgebaut, insbesondere bezüglich des Winkels zur Längsrichtung LR, der Querrillenbreite und der Querrillenhöhe, und haben einen definierten, gleichbleibenden Abstand zueinander. Zum Schneiden einer ersten Querrille R₇ kann das Messer 21, z.B. lasergestützt, durch Bewegen des Schneidkopfs 20 in x-Richtung in eine Startposition bewegt werden. In der Startposition kann das Messer 21 auf ein Ende der zu schneidenden Querrille R₇ gerichtet sein, das bezogen auf die Rotationsrichtung des Reifens 12 zum Messer 21 weist. Optional kann der Reifen 12 rotiert werden, um das Messer 21 in die Startposition zu verbringen. Sobald die Startposition erreicht ist, kann der Schneidkopf 20 in z-Richtung bewegt werden, so dass zumindest eine Abstandsrolle 22 auf der Lauffläche T aufliegt. Es ist möglich, dass das Messer 21 dabei bereits in einem ausgefahrenen Zustand ist. Es ist aber auch möglich, dass das Messer 21 erst linear ausgefahren wird, nachdem die Abstandsrolle 22 die Lauffläche T kontaktiert.

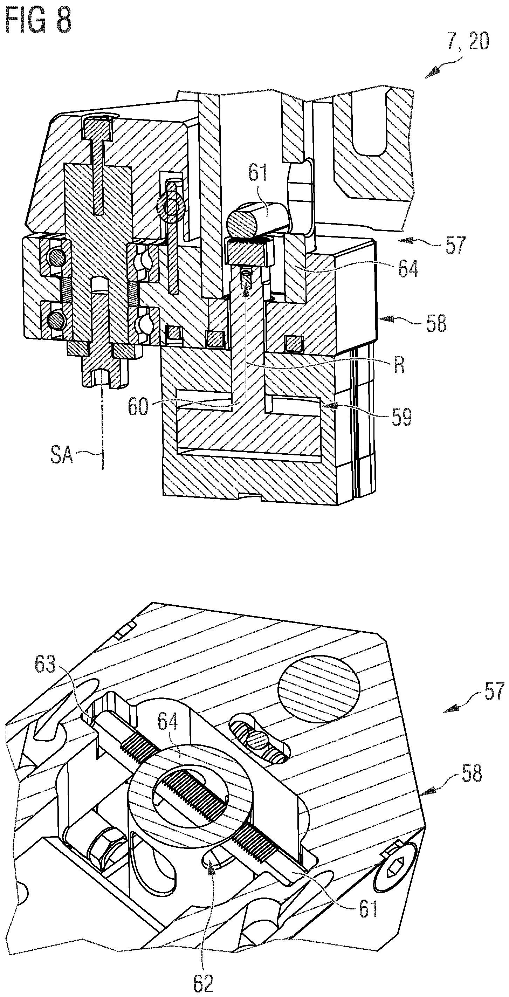

Um die erste Querrille R₇ zu schneiden, kann das Messer 21 ausgehend von einer Neutralstellung um einen bestimmten Winkel um die Schneidkopfachse aktiv rotiert werden. Das bedeutet, dass vor Beginn des Schneidvorgangs das Messer 21 mittels einer Linearbewegung aus dem Schneidkopf 20 ausgefahren wird und zusätzlich um die Schneidkopfachse gedreht wird (und für die Dauer eines jeweiligen Schneidvorgangs in derjeweiligen Stellung gehalten wird). In Abschnitt (d) des Verfahrens kann vorgesehen sein, dass zum Starten und Aufrechterhalten des Automatikbetriebs beide Gashebel-Zustimmtaster 11" gedreht und in der gedrehten Stellung gehalten werden. Der Automatikbetrieb kann z.B. gestartet werden, sobald die Startposition einer bestimmten ersten Querrille R₇ erreicht ist. Im Automatikbetrieb wird die zumindest eine Abstandsrolle 22 und das Messer 21 mittels Andruckmittel 23 bzw. Zugmittel 23 automatisch in Tiefenrichtung z gegen den Reifen 12 gedrückt. Es ist bevorzugt, dass vor Beginn des Schneidvorgangs eine Schwenkarretierung des Schneidkopfs 20 aktiviert wird. Dadurch wird die Schwenkmöglichkeit des Schneidkopfs 20 um die Schwenkachse limitiert oder ggf. ganz unterbunden. Details dazu werden anhand von Figur 8 beschrieben.

Zum Schneiden einer ersten Querrille R₇ wird der Schneidkopf 20 ausgehend von der Startposition seitlich, d.h. in x-Richtung, entsprechend der Lage der Querrille R₇ aktiv bewegt, wobei gleichzeitig der Reifen 12 mittels der Antriebswelle 4 langsam gedreht wird und wobei das Messer 21 durch die Lauffläche T geführt wird. Während der (Seitwärts-)Bewegung kann die jeweilige Abstandsrolle 22 über die Lauffläche T rutschen. Zum Schneiden kann das Messer 21 unter Strom gesetzt werden und es kann eine Messerkühlung aktiviert werden. In Folge der kombinierten Bewegung von Schneidkopf 20 und Reifen 12 wird eine erste Querrille R₇ gemäß einem vorbestimmten Muster geschnitten.

Sobald eine Endposition der ersten Querrille R₇ erreicht ist, wird die (Seitwärts-)Bewegung des Schneidkopfs 20 beendet und das Messer 21 wird mittels einer Linearbewegung relativ zu den Abstandsrollen 22 bewegt und zumindest teilweise in den Schneidkopf 20 eingefahren. Das Messer 21 kann optional um die Schneidkopfachse gedreht werden und in eine Neutralstellung gebracht werden. Dieser Schritt ist nicht zwingend erforderlich, sofern anschließend an die erste Querrille R₇ eine weitere identische Querrille R₇ geschnitten wird. Der Schneidkopf 20 kann von der Endposition seitlich, d.h. in x-Richtung bewegt werden, um eine Startposition einer weiteren, zweiten Querrille R₇ einzunehmen, welche im Profil P der zuvor geschnittenen ersten Querrille R₇ (direkt) nachfolgt. Während der (Seitwärts-)Bewegung kann der Reifen 12 rotieren. Es ist bevorzugt, dass die jeweilige Abstandsrolle 22 die Lauffläche T des Reifens 12 während der (Seitwärts-)Bewegung kontaktiert. Ein Zurückfahren des gesamten Schneidkopfs 20 ist nicht erforderlich, weil das Messer 21 mittels der Linearbewegung hinter die Abstandsrollen 22 zurückgefahren wurde.

Sobald der Schneidkopf 20 eine Startposition zum Schneiden einer zweiten Querrille R₇ eingenommen hat, kann das Messer 21 linear in Richtung des Reifens 12 bewegt werden und kann in das Profil P eintauchen. Gleichzeitig oder kurz danach kann der Reifen 12 für den Schneidvorgang in Rotation versetzt werden. Es ist auch möglich, dass der Reifen 12 während der Umpositionierung des Schneidkopfs 20 zwischen den aufeinanderfolgenden Querrillen R₇ und während des jeweiligen Schneidvorgangs in kontinuierlicher Rotation ist. Optional kann das Messer 21 vor Beginn des Schneidvorgangs um die Schneidkopfachse rotiert werden, so dass ein bestimmter Winkel in Bezug zur Längsrichtung LR der Lauffläche T erzeugt wird. In der vorgeschriebenen Weise können sämtliche Querrillen R₇, die im Profil P entlang des Umfangs des Reifens 12 aufeinanderfolgen, nacheinander geschnitten werden, insbesondere im Automatikbetrieb (ohne zusätzliches Eingreifen eines Bedieners). Ein beispielhafter Ablauf zum Schneiden von Querrillen ist in Figur 12 gezeigt.

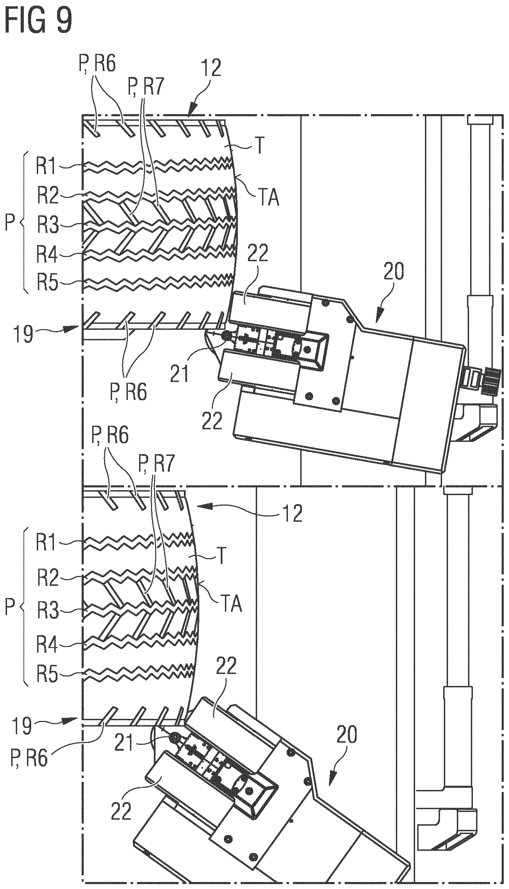

In der vorbeschriebenen Weise können nicht nur Querrillen R₇ geschnitten werden, die in einem mittleren Bereich der Lauffläche T eines Reifens 12 ausgebildet sind, sondern es können auch Blocköffnungen R₆ geschnitten werden (als eine Art von Querrillen). Bei Schneiden von Blocköffnungen R₆ im Bereich der Reifenschulter ist es besonders vorteilhaft, dass die Schwenkarretierung der Schneidvorrichtung während des jeweiligen Schneidvorgangs aktiv ist. Dadurch kann verhindert werden, dass der Schneidkopf 20 beim Schneiden von der Lauffläche T abrutscht und/oder dass der Schneidkopf 20 sich relativ zur Laufflächenoberfläche T_{A} verkippt bzw. verdreht. In Figur 9 ist schematisch gezeigt, dass der Schneidkopf 20 bei aktiver Schwenkarretierung mittels der Abstandsrollen 22 so über die Lauffläche T geführt werden kann, insbesondere auch im Bereich der Reifenschulter 19, dass das Messer 21 stets radial bzw. senkrecht/lotrecht (entsprechend der Schneidkopfachse) zur Laufflächenoberfläche T_{A} ausgerichtet ist (oberer Teil von Figur 9). Im oberen Teil von Figur 9 ist eine Extremsituation gezeigt, wobei das Messer 21 seitlich neben der Lauffläche T ist, was im Betrieb üblicherweise nicht vorkommt. Damit soll gezeigt werden, dass eine senkrechte Ausrichtung des Messers 21 zur Lauffläche T mittels nur einer Abstandsrolle 22 möglich ist, die in Kontakt mit der Lauffläche T ist, in Kombination mit der aktiven Schwenkarretierung. Im unteren Teil von Figur 9 ist die Situation gezeigt, dass sich der Schneidkopf 20 relativ zur Lauffläche T verdreht (in Pfeilrichtung), was durch die Schwenkarretierung verhindert werden kann.

In Abschnitt (d) des Verfahrens kann vorgesehen sein, dass die zuvor beschriebenen Prozesse für jede Reihe von Querrillen R₇ und/oder Blocköffnungen R₆, also für Querrillen, die entlang des Umfangs des Reifens 12 aufeinanderfolgen, wiederholt werden. Mit anderen Worten können die Querrillen R₇ und/oder die Blocköffnungen R₆ reihenweise oder spurweise nacheinander geschnitten werden.

Sobald alle Rillen R₁-R₇ nachgeschnitten und die Gummimaterialreste entfernt sind, läuft der oben beschriebene Prozess des Bestückens der Reifenaufnahme 5 mit dem Reifen 12 in umgekehrter Reihenfolge ab, um den Reifen aus der Reifenschneidemaschine 1 zu entnehmen. Die vorbeschriebenen Abschnitte (a) bis (d) und die einzelnen Schritte müssen nicht zwingend in der genannten Reihenfolge abgearbeitet werden. Es können einzelne Schritte ausgelassen oder zusätzliche Schritte implementiert sein. Beispielsweise können Schritte entfallen, wenn nacheinander mehrere Reifen desselben Fahrzeugs geschnitten werden, wobei vorzugsweise der Messschritt für jeden Reifen durchgeführt wird.

Das Verfahren kann einen Abschnitt (e) umfassen, in dem Sonderfälle berücksichtigt werden, beispielsweise ein Messerbruch oder ein "Not-Aus" der Reifenschneidemaschine 1 aus unterschiedlichen Gründen. Die Prozesse in Abschnitt (e) können parallel zu anderen Prozessen ablaufen, insbesondere zeitgleich mit Abschnitt (d). Details zu möglichen Sonderfällen sind in EP 4 265 403 A1 anhand einer ähnlichen Reifenschneidemaschine beschrieben, z.B. in Absatz [0145]-[0147], wobei die dortigen Weiterbildungen bei der hier beschriebenen Reifenschneidemaschine realisiert sein können.

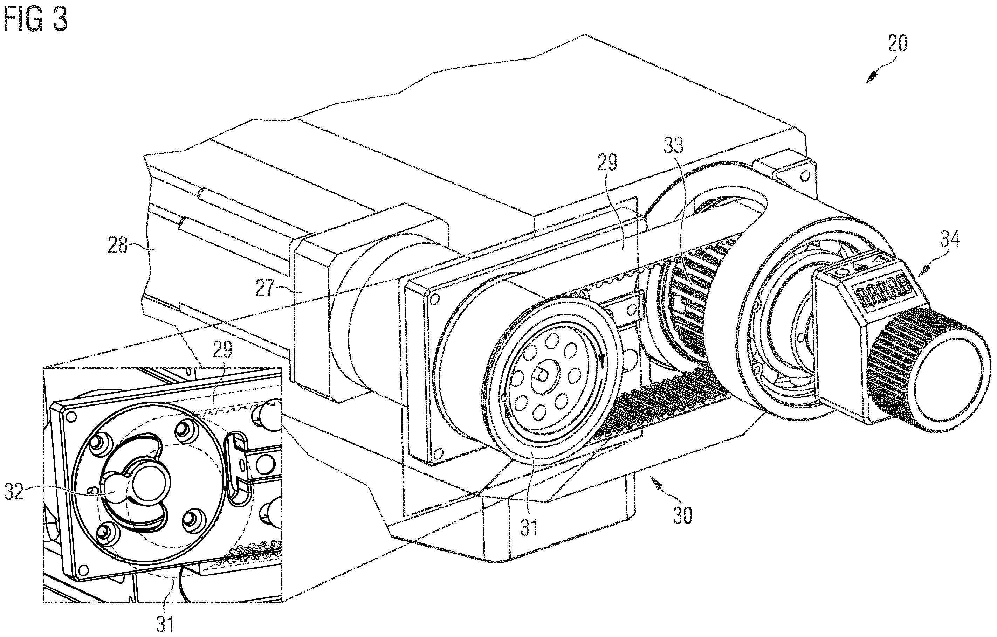

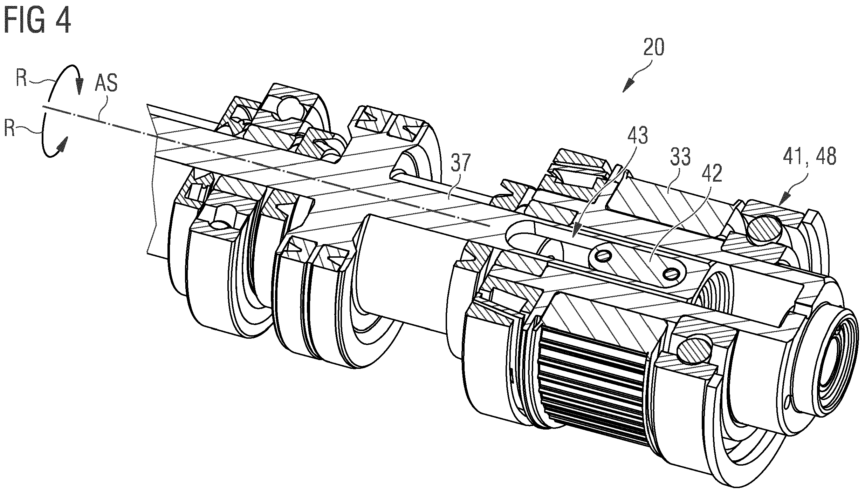

Anhand der Figuren 3 bis 8 wird nachfolgend ein Ausführungsbeispiel eines bevorzugten Schneidkopfs beschrieben, der z.B. in der Reifenschneidemaschine in Figur 1 und 2 angeordnet sein kann. In Figur 3 ist ein Teil des Schneidkopfs 20 gezeigt, wobei insbesondere ein Bewegungsmechanismus 30 sichtbar ist. Der Bewegungsmechanismus 30 hat u.a. einen Elektromotor 28, dessen Betrieb von der Steuervorrichtung der Reifenschneidemaschine steuerbar ist. Der Elektromotor 28 ist mittels eines Planetengetriebes 27 mit einem Zahnriemenrad 31 verbunden, das einen Zahnriemen 29 in unterschiedliche Richtungen antreibt. Der Zahnriemen 29 ist mit einem weiteren Zahnriemenrad 33 verbunden, wobei über diesen Riemenantrieb mittels einer Drehbewegung des Elektromotors 28 eine Schwenkbewegung des Messer erzeugt wird. Der Bewegungsmechanismus 30 kann einen Schnittrichtungseinsteller bzw. Schnittwinkeleinsteller für das Messer bilden, wobei das Messer in einem bestimmten Dreh- bzw. Schwenkwinkel um eine Schneidkopfachse AS (Figur 4) hin und her geschwenkt werden kann. Der Elektromotor 28 kann so gesteuert werden, dass für eine jeweilige Rille ein gewünschter Schnittwinkel erzeugt wird. Der Drehwinkel bzw. Schnittwinkel ergibt sich aus den Rillendaten zum jeweiligen gewünschten Rillenmuster bzw. Profil und/oder kann von der Steuervorrichtung 24 daraus berechnet werden.

Im vergrößerten Ausschnitt von Figur 3 ist das Zahnriemenrad 31 transparent dargestellt, wobei eine innenliegende Begrenzung für eine Drehbewegung des Zahnriemenrads 31 sichtbar ist. Im Betrieb ist das Planetengetriebe 27 über einen Vorsprung 32, der in einer definierten Aussparung gedreht werden kann, mit dem Zahnriemenrad 31 verbunden. Der Vorsprung 32 oder Knubbel kann ausgehend von einer Neutralstellung (Figur 3), bei der das Messer des Schneidkopfs ebenfalls in einer Neutralstellung ist, in entgegengesetzte Richtungen um jeweils 90° gedreht werden. Bei einem Drehwinkel von 90° schlägt der Vorsprung 32 am jeweiligen Rand der Aussparung an. Dadurch wird eine mechanische Begrenzung der Drehbewegung des Zahnriemenrads 31 und damit auch des Messers erreicht. Durch die Begrenzung des Drehwinkels wird verhindert, dass sich in Folge einer Rotation von beweglichen Teilen des Schneidkopfs 20 Kabel am Schneidkopf 20 aufwickeln. Weiterhin kann die mechanische Begrenzung zum Referenzieren bzw. Nullen des Bewegungsmechanismus 30 genutzt werden, z.B. vor Beginn des Schneidens. Dazu kann ein Kollisionsfahren erfolgen, indem der Vorsprung 32 in beide Richtungen einmalig bis zum Anschlag gefahren wird. In Figur 3 ist weiterhin ein außenliegender Teil eines Schnitttiefeneinstellers 34 gezeigt, der u.a. ein Stellrad zum Einstellen der Schnitttiefe des Messers und eine Anzeige der Schnitttiefe hat.

In Figur 4 ist ein innenliegender Teil des Schneidkopfs 20 gezeigt, der im Betrieb weitestgehend von einem Gehäuse verdeckt ist. Im rechten Teil von Figur 4 ist das Zahnriemenrad 33 gezeigt, das anhand von Figur 3 beschrieben wurde. Das Zahnriemenrad 33 ist mittels eines ersten Lagers 41 drehbar am Schneidkopf 20 gelagert. Das erste Lager umfasst ein Kugellager 48. Das erste Lager 41 ist von der Welle 37 des Schneidkopfs 20 beabstandet und ist Teil des Bewegungsmechanismus 30. Das Zahnriemenrad 33 ist mittels zwei Passfedern 42 (hier nur eine im Schnitt sichtbar) in Wirckontakt mit der Welle 37 des Schneidkopfs 20. Die jeweilige Passfeder 42 ist in einer zugeordneten Aussparung 43 oder Ausnehmung der Welle 37 gelagert, so dass eine Drehbewegung des Riemenantriebs (Figur 3) des Bewegungsmechanismus 30 mittels der Passfedern 42 an die Welle 37 übertragen wird für eine Rotation der Welle 37. Dadurch kann die Welle 37 um die Schneidkopfachse AS rotiert werden und zwar ausgehend von einer Neutralstellung um bis zu 90° in entgegengesetzte Richtungen R. Die Schneidkopfachse AS ist koaxial zur Längserstreckung der Welle 37.

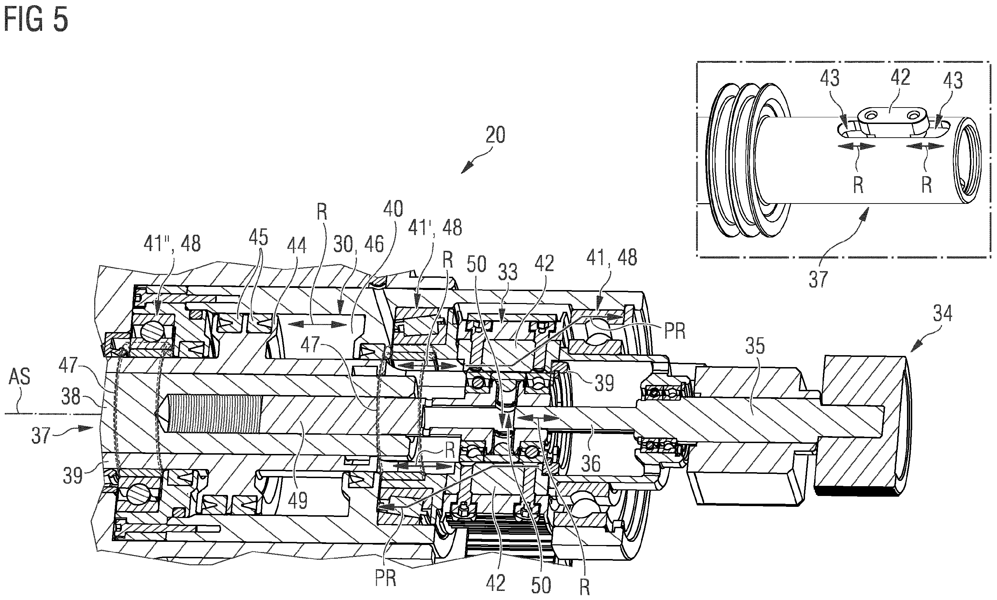

In Figur 5 ist ein Teil des Schneidkopfs 20 in einem Gehäuse gezeigt, wobei ein Pneumatikzylinder 46 (als Druckzylinder) sichtbar ist, der Teil des Bewegungsmechanismus 30 des Schneidkopfs 20 ist. Der Pneumatikzylinder 46 umfasst im Gehäuse einen Hohlraum 40, der mit Druckluft gefüllt werden kann, um einen Kolben 44 in unterschiedliche Richtungen R zu bewegen. Der Kolben 44 ist fest mit der Welle 37 verbunden, insbesondere mit der äußeren Hohlwelle 39, und kann beidseitig mit Druckluft beaufschlagt werden. Der Kolben 44 ist mittels Dichtungen 45 gleitend im Hohlraum 40 des Pneumatikzylinders 46 gelagert.

Der Schneidkopf 20 ist so konstruiert, dass eine jeweilige Endlage des Kolbens 44 durch die Passfedern 42 des Bewegungsmechanismus 30 definiert ist. In der in Figur 5 gezeigten Situation ist der Kolben 44 in einer linken Endlage, wobei die rechte Seite des Kolbens 44 mit Druckluft beaufschlagt wird. Dadurch wird der Kolben 44, und damit die gesamte Welle 37, maximal nach links ausgelenkt. Dadurch wird eine lineare Bewegung der Welle 37 erzeugt, koaxial zur Schneidkopfachse AS, wobei das Messer aus dem Schneidkopf 20 ausgefahren wird. In dieser Endlage des Kolbens 44 schlägt ein rechter Rand der Aussparung 43 in der Welle 37 an die Passfeder 42 an. Die Relativbewegung der Welle 37 gegenüber den Passfedern 42 wird dadurch gestoppt. Im vergrößerten Ausschnitt von Figur 5 ist gezeigt, dass die Welle 37 in Folge einer Auslenkung des Kolbens 44 im Bereich der Aussparung 43 in Richtung R relativ zu den Passfedern 42 bewegbar ist. Sobald ein (rechter oder linker) Rand der Aussparung 43 die Passfeder 42 direkt kontaktiert, ist eine Endlage des Kolbens 44 erreicht. Um das Messer mittels einer linearen Bewegung in den Schneidkopf einzufahren, kann die gegenüberliegende (hier linke) Seite des Kolbens 44 mit Druckluft beaufschlagt werden.

In Figur 5 ist erkennbar, dass der Kolben 44 in der Endlage eine Innenwand (hier links) des Pneumatikzylinders 46 nicht direkt kontaktiert. Dadurch wird ermöglicht, dass auch bei einer Linearbewegung der Welle 37 gleichzeitig eine Rotationsbewegung der Welle 37 um die Schneidkopfachse AS möglich ist. Die Ausführungen zur linken Endlage des Kolbens 44 gelten entsprechend für die andere rechte Endlage, wobei dann ein linker Rand der Aussparung 43 an die Passfeder 42 anschlägt. In der rechten Endlage des Kolbens 44 ist das Messer maximal in den Schneidkopfs 20 eingefahren.

Die Konstruktion des Schneidkopfs 20 ermöglicht es, dass eine Kolbenkraft des Kolbens beim Einfahren und Ausfahren des Messers im Wesentlichen nur in die Lager 41, 41` des Schneidkopfs 20 abgeleitet wird, so dass ein reibungsloses Drehen weiterhin möglich ist. Entsprechend kann die Kolbenkraft, je nach Endlage, in das erste Lager 41 oder in ein zweites Lager 41 ` geleitet werden. Der jeweilige Kraftfluss, ausgelöst durch die Kolbenkraft, ist mittels Pfeilen symbolisiert und verläuft in etwa entlang der Pfeilrichtungen PR.

In Figur 5 ist gezeigt, dass die Welle 37 mittels zwei Lagern 41', 41" drehbar im Schneidkopf 20 gelagert ist. Das jeweilige Lager 41', 41" umfasst einen Gleitring 47 (hier strichliniert), welcher der Welle 37 direkt aufliegt und ein Kugellager 48 bzw. ein Kegelrollenlager 48, das dem jeweiligen Gleitring 47 direkt aufliegt. Die (zweiten) Lager 41', 41" ermöglichen, dass die Welle 37 mittels der Gleitringe 47 möglichst reibungsarm linear gleiten kann (koaxial zur Schneidkopfachse AS) und gleichzeitig mittels des Kugellagers 48 bzw. Kegelrollenlagers 48 möglichst reibungsarm um die Schneidkopfsachse AS gedreht werden kann. Dadurch kann auch unter Last eine Drehbewegung der Welle 37 ausgeführt werden.

In Figur 5 ist weiter gezeigt, dass der Schnitttiefeneinsteller 34 einen Trapezhalter 35 mit einem Zapfen 36 aufweist, der in eine Bohrung einer Gewindestange 49 hineinragt. Die Gewindestange 49 hat endseitig ein Außengewinde, das in ein Innengewinde der inneren Hohlwelle 38 eingreift. Die Gewindestange 49 erstreckt sich längs der Schneidkopfachse AS und ist endseitig mit dem Zapfen 36 verbunden. Der Zapfen 36 kann sich in Richtung R, d.h. parallel zur Schneidkopfachse AS, frei in der Bohrung der Gewindestange 49 und damit frei in einer Schnitttiefeneinstellungswelle bewegen. Über die Kopplung zwischen Zapfen 36 und Gewindestange 49 wird (nur) eine Drehbewegung für eine Einstellung der Schnitttiefe übertragen. Der Schnitttiefeneinsteller 34 umfasst weiterhin eine Abrastung 50 für die Einstellung der Schnitttiefe. Die Abrastung 50 ist als Teil der Welle 37 ausgebildet. Die Abrastung 50 umfasst hier zwei gegenüberliegende Kugeln, die jeweils federgelagert sind, und die einer Raststellung in eine Aussparung eingreifen. Durch Drehen des Zapfens 36 kann die Schnitttiefeneinstellungswelle schrittweise, d.h. um die Distanz einer Raststellung, in ihrer Länge verändert werden. Dadurch kann die Schnitttiefe schrittweise, z.B. in Schritten von 0,1 mm, vergrößert oder verkleinert werden.

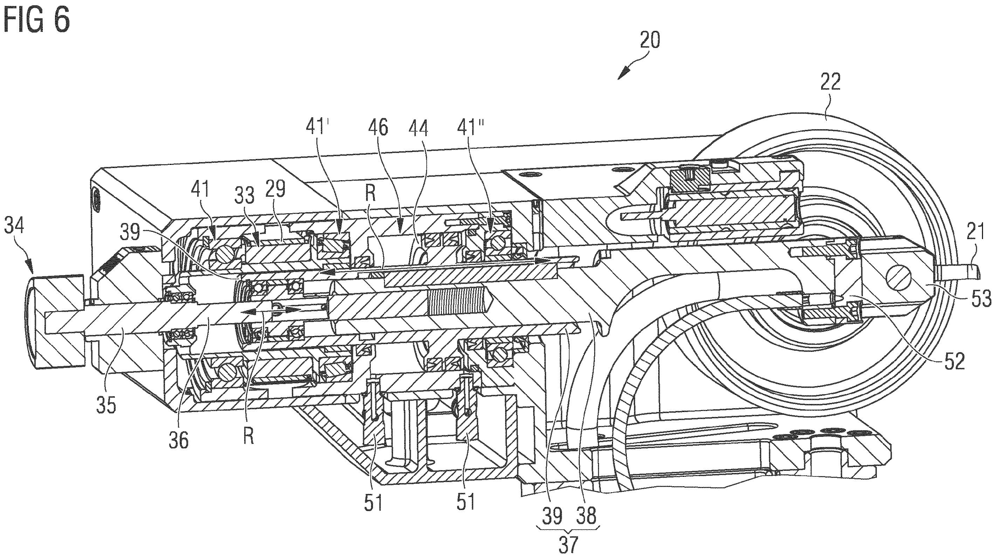

In Figur 6 ist ein Teil des Schneidkopfs 20 gezeigt, wobei in dieser Darstellung eine Abstandsrolle 22 und das Messer 21 sichtbar sind. Die Komponenten des Schneidkopfs 20, die eine lineare Bewegung und eine Drehbewegung der Welle 37 ermöglichen, wurden bereits anhand der Figuren 3 bis 5 beschrieben. In Figur 6 ist gut erkennbar, dass die Welle 37 zumindest im Bereich des Pneumatikzylinders 46 einen Zylinder bildet, der mittels des Kolbens 44 in unterschiedliche Richtungen R im Schneidkopf 20 bewegt werden kann. Durch diese Bewegung der Welle 37 wird das Messer 21 relativ zu den Abstandsrollen 22 bewegt. An der inneren Hohlwelle 38 befindet sich endseitig ein Messerblock 52, der z.B. einteilig mit der Hohlwelle 38 ausgebildet ist. Am Messerblock 52 ist vom Schneidkopf 20 wegweisend eine Messerklemme 53 montiert zum lösbaren Halten des Messer 21. In Figur 6 sind weiterhin Anschlüsse 51 zur Versorgung des Pneumatikzylinders 46 mit Druckluft gezeigt.

In Figur 7 ist ein Schneidkopf 20 gezeigt, z.B. der Schneidkopf 20 aus Figur 3 bis 6, sowie Teile einer Schneidvorrichtung 7. Der Schneidkopf 20 kann, je nach Situation, im Betrieb um die Schwenkachse SA in unterschiedliche Richtungen gedreht werden. Der Schneidkopf 20 kann insbesondere gegenüber einem unteren Teil 7' der Schneidvorrichtung 7, der im Betrieb an der Reifenschneidemaschine bewegbar angeordnet ist, geschwenkt werden. Der Schneidkopf 20 kann mittels einer nicht gezeigten Federanordnung in eine Neutralstellung zurückpendeln. Es ist möglich, das freie Schwenken des Schneidkopfs 20 um die Schwenkachse SA im Betrieb zu blockieren, wie anhand von Figur 8 beschrieben wird. In Figur 7 ist weiterhin gezeigt, dass der Schneidkopf 20 eine Kupplungsstelle in Form einer Zwischenklemme 54 umfasst, die dazu ausgebildet ist, um Versorgungsleitungen bzw. Kabel 55, die das Messer 21 mit elektrischer Energie versorgen, mit zugeordneten Leitungen bzw. Kabeln 55', die vom Schneidkopf 20 weg führen, zu verbinden. Das Kabel 55, das zum Messer 21 führt, ist hier strichliniert gezeigt, weil es im Normalfall verdeckt ist, genauso wie die Zwischenklemme 54. Die beiden Kabel 55, 55` haben endseitig Hülsen 56, die in der Zwischenklemme 54 lösbar fixiert sind.

In Figur 8 sind zwei schematische Detailansichten einer Schwenkarretierung 57 eines Schneidkopfs 20 gezeigt, z.B. der Schneidkopf 20 aus Figur 7. Die Schwenkarretierung 57 hat eine (Quer-)Stange 61, die in einem Schwenkzapfen 58 gelagert ist. Die (Quer-)Stange 61 liegt lose (im nicht arretierten Zustand) in zwei Langlöchern 62, die in einer Schwenkwelle 64 ausgebildet sind. Die Schwenkwelle 64 ist teilweise im Schwenkzapfen 58 angeordnet und ist parallel zur Schwenkachse SA. Die (Quer-)Stange 61 weist an beiden Enden Druckstücke 63 auf, über die sie im Schwenkzapfen 58 gelagert ist. Zur Arretierung kann die (Quer-)Stange 61 mittels eines Pneumatikzylinders 59, auch bezeichnet als Arretierzylinder, kraftschlüssig mit der Schwenkwelle 64 verklemmt werden, indem ein Kolben 60 des Pneumatikzylinders 59 die (Quer-)Stange 61 in Richtung R nach oben drückt und sie mit der (Schwenk-)Welle 64 verklemmt. Der Pneumatikzylinder 59 ist federrückgestellt. Die Druckstücke 63 ermöglichen im arretierten Zustand eine geringfügige Bewegung des Schneidkopfs 20 um die Schwenkachse SA.

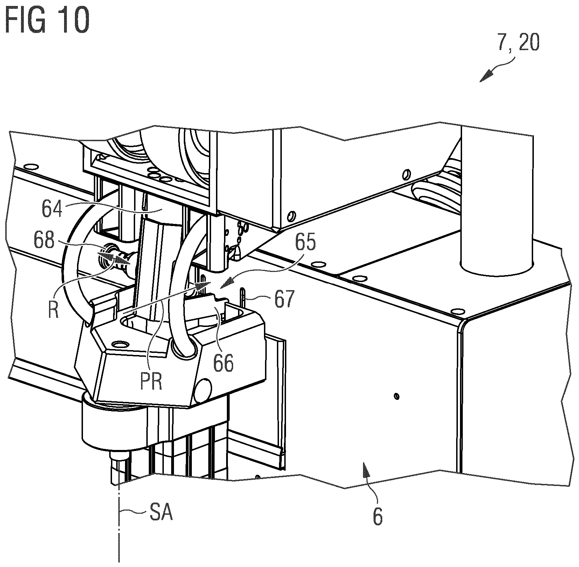

Figur 10 zeigt Teile eines Schneidkopfs 20 einer Schneidvorrichtung 7 mit einer Transportsicherung 65. Die Transportsicherung 65 umfasst ein Blech 66, das außen an der Schwenkwelle 64 der Schneidvorrichtung 7 einseitig und beweglich befestigt ist. Das Blech 66 hat zwei Vorsprünge, die jeweils in eine zugeordnete Aussparung 67 im Gehäuse der Reifenschneidemaschine, z.B. in der Traversenschiene 6, zum Verrasten eingreifen können. Das Blech 66 kann ausgehend von einer Betriebsposition (Figur 10), in der keine Verrastung erfolgt, mittels Ziehen eines (Sicherungs-)Bolzens 68 in Richtung R in Pfeilrichtung PR zum Gehäuse hin geklappt werden. Dadurch können die Vorsprünge in den Aussparungen verrastet werden. Beispielsweise kann durch Ziehen des Bolzens 68 und einer entsprechenden Schwingbewegung das Blech 66 eingeschnäbelt werden.

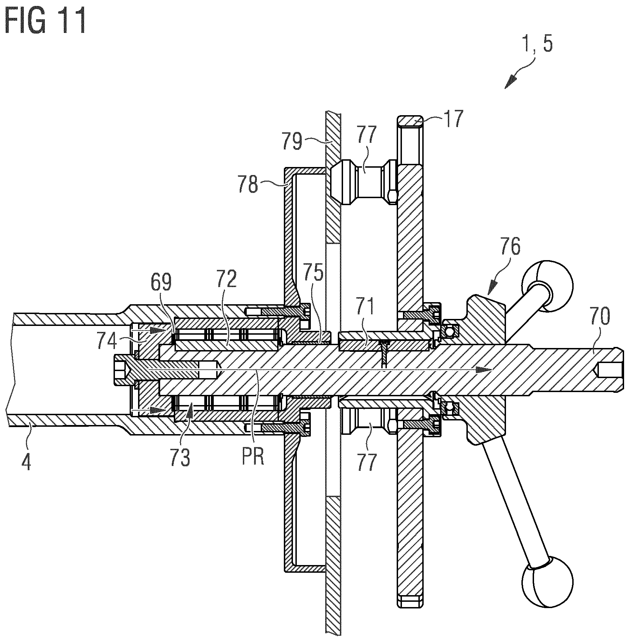

In Figur 11 ist schematisch ein Teil einer Reifenschneidemaschine 1 gezeigt, nämlich ein Teil einer Reifenaufnahme 5. Im linken Teil ist die Antriebswelle 4 gezeigt, die endseitig mit einer Trapezwelle 70 gekoppelt ist. Die Trapezwelle 70 ist mit dem hier linken Ende im Innern der Antriebswelle 4 angeordnet und ist mittels einer Passfeder 72 in Wirkkontakt mit einem Freilauflager 73. Im Innern der Antriebswelle 4 ist hier links eine Anschlagscheibe 74 angeordnet, wobei in einem schmalen Zwischenraum zwischen Anschlagscheibe 74 und Freilauflager 73 eine Federscheibe 69 platziert ist. Dadurch kann eine kraftschlüssige Verklemmung erreicht werden, die dazu dient, dass ein montierter Reifen durch geringe äußere Kräfte nicht verdreht werden kann. Das Freilauflager 73 verhindert ein Verdrehen (entgegen der Rotationsrichtung im Betrieb) des montierten Reifens während eines Schneidprozesses, wobei der Reifen entgegen der Rotationsrichtung frei gedreht werden kann.

Um den Reifen auf der Trapezwelle 70 zu montieren, kann zunächst eine Felge 79 mit Reifen über die Trapezwelle 70 in Richtung eines Anschlagtellers 78 geschoben werden. Anschließend kann ein Spannstern 17 so auf die Trapezwelle 70 geschoben werden, dass eine Passfeder 71 in eine Ausnehmung des Spannsterns 17 eingreift. Der Spannstern 17 kann eine Aufnahmehülse mit mehreren Passfedernuten haben. Dazu kann die Trapezwelle 70 frei gedreht werden entgegen der Rotationsrichtung des Reifens im Betrieb. Der Spannstern 17 wird so montiert, dass ein jeweiliger Zentrierzapfen 77 oder Zentrierdorn 77 des Spannsterns 17 in eine Bohrung in der Felge 79 eingreift. Durch Anziehen einer Reifenschnellspannmutter 76, z.B. einer Spindelmutter, wird die Trapezwelle 70 etwa 1mm in Pfeilrichtung PR nach rechts bewegt. Die Rechtsbewegung der Trapezwelle 70 wird an einem Lageraußenring des Freilauflagers 73 gestoppt, wobei eine kraftschlüssige Blockade zwischen der Anschlagscheibe 74 und dem Lageraußenring entsteht. In Folge des Anziehens der Spindelmutter wird die Felge 79 kraftschlüssig an den Anschlagteller 78 gedrückt. Zwischen der Trapezwelle 70 und dem Anschlagteller 78 ist eine Gleitlagerbuchse 75 angeordnet.

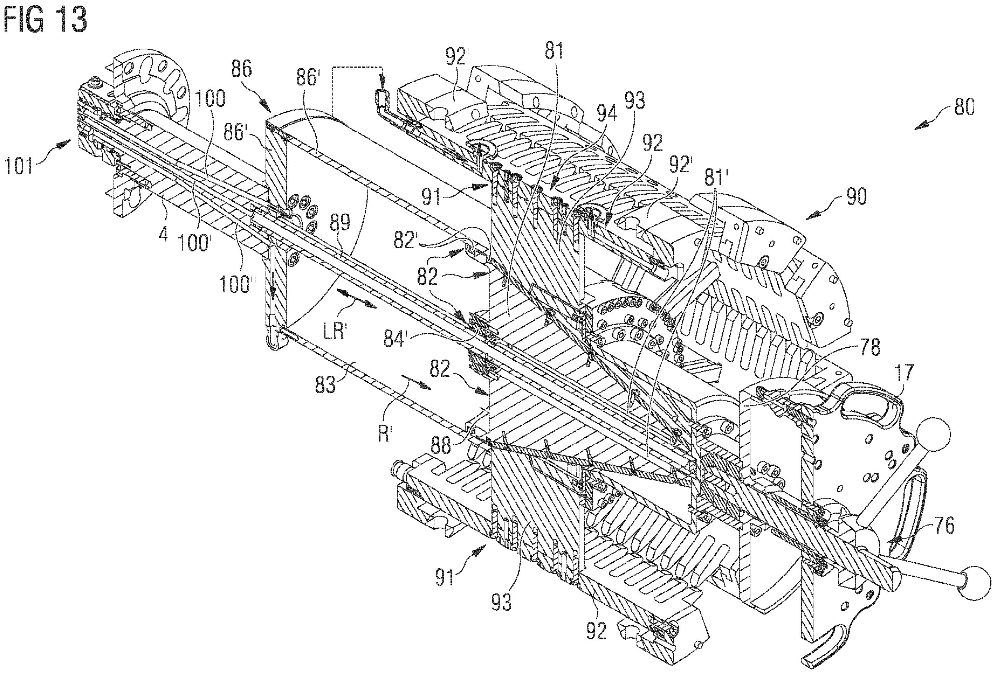

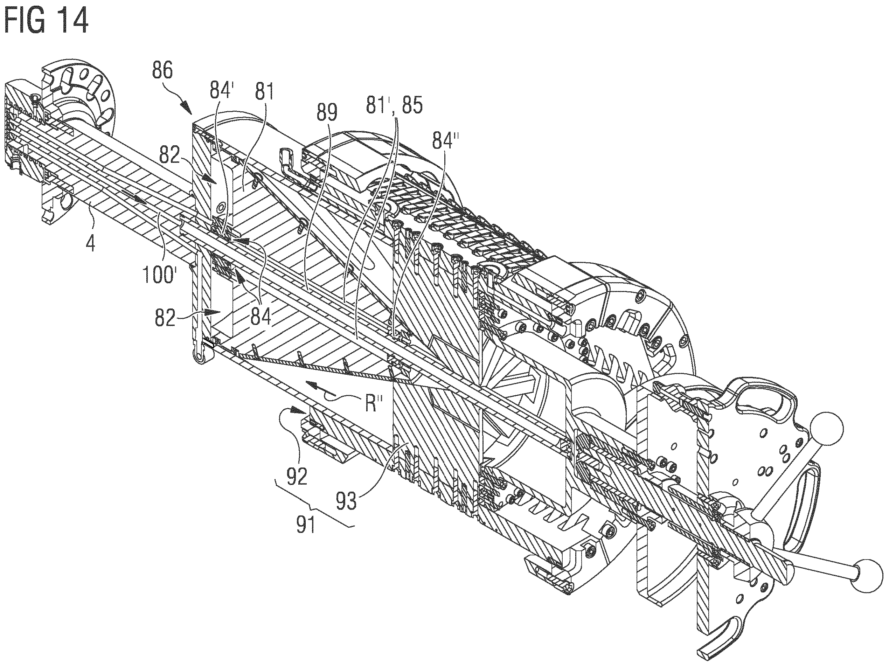

In Figur 13 und 14 ist eine perspektivische Schnittdarstellung eines Spannsystems 80 gemäß der Erfindung gezeigt. Da es sich in den beiden Figuren um dasselbe Spannsystem 80 in unterschiedlichen Betriebszuständen handelt, werden Figuren 13 und 14 gemeinsam beschrieben. Das Spannsystem 80 ist jeweils schematisch dargestellt. Das Spannsystem 80 hat einen Spannkonus 81, der in seiner Längsrichtung LR' beweglich auf einer Hohlwelle 89 gelagert ist und pneumatisch bewegt werden kann. Der Spannkonus 81 hat hier die Form eines hohlen Kegelstumpfs. Der Spannkonus 81 hat einen ersten Kolbenabschnitt 82, der zumindest teilweise durch eine Grundfläche 88 des Spannkonus 81 gebildet ist. Der erste Kolbenabschnitt 82 wird zusätzlich durch Anbauten im Bereich des Konusbodens gebildet, die z.B. Dichtelemente 82' bereitstellen, und durch ein kreisringförmiges Element 84', das der Hohlwelle 89 außen abgedichtet und gleitend aufliegt. Der erste Kolbenabschnitt 82 bildet zusammen mit einem umgebenden Gehäuse 86' eines Pneumatikantriebs 86 eine erste Druckkammer 83 des Pneumatikantriebs 86.

Die erste Druckkammer 83 kann mittels einer Leitung 100 mit Druckluft (durch Pfeile symbolisiert) beaufschlagt werden, wobei die Leitung 100 innerhalb einer Antriebswelle 4 geführt ist. Die Antriebswelle 4 ist, anders als hier gezeigt, mit Antriebsmitteln verbunden, um die Antriebswelle 4 und damit das Spannsystem 80 in Rotation zu versetzten. Die Leitung 100 in der Antriebswelle 4 ist, wie auch die übrigen Leitungen 100', 100", mittels einer Drehdurchführung 101 mit einer nicht gezeigten Druckluftversorgung verbunden. Durch Befüllen der ersten Druckkammer 83 mit Druckluft wird der Spannkonus 81 linear in einer ersten Richtung R' nach hier rechts bewegt und dadurch ausgefahren. In Folge der Bewegung des Spannkonus 81 relativ zur Hohlwelle 89 gleiten die Spannkeile 93 den Spannkonus 81 hinauf, so dass die Spannkämme 92 weiter von der Hohlwelle 89 beabstandet werden. Mit anderen Worten werden die mehreren Trommelsegmente 91 gleichzeitig und gleichermaßen ausgefahren. Dadurch kann ein Reifen (nicht gezeigt), der auf einer Auflagefläche 94 einer Trommel 90 aufgenommen ist, aufgespannt werden. Der aufgespannte Reifen kann mittels einer Leitung 100", die in Figur 13 zum Teil nur symbolisiert ist, mit Druckluft gefüllt werden. Die Spannkämme 92 haben hier beidseitig austauschbare Bordscheiben 92', welche die Auflagefläche 94 seitlich begrenzen.

In Figur 13 ist gezeigt, dass die Hohlwelle 89 zumindest teilweise in einem Hohlraum 81' innerhalb des Spannkonus 81 angeordnet ist. In diesem Hohlraum 81' ist eine zweite Druckkammer 85 des Pneumatikantriebs 86 gebildet, wie anhand von Figur 14 beschrieben wird. Die zweite Druckkammer 85 ist durch einen zweiten Kolbenabschnitt 84 des Spannkonus 81 und das umgebenden Gehäuse des Spannkonus 81, das den Hohlraum 81' bildet, sowie die im Spannkonus 81 befindliche Hohlwelle 89 gebildet. Die zweite Druckkammer 85 ist gegenüberliegend, bezogen auf die Längsrichtung LR, von einem Dichtelement 84" begrenzt, das unbeweglich gegenüber der Hohlwelle 89 ist. Es ist erkennbar, dass die zweite Druckkammer 85 nur innerhalb des Spannkonus 81 ausgebildet ist. Der zweite Kolbenabschnitt 84 ist hier durch ein kreisringförmiges Element 84` gebildet, das den Bereich zwischen Spannkonus 81 und Hohlwelle 89 ausfüllt. Das kreisringförmiges Element 84` ist gleitend und abgedichtet auf der Hohlwelle 89 gelagert und ist hier mit dem Spannkonus 81 verschraubt. Das kreisringförmige Element 84` bildet mit der einen Seite den zweiten Kolbenabschnitt 84, wobei die gegenüberliegende Seite Teil des ersten Kolbenabschnitts 82 ist.

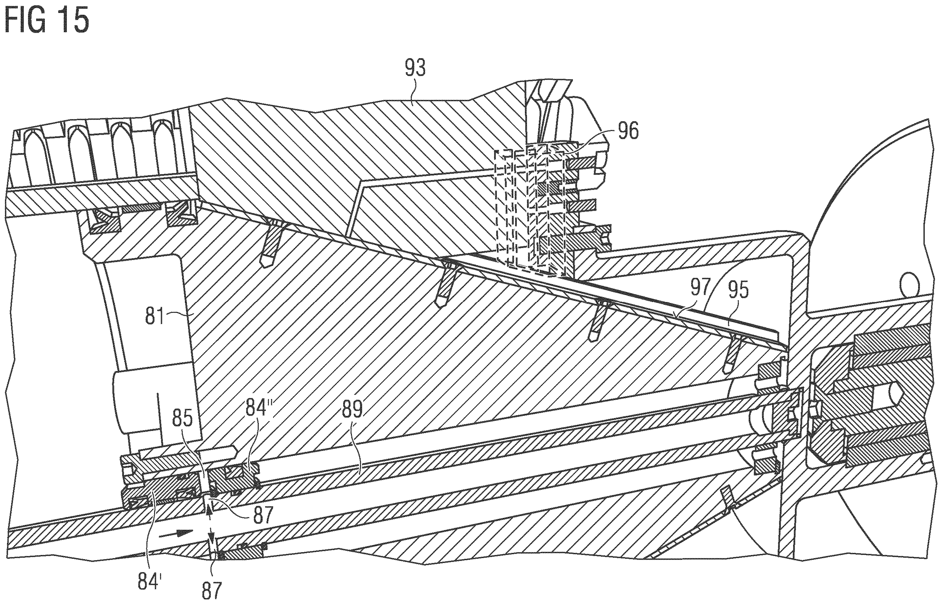

Der zweite Kolbenabschnitt 84 kann mit Druckluft beaufschlagt werden, die über die Hohlwelle 89 und eine Leitung 100' in die zweite Druckkammer 85 einströmt. Die Druckluft kann mittels Öffnungen 87 in der Hohlwelle 89 (Figur 15) in die zweite Druckkammer 85 eintreten. Dadurch wird der Spannkonus 81 in einer zweiten Richtung R" in Figur 14 nach links bewegt, d.h. der Spannkonus 81 wird eingefahren. Das hat zur Folge, dass die Spannkeile 93 den Spannkonus 81 wieder hinabgleiten und die Trommelsegmente 91 eingefahren werden. Dadurch kann ein Reifen von der Trommel 90 gelöst werden. Durch das Einfahren kann der Spannkonus 81 in eine Ruheposition bewegt werden (Figur 14).

In Figur 15 sind Führungsmittel für die Spannkeile 93 während einer Bewegung des Spannkonus 81 gezeigt. Der Spannkonus 81 hat hier Führungsmittel 95, um den Spannkeil 93 längs des Spannkonus 81 zu führen. In diesem Beispiel ist zu beiden Seiten des Spannkeils 93 ein flaches Führungselement, z.B. ein Flacheisen, angeordnet (hier nur eins sichtbar), so dass der Spannkeil 93 auf einer Gleitfläche 97 des Spannkonus 81 geführt wird. Zusätzlich sind Führungsmittel 96 für eine Stabilisierung des Spannkeils 93 in radialer Richtung vorgesehen. In Figur 15 ist angedeutet, dass der Spannkeil 93 bei einer Bewegung in radialer Richtung, d.h. quer zur Längserstreckung der Hohlwelle 89, mittels der Führungsmittel 96 geführt ist. Das jeweilige Führungsmittel 96 kann eine Schwalbenschwanzführung umfassen. Entsprechende Führungsmittel 95, 96 können für alle Spannkeile 93 des Spannsystems vorgesehen sein.

In Figur 13 ist gezeigt, dass das Spannsystem 80 Befestigungsmittel aufweist, um auch eine Felge mit Reifen an der Antriebswelle 4 des Spannsystems 80 drehbar anzuordnen. In diesem Beispiel sind als Befestigungsmittel für eine Felge ein Anschlagteller 78, ein Spannstern 17 und eine Reifenschnellspannmutter 76, z.B. eine Spindelmutter, vorgesehen. Diese Elemente können prinzipiell so ausgebildet sein, wie anhand von Figur 11 beschrieben wurde, allerdings in Kombination mit einem Spannsystem 80. Die Befestigungsmittel 17, 76, 78 für eine Felge sind vorzugsweise endseitig an der Antriebwelle 4 angeordnet, wie in Figur 13 gezeigt. Vorteilhafterweise ist die Trommel 90 so konstruiert, bzw. kann so weit verkleinert werden durch den Pneumatikantrieb 86, dass die Trommel 90 in eine Felge eintauchen kann, um die Felge an der Antriebswelle 4 zu montieren.

Es wird abschließend noch einmal darauf hingewiesen, dass es sich bei den vorhergehend detailliert beschriebenen Reifenschneidemaschinen und Schneidköpfen sowie Spannsystemen lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können.

### Bezugszeichenliste

1 Reifenschneidemaschine
2 Bodenplatte
3 Gehäuse / Aufbau
4 Antriebswelle
5 Reifenaufnahme
6 Traversenschiene
7 Schneidvorrichtung
7' unterer Teil Schneidvorrichtung
8 Gleitführung
9 Zahnrad
10 Bedienfeld
11 Bedieneinheit
11' Bedienelement / Touch-Display / Joystick
11 " Gashebel-Zustimmtaster / Grifffläche
12 Reifen
13 Staplerschuhe
14 Fuß
15 Rampe
16 Zuführschlitten
17 Spannstern
18 Hubmittel
19 Reifenschulter
20 Schneidkopf
21 Messer
22 Abstützvorrichtung /Abstandsrollen
23 Andruckmittel / Zugmittel
24 Steuervorrichtung
25 Fußtaster
26 Sensor
27 Planetengetriebe
28 Elektromotor
29 Zahnriemen
30 Bewegungsmechanismus
31 Zahnriemenrad
32 Vorsprung
33 Zahnriemenrad
34 Schnitttiefeneinsteller
35 Trapezhalter
36 Zapfen
37 Welle
38 innere Welle
39 äußere Welle
40 Hohlraum
41, 41', 41" Lager
42 Passfeder
43 Aussparung
44 Kolben
45 Dichtung
46 Pneumatikzylinder
47 Gleitring
48 Kugellager / Kegelrollenlager
49 Gewindestange
50 Abrastung
51 Anschlüsse
52 Messerblock
53 Messerklemme
54 Zwischenklemme
55, 55' Kabel
56 Hülse
57 Schwenkarretierung
58 Schwenkzapfen
59 Pneumatikzylinder
60 Kolben
61 Stange
62 Langloch
63 Druckstück
64 Schwenkwelle
65 Transportsicherung
66 Blech
67 Aussparung
68 Bolzen
69 Federscheibe
70 Trapezwelle
71, 72 Passfeder
73 Freilauflager
74 Anschlagscheibe
75 Gleitlagerbuchse
76 Reifenschnellspannmutter
77 Zentrierzapfen / Zentrierdorn
78 Anschlagteller
79 Felge
80 Spannsystem
81 Spannkonus
81' Hohlraum
82 erster Kolbenabschnitt
82' Dichtelement
83 erste Druckkammer
84 zweiter Kolbenabschnitt
84' kreisringförmiges Element
84" Dichtelement
85 zweite Druckkammer
86 Pneumatikantrieb
86` Gehäuse
87 Öffnung
88 Grundfläche
89 Hohlwelle
90 Trommel
91 Trommelsegment
92 Spannkamm
92' Bordscheibe
93 Spannkeil
94 Auflagefläche
95 Führungsmittel
96 Führungsmittel
97 Gleitfläche
100, 100', 100" Leitung
101 Drehdurchführung
A Rotationsachse / Antriebsachse
AS Schneidkopfachse
H1 Querrillenhöhe
H2 Abstand Querrillen
LR, LR` Längsrichtung
P Profil
PR Pfeilrichtung
R₁-R₅ Rille / Längsrille
R₆ Rille / Blocköffnung
R₇ Rille / Querrille
R, R', R" Richtung
SA Schwenkachse
S₁, S₂ Schwenkstellung
S1-S10 Verfahrensschritt
T Lauffläche
T_{A} Laufflächenoberfläche
x₁, x₂ Position
X Querrillenbreite

## Patentansprüche

1. Reifenschneidemaschine (1) zum Schneiden eines Profils (P) mit zumindest einer Rille (R₁, R₂, R₃, R₄, R₅, R₆, R₇), insbesondere einer Querrille (R₆, R₇), in einer Lauffläche (T) eines Reifens (12), mit
- einer Reifenaufnahme (5) zum Halten eines Reifens (12) auf einer Antriebsachse (A), welche koaxial zu einer Rotationsachse (A) des Reifens (12) verläuft,
- Antriebsmitteln, um einen von der Reifenaufnahme (5) aufgenommenen Reifen (12) während eines Schneidvorgangs um die Rotationsachse (A) zu rotieren,
- einer Steuervorrichtung (24) zur Steuerung des Schneidvorgangs, und
- einer Schneidvorrichtung (7), die einen Schneidkopf (20) mit einem Messer (21) und eine Abstützvorrichtung (22) aufweist, um den Schneidkopf (20) während des Schneidvorgangs an der Lauffläche (T) abzustützen zum Schneiden des Profils (P) durch das Messer (21),
und wobei das Messer (21) relativ zur Abstützvorrichtung (22) in einem automatisierten Prozess linear bewegbar ist.

2. Reifenschneidemaschine nach Anspruch 1, wobei das Messer (21) entlang einer Schneidkopfachse (AS) des Schneidkopfs (20) in entgegengesetzten Richtungen bewegbar ist und wobei das Messer (21) um die Schneidkopfachse (AS) schwenkbar im Schneidkopf (20) gelagert ist, und/oder wobei das Messer (21) ausgehend von einer Neutralstellung in entgegengesetzte Richtungen um einen Winkel von zumindest 45° und/oder um einen Winkel von zumindest 1° bis höchstens 90° schwenkbar ist in einem automatisierten Prozess.

3. Reifenschneidemaschine nach einem der vorstehenden Ansprüche, wobei der Schneidkopf (20) einen Bewegungsmechanismus (30) mit einem Zylinder (46) aufweist, um das Messer (21) mittels eines Kolbens (44) des Zylinders (46) linear zu bewegen und/oder um die Schneidkopfachse (AS) zu rotieren.

4. Reifenschneidemaschine nach Anspruch 3, wobei der Kolben (44) mit einer Welle (37) gekoppelt ist, wobei die Welle (37) so ausgebildet ist, dass in einer Endlage des Kolbens (44) eine Kolbenkraft in ein erstes Lager (41) des Bewegungsmechanismus (30) geleitet wird,
oder wobei der Kolben (44) mit einer Welle (37) gekoppelt ist, wobei die Welle (37) so ausgebildet ist, dass in einer Endlage des Kolbens (44) eine Kolbenkraft in ein erstes Lager (41) des Bewegungsmechanismus (30) geleitet wird, wobei das erste Lager (41) von der Welle (37) beabstandet ist, und/oder wobei das erste Lager (41) Teil eines Bewegungsmechanismus (30) ist, der dazu ausgebildet ist, um die Welle (37) um die Schneidkopfachse (AS) zu rotieren.

5. Reifenschneidemaschine nach einem der Ansprüche 3 oder 4, wobei der Bewegungsmechanismus (30) eine oder mehrere Passfedern (42) aufweist, die eine Endlage des Kolbens (44) definieren, und wobei mittels der Passfedern (42) eine Kolbenkraft von der Welle (37) auf ein Lager (41, 41') des Schneidkopfs (20) übertragen wird,
oder wobei der Bewegungsmechanismus (30) eine oder mehrere Passfedern (42) aufweist, die eine Endlage des Kolbens (44) definieren, und wobei mittels der Passfedern (42) eine Kolbenkraft von der Welle (37) auf ein Lager (41, 41') des Schneidkopfs (20) übertragen wird, wobei die Passfedern (42) dazu ausgebildet sind, um eine Drehbewegung eines Antriebs (28) des Bewegungsmechanismus (30) an die Welle (37) zu übertragen für eine Rotation der Welle (37).

6. Reifenschneidemaschine nach einem der Ansprüche 4 oder 5, wobei die Welle (37) mittels zumindest eines zweiten Lagers (41', 41"), bevorzugt zwei weitere Lager (41', 41") beidseits des Kolbens (44), im Schneidkopf (20) bewegbar gelagert ist, wobei das zweite Lager (41', 41") einen Gleitring (47), welcher der Welle (37) außen aufliegt, und ein Kugellager (48) aufweist, das dem Gleitring (47) außen aufliegt, wobei vorzugsweise der Gleitring (47) verpresst ist, und/oder wobei der Schneidkopf (20) einen Schnitttiefeneinsteller (34) aufweist, um eine Längserstreckung der Welle (37) entlang der Schneidkopfachse (AS) einzustellen, wobei ein in die Welle (37) hineinreichender Teil des Schnitttiefeneinstellers (34) beweglich gegenüber der Welle (37) gelagert ist.

7. Reifenschneidemaschine (1), insbesondere nach einem der vorstehenden Ansprüche, zum Schneiden eines Profils (P) mit zumindest einer Rille (R₁, R₂, R₃, R₄, R₅, R₆, R₇), insbesondere einer Querrille (R₆, R₇), in einer Lauffläche (T) eines Reifens (12), mit
- einer Reifenaufnahme (5) zum Halten eines Reifens (12) auf einer Antriebsachse (A), welche koaxial zu einer Rotationsachse (A) des Reifens (12) verläuft,
- Antriebsmitteln, um einen von der Reifenaufnahme (5) aufgenommenen Reifen (12) während eines Schneidvorgangs um die Rotationsachse (A) zu rotieren,
- einer Steuervorrichtung (24) zur Steuerung des Schneidvorgangs, und
- einer Schneidvorrichtung (7), die einen Schneidkopf (20) mit einem Messer (21) und eine Abstützvorrichtung (22) aufweist, um den Schneidkopf (20) während des Schneidvorgangs an der Lauffläche (T) abzustützen zum Schneiden des Profils (P) durch das Messer (21),
wobei der Schneidkopf (20) der Reifenschneidemaschine (1) eine Schwenkarretierung (57) aufweist, um eine bestimmte Position des Schneidkopfs (20) in Bezug auf die Lauffläche (T) eines Reifens (12) einzustellen, und/oder um einen Schwenkwinkel des Schneidkopfs (20) um eine Schwenkachse (SA) zu begrenzen, und/oder um den Schneidkopf (20) in Bezug auf eine Schwenkachse (SA) zu fixieren, wobei vorzugsweise ein Schwenkwinkel ausgehend von einer Neutralstellung höchstens 20° oder weniger ist, und wobei vorzugsweise der Schneidkopf (20) in Bezug auf die Schwenkachse (SA) verklemmbar ist.

8. Reifenschneidemaschine nach einem der vorstehenden Ansprüche, wobei der Schneidkopf (20) eine Kupplungsstelle (54) umfasst, die dazu ausgebildet ist, um eine oder mehrere Versorgungsleitungen (55) für das Messer (21) mit zugeordneten Leitungen (55`) zu verbinden, die vom Schneidkopf (20) weg führen.

9. Reifenschneidemaschine (1), insbesondere nach einem der vorstehenden Ansprüche, zum Schneiden eines Profils (P) mit zumindest einer Rille (R₁, R₂, R₃, R₄, R₅, R₆, R₇), insbesondere einer Querrille (R₆, R₇), in einer Lauffläche (T) eines Reifens (12), mit
- einer Reifenaufnahme (5) zum Halten eines Reifens (12) auf einer Antriebsachse (A), welche koaxial zu einer Rotationsachse (A) des Reifens (12) verläuft,
- Antriebsmitteln, um einen von der Reifenaufnahme (5) aufgenommenen Reifen (12) während eines Schneidvorgangs um die Rotationsachse (A) zu rotieren,
- einer Steuervorrichtung (24) zur Steuerung des Schneidvorgangs, und
- einer Schneidvorrichtung (7), die einen Schneidkopf (20) mit einem Messer (21) und eine Abstützvorrichtung (22) aufweist, um den Schneidkopf (20) während des Schneidvorgangs an der Lauffläche (T) abzustützen zum Schneiden des Profils (P) durch das Messer (21),
wobei die Reifenschneidemaschine (1) zumindest eines der folgenden Elemente aufweist:
- eine Transportsicherung (65), die dazu ausgebildet ist, um den Schneidkopf (20) in Bezug auf eine Schwenkachse (SA) zu fixieren,
- eine Bedieneinheit (11) mit Griffflächen (11") für jeweils eine Hand, die dazu ausgebildet ist, um den Betrieb der Reifenschneidemaschine (1) mittels einer Drehbewegung der Griffflächen (11") zu steuern,
- einen Profiltiefenmesser der so ausgebildet ist, dass eine Auflagefläche des Profiltiefenmessers gewölbt ist, wobei die Wölbung vorzugsweise einer Wölbung der Lauffläche (T) des Reifens (12) entspricht, wobei vorzugsweise der Profiltiefenmesser so ausgebildet ist, dass eine Breite der Auflagefläche im Wesentlichen gleich ist zu einer Auflagefläche der Abstützvorrichtung (22) auf der Lauffläche (T) des Reifens (12), und/oder so, dass zwei Bereiche der Auflagefläche des Profiltiefenmessers einen Winkel zueinander bilden, der im Wesentlichen gleich ist zu einem Winkel von zwei Abstandsrollen (22) der Abstützvorrichtung (22) zueinander und/oder in Bezug auf das Messer (21),
- ein Freilauflager (73) der Antriebsachse (A) der Reifenaufnahme (5).

10. Spannsystem (80) für einen Reifen (12), insbesondere für eine Reifenschneidemaschine (1) nach einem der vorstehenden Ansprüche, mit einer Trommel (90) mit mehreren Trommelsegmenten (91) zur Aufnahme des Reifens (12) und einem Spannkonus (81), auf dem die Trommelsegmente (91) bewegbar gelagert sind, wobei das Spannsystem (80) einen Pneumatikantrieb (86) umfasst, um den Spannkonus (81) in seiner Längsrichtung (LR') zu bewegen, wobei der Spannkonus (81) einen ersten Kolbenabschnitt (82) für eine Bewegung des Spannkonus (81) in eine erste Richtung (R') und einen zweiten Kolbenabschnitt (84) für eine Bewegung des Spannkonus (81) in eine entgegengesetzte, zweite Richtung (R") aufweist.

11. Spannsystem nach Anspruch 10, wobei der erste Kolbenabschnitt (82) durch eine Grundfläche (88) des Spannkonus (81) gebildet ist,
und/oder wobei der zweite Kolbenabschnitt (84) durch den ersten Kolbenabschnitt (82) gebildet ist,
und/oder wobei der erste Kolbenabschnitt (82) und der zweite Kolbenabschnitt (84) bewegbar auf einer Hohlwelle (89) des Spannsystems (80), die den Spannkonus (81) führt, gelagert sind.

12. Spannsystem nach Anspruch 10 oder 11 mit einer Hohlwelle (89), die den Spannkonus (81) führt, wobei die Hohlwelle (89) innerhalb des Spannkonus (81) von einem Hohlraum (81') umgeben ist, wobei in dem Hohlraum (81') eine Druckkammer (85) des Pneumatikantriebs (86) gebildet ist, die durch den zweiten Kolbenabschnitt (84) begrenzt ist, wobei vorzugsweise die Druckkammer (85) mittels der Hohlwelle (89) mit Druckluft beaufschlagt werden kann.

13. Spannsystem nach einem der Ansprüche 10 bis 12, wobei die Trommel (90) größenverstellbar ausgebildet, so dass Reifen (12) mit unterschiedlichem Durchmesser aufgespannt werden können,
und/oder wobei die Trommel (90) größenverstellbar ausgebildet, vorzugsweise mittels wechselbarer Bordscheiben (92`), so dass Reifen (12) mit unterschiedlicher Breite aufgespannt werden können.

14. Spannsystem nach einem der Ansprüche 10 bis 13, wobei das Spannsystem (80) dazu ausgebildet ist, um mittels der Trommel (90) einen felgenlosen Reifen (12) an einer Antriebswelle (4) des Spannsystems (80) anzuordnen und Befestigungsmittel (17, 76, 78) für eine Felge (79) hat.

15. Verfahren zum Schneiden eines Profils (P) mit zumindest einer Rille (R₁, R₂, R₃, R₄, R₅, R₆, R₇), insbesondere einer Querrille (R₆, R₇), in einer Lauffläche (T) eines Reifens (12) mittels einer Reifenschneidemaschine (1), insbesondere nach einem der vorstehenden Ansprüche, umfassend folgende Schritte:
i) Anordnen eines Reifens (12) in einer Reifenaufnahme (5) der Reifenschneidemaschine (1) zum Halten des Reifens (12) auf einer Antriebsachse (A), welche koaxial zu einer Rotationsachse (A) des Reifens (12) verläuft,
ii) optional Arretieren des Reifens (12) an einer Antriebswelle (4) der Reifenaufnahme (5) mittels einer Reifenfeststellmutter (76),
iii) optional Positionieren einer Schneidvorrichtung (7) der Reifenschneidemaschine (1), insbesondere eines Messers (21) eines Schneidkopfs (20) der Schneidvorrichtung (7), in Bezug auf einen Startpunkt eines Schneidvorgangs, insbesondere passend zu einer ersten ausgewählten Rille (R₁, R₂, R₃, R₄, R₅, R₆, R₇) des Reifens (12),
iv) Antreiben des in der Reifenaufnahme (5) aufgenommenen Reifens (12) um seine Rotationsachse (A) mithilfe von Antriebsmitteln der Reifenaufnahme (5),
wobei eine Steuervorrichtung (24) der Reifenschneidemaschine (1) diese derart steuert, dass das Profil (P) mittels eines Messers (21) eines Schneidkopfs (20) einer Schneidvorrichtung (7) der Reifenschneidemaschine (1) geschnitten wird, wobei der Schneidkopf (20) mittels einer Abstützvorrichtung (22) an der Lauffläche (T) des Reifens (12) abgestützt wird,
wobei in dem Verfahren zumindest einmalig das Messer (21) relativ zur Abstützvorrichtung (22) in einem automatisierten Prozess linear bewegt wird, wobei vorzugsweise eine oder mehrere Querrillen (R₆, R₇) in die Lauffläche (T) des Reifens (12) so geschnitten werden, dass sie quer zu einer Längsrichtung (LR) der Lauffläche (T) des Reifens (12) und/oder parallel zur Rotationsachse (A) des Reifens (12) sind,
und/oder wobei eine oder mehrere Querrillen (R₆, R₇) an einem Rand (19) der Lauffläche (T) des Reifens (12) in die Lauffläche (T) geschnitten werden.
